# EUROPÄISCHE PATENTSCHRIFT

(11) **EP 3 600 993 B1**
(45) Veröffentlichungstag und Bekanntmachung des Hinweises auf die Patenterteilung: **01.11.2023**
(21) Anmeldenummer: 18714991.9
(22) Anmeldetag: 19.03.2018
(51) Int. Cl.: B60T 13/66, B60T 13/68, B60T 17/22

(54) **ELEKTRONISCH STEUERBARES BREMSSYSTEM SOWIE VERFAHREN ZUM STEUERN DES ELEKTRONISCH STEUERBAREN BREMSSYSTEMS**
ELECTRONICALLY CONTROLLABLE BRAKE SYSTEM AND METHOD FOR CONTROLLING SAID ELECTRONICALLY CONTROLLABLE BRAKE SYSTEM
SYSTÈME DE FREINAGE POUVANT ÊTRE COMMANDÉ DE MANIÈRE ÉLECTRONIQUE AINSI QUE PROCÉDÉ SERVANT À COMMANDER LE SYSTÈME DE FREINAGE POUVANT ÊTRE COMMANDÉ DE MANIÈRE ÉLECTRONIQUE

(30) Priorität: 21.03.2017 DE 102017002719
(43) Veröffentlichungstag der Anmeldung: 05.02.2020
(73) Patentinhaber: ZF CV Systems Europe BV, 1170 Brussels (BE)
(72) Erfinder: VAN THIEL, Julian, 30938 Gross Burhwedel (DE)
(74) Vertreter: Rabe, Dirk-Heinrich
(86) Internationale Anmeldenummer: PCT/EP2018/056855
(87) Internationale Veröffentlichungsnummer: WO 2018/172268

(56) Entgegenhaltungen:
- EP-A1- 1 122 142
- EP-A1- 2 942 249
- EP-A2- 0 394 065
- WO-A-2004/098967
- WO-A2-2004/098967
- WO-A2-2009/152982
- DE-A1-102008 003 379
- DE-A1-102010 021 909
- DE-A1-102014 107 399
- DE-A1-102015 011 296
- DE-B3-102008 009 043

## Beschreibung

Die Erfindung betrifft ein elektronisch steuerbares Bremssystem sowie ein Verfahren zum Steuern des elektronisch steuerbaren Bremssystems.

Ein Bremssystem in einem Fahrzeug, vorzugsweise Nutzfahrzeug, kann mit zwei oder mehreren Betriebsbremskreisen, in denen ein an Betriebsbremsen ausgesteuerter Betriebsbrems-Bremsdruck eingestellt wird, sowie ein Parkbremskreis, in dem ein an Federspeicherbremsen ausgesteuerter Parkbrems-Bremsdruck eingestellt wird, vorgesehen sein. Die Aussteuerung des Betriebsbrems-Bremsdruckes an die Betriebsbremsen erfolgt beispielsweise über einen Druckmodulator, der gemäß einer Betriebsbrems-Bremsvorgabe in Form eines pneumatischen Betriebsbrems-Steuerdruckes oder eines elektrischen Betriebsbrems-Steuersignals einen Betriebsbrems-Bremsdruck an die jeweiligen Betriebsbremsen ausgibt.

Im normalen Betrieb erfolgt die Vorgabe an den Druckmodulator elektrisch über das Betriebsbrems-Steuersignal, wobei das Betriebsbrems-Steuersignal von einem Betriebsbrems-Steuermodul in Abhängigkeit einer manuell vorgegebenen Betriebsbrems-Bremsvorgabe und/oder in Abhängigkeit einer von einem Assistenzsystem automatisiert angeforderten Assistenz-Bremsvorgabe ermittelt und ausgegeben wird. Im Redundanzfall, z. B. bei einem elektrischen Ausfall des Betriebsbrems-Steuermoduls, erfolgt die Vorgabe an den Druckmodulator über den Betriebsbrems-Steuerdruck, der dem Druckmodulator über einen pneumatischen Redundanzanschluss vorgegeben wird und der beispielsweise von einer als elektropneumatisches Betriebsbremsventil ausgeführten Betriebsbrems-Betätigungsvorrichtung mit einem Bremspedal in Abhängigkeit der Betriebsbrems-Bremsvorgabe ausgegeben wird.

Der Parkbremskreis dient vorrangig dazu, das Fahrzeug in einer Parksituation abzustellen oder eine Hilfsbremsung oder Notbremsung während der Fahrt durchzuführen, indem gesteuert von einem Parkbrems-Steuermodul ein Parkbrems-Bremsdruck ausgesteuert wird, in Abhängigkeit dessen die Federspeicherbremsen zugespannt werden, wobei zum Zuspannen der Parkbrems-Bremsdruck reduziert wird. Beispielhaft ist ein derartiges Parkbrems-Steuermodul bzw. Feststellbremsmodul in DE 10 2015 008 377 A1 beschrieben. Herkömmlicherweise arbeiten der Parkbremskreis und die Betriebsbremskreise getrennt voneinander. In bestimmten Anwendungen ist es möglich, den oben geschilderten Redundanzmechanismus der Betriebsbremse durch die alternative Ansteuerung des Feststellbremskreises zu ersetzen! Dazu muss die elektrische Spannungsversorgung der Parkbremse üblicherweise unabhängig von der Spannungsversorgung der Betriebsbremse erfolgen.

Bei einem Ausfall der elektrischen Ansteuerung der Betriebsbremskreise über das Betriebsbrems-Steuermodul kann wie beschrieben eine pneumatische durch den Fahrer gesteuerte erste Rückfallebene ausgebildet werden. Steht der Fahrer allerdings nicht als Rückfallebene zur Verfügung, da er z.B. unaufmerksam oder im Falle von höher automatisierten Fahrmanövern nicht am Platz ist, kann eine zweite Rückfallebene ausgebildet werden, die automatisiert und elektronisch gesteuert eingreifen kann, wobei dazu der vorhandene Parkbremskreis verwendet wird. Die automatisierte Bremsanforderung wird nach Erkennen des elektrischen Ausfalls in einem der Betriebsbremskreise dem Parkbrems-Steuermodul zugeführt, das durch eine Vorgabe des Parkbrems-Bremsdruckes entsprechend die Federspeicherbremsen betätigen kann, um den elektrischen Ausfall der Betriebsbremsen zu kompensieren. Alternativ kann die automatisierte Bremsanforderung dem Parkbrems-Steuermodul permanent zugeführt werden und bei Erkennen eines Ausfalls in mindestens einem der Betriebsbremskreise durch das Parkbrems-Steuermodul, dieses durch eine Vorgabe des Parkbrems-Bremsdruckes entsprechend die Federspeicherbremsen betätigen. In dem Fall ist jedoch unter Umständen lediglich eine Fahrzeugachse, an der die Federspeicherbremsen im Parkbremskreis angeordnet sind, abgebremst. Dies kann zu einer eingeschränkten Verzögerungsleistung und ggf. zusätzlichen Instabilitäten während der Fahrt führen.

Um dies zu vermeiden, ist in EP 2 090 481 B1 ein elektronisch steuerbares Bremssystem beschrieben, in dem ein Hinterachs-Betriebsbremskreis von einem Hinterachs-Betriebsbrems-Steuermodul gesteuert wird und ein Vorderachs-Betriebsbremskreis von einem Vorderachs-Betriebsbrems-Steuermodul. Im Vorderachs-Betriebsbrems-Steuermodul ist das Parkbrems-Steuermodul für den Parkbremskreis integriert, wobei der Parkbremskreis Federspeicherbremsen an der Hinterachse steuert. Das Hinterachs-Betriebsbrems-Steuermodul sowie die Komponenten des Hinterachs-Betriebsbremskreises werden von einer ersten Energiequelle und das Vorderachs-Betriebsbrems-Steuermodul sowie das Parkbrems-Steuermodul mit den entsprechend zugeordneten Komponenten werden von einer zweiten Energiequelle mit Energie versorgt.

Bei einem Ausfall der ersten Energiequelle, d.h. dem Hinterachs-Betriebsbremskreis mit den Betriebsbremsen an der Hinterachse, kann die Vorderachse weiter über den Vorderachs-Betriebsbremskreis und die Hinterachse über den Parkbremskreis gebremst werden, so dass weiterhin beide Fahrzeugachsen abgebremst werden können. Der Parkbremskreis kompensiert somit den Ausfall des Hinterachs-Betriebsbremskreises, indem an der Hinterachse statt mit den Betriebsbremsen mit den Federspeicherbremsen gebremst wird. Bei einem Ausfall der zweiten Energiequelle, d.h. sowohl des Parkbremskreises an der Hinterachse als auch des Vorderachs-Betriebsbremskreises, wird von dem Hinterachs-Betriebsbrems-Steuermodul ein Betriebsbrems-Steuersignal ausgegeben, das - wie im normalen Betrieb - an den Hinterachs-Druckmodulator aber zusätzlich auch an ein Anhängersteuerventil des Fahrzeuges übertragen wird. Von dem Anhängersteuerventil wird ein entsprechender Steuerdruck erzeugt, der - falls vorhanden - auf den Anhänger übertragen wird, um dort eine Bremsung zu bewirken, und gleichzeitig auch über eine Redundanz-Druckleitung zum pneumatischen Redundanzanschluss am Vorderachs-Druckmodulator. Die Hinterachse und die Vorderachse werden somit - wie im normalen Betrieb - über die Betriebsbremsen abgebremst, wobei die Vorderachse ebenfalls durch das Hinterachs-Betriebsbrems-Steuermodul gesteuert wird.

Das Parkbrems-Steuermodul kann weiterhin einen Parkbrems-Steuerdruck an das Anhängersteuerventil ausgeben, das diesen invertiert und an die Betriebsbremsen des Anhängers weiterleitet, um auch im Anhänger eine Parkbremsfunktion umsetzen zu können.

Somit ist im Stand der Technik vorgeschlagen, jeden Betriebsbremskreis über separate Steuermodule anzusteuern und einen Ausfall einer Energiequelle und somit zumindest eines Betriebsbremskreises dadurch zu kompensieren, dass der oder die jeweils noch funktionierenden Bremskreise eine Bremsung an der ausgefallenen Fahrzeugachse übernehmen, so dass auch im Redundanzfall noch beide Fahrzeugachsen für eine Bremsung herangezogen werden können.

Nachteilig hierbei ist, dass in elektronisch gesteuerten Bremssystemen, die über lediglich ein zentrales Betriebsbrems-Steuermodul die Betriebsbremsen an der Hinterachse und der Vorderachse und ggf. weiteren Fahrzeugachsen über den Druckmodulator ansteuern, keine derartige Kompensation stattfinden kann, da bei einem Ausfall der Energiequelle oder einzelner elektrischer Komponenten des jeweiligen Betriebsbremskreises das zentrale Betriebsbrems-Steuermodul nicht mehr die elektrische Ansteuerung der Betriebsbremsen bzw. der vorgeschalteten Druckmodulatoren an einzelnen Fahrzeugachsen übernehmen kann. Somit kann - falls in dem entsprechenden Bremssystem vorhanden - lediglich auf die pneumatische, vom Fahrer gesteuerte erste Rückfallebene ausgewichen werden, falls der Fahrer auch tatsächlich manuell eingreift. Eine rein elektronische Bremsvorgabe wie sie in EP 2 090 481 B1 beschrieben ist bzw. eine mögliche automatisiert vorgegeben Assistenz-Bremsvorgabe kann jedoch nicht mehr umgesetzt werden.

Es ist daher Aufgabe der Erfindung, ein elektronisch steuerbares Bremssystem sowie ein Verfahren zum Steuern dieses elektronisch steuerbaren Bremssystems anzugeben, das in einfacher und zuverlässiger Weise eine elektrisch redundante Ansteuerung der Betriebsbremsen an beiden Fahrzeugachsen ermöglicht.

Diese Aufgabe wird durch ein elektronisch steuerbares Bremssystem nach Anspruch 1 sowie ein Verfahren nach Anspruch 25 gelöst. Die Unteransprüche geben bevorzugte Weiterbildungen an.

Erfindungsgemäß ist demnach vorgesehen, in einem elektronisch steuerbaren Bremssystem in einem Fahrzeug, insbesondere Nutzfahrzeug, mit mindestens einem Betriebsbremskreis, in dem ein Betriebsbrems-Bremsdruck an Betriebsbremsen ausgesteuert wird, den Betriebsbrems-Bremsdruck in Abhängigkeit eines in einem Inverter-Steuerventil erzeugten Inverter-Steuerdruckes festzulegen, falls ein durch ein Betriebsbrems-Steuermodul elektrisch gesteuertes Umsetzen einer bestimmten angeforderten Bremsvorgabe über den mindestens einen Betriebsbremskreis verhindert ist, wobei der Betriebsbrems-Bremsdruck bei einem elektrisch gesteuerten Umsetzen der Bremsvorgabe im Normalfall in Abhängigkeit eines von dem Betriebsbrems-Steuermodul erzeugten Betriebsbrems-Steuersignals erzeugt und an die Betriebsbremsen des betreffenden Betriebsbremskreises ausgegeben werden kann.

Das elektrisch gesteuerte Umsetzen der Bremsvorgabe ist beispielsweise bei einem elektrischen Ausfall in mindestens einem der Betriebsbremskreise nicht möglich. Ein elektrischer Ausfall schließt dabei im Rahmen der Erfindung insbesondere den Fall ein, dass ein Erzeugen des Betriebsbrems-Steuersignals im Betriebsbrems-Steuermodul fehlschlägt, z.B. weil das Betriebsbrems-Steuermodul einen elektrischen Defekt aufweist, und deshalb eine Vorgabe des Betriebsbrems-Bremsdruckes in Abhängigkeit des - in dem Fall nicht vorhandenen - Betriebsbrems-Steuersignals nicht möglich ist. Weiterhin kann ein elektrischer Ausfall vorliegen, wenn zwar ein Betriebsbrems-Steuersignal vom Betriebsbrems-Steuermodul erzeugt und ausgegeben werden kann, dieses aber beispielsweise aufgrund eines elektrischen Defekts in einer beliebigen elektrischen Komponente des betreffenden Betriebsbremskreises nicht in einen Betriebsbrems-Bremsdruck umgesetzt werden kann.

Das Inverter-Steuerventil ist erfindungsgemäß dazu ausgebildet, den Inverter-Steuerdruck in Abhängigkeit einer in einem Parkbremskreis des Bremssystems umsetzbaren Bremsvorgabe zu erzeugen, wobei der Inverter-Steuerdruck dazu derartig festgelegt wird, dass dieser umgekehrt proportional zu einem Parkbrems-Bremsdruck und/oder Parkbrems-Steuerdruck und/oder einem damit zusammenhängenden Steuerdruck ist, die in Abhängigkeit der Bremsvorgabe im Parkbremskreis erzeugt und in Abhängigkeit dessen im Parkbremskreis angeordnete Federspeicherbremsen angesteuert werden können, um die Bremsvorgabe über den Parkbremskreis umzusetzen.

Dadurch kann bereits der Vorteil erreicht werden, dass bei einem elektrischen Ausfall in dem mindestens einen Betriebsbremskreis, infolge dessen der Betriebsbrems-Bremsdruck nicht mehr in Abhängigkeit eines elektrisch vorgebbaren Betriebsbrems-Steuersignals festgelegt bzw. eine elektrisch gesteuerte Umsetzung einer bestimmten Bremsvorgabe durch das Betriebsbrems-Steuermodul nicht mehr stattfinden kann, eine dem Parkbremskreis vorgegebene Bremsvorgabe über das Inverter-Steuerventil an den mindestens einen Betriebsbremskreis umgeleitet werden kann. Bei einem elektrischen Ausfall des mindestens einen Betriebsbremskreises wird die dem Parkbremskreis vorgegebene Bremsvorgabe hierbei nicht gezwungenermaßen auch von den Federspeicherbremsen im Parkbremskreis umgesetzt. Es kann beispielsweise auch vorgesehen sein, dass bei einem derartigen elektrischen Ausfall lediglich der Parkbrems-Bremsdruck und/oder der Parkbrems-Steuerdruck und/oder ein damit zusammenhängender Steuerdruck im Parkbremskreis erzeugt wird, eine Übertragung bzw. eine Umsetzung dieser Drücke über die Federspeicherbremsen aber verhindert wird und diese Drücke lediglich über das Inverter-Steuerventil in erfindungsgemäßer Weise an den mindestens einen Betriebsbremskreis umgeleitet werden, um die dem Parkbremskreis vorgegebene Bremsvorgabe in dem mindestens einen Betriebsbremskreis umsetzen zu können und den elektrischen Ausfall in dem mindestens einen Betriebsbremskreis somit in einfacher Weise zu kompensieren.

Um in den jeweiligen Bremskreisen eine Aussteuerung der jeweiligen Drücke bewirken zu können, ist vorgesehen, dass der mindestens eine Betriebsbremskreis von einer ersten Energiequelle und der Parkbremskreis und je nach Ausführung auch das Inverter-Steuerventil von einer zweiten Energiequelle mit Energie versorgt werden, wobei die erste Energiequelle unabhängig von der zweiten Energiequelle ist. Dadurch soll gewährleistet werden, dass bei einem Ausfall der ersten Energiequelle für die Betriebsbremskreise in dem Parkbremskreis weiterhin Drücke ausgesteuert werden können und diese vom Inverter-Steuerventil weiterhin invertiert werden können, um den Inverter-Steuerdruck an den oder die ausgefallenen Betriebsbremskreise vorgeben zu können.

Die im Inverter-Steuerventil bewirkte Invertierung erfolgt vorzugsweise über ein inverses Relaisventil, das im Inverter-Steuerventil angeordnet ist. Unter einer Invertierung wird hierbei im Rahmen der Erfindung verstanden, dass das Inverter-Steuerventil bzw. das inverse Relaisventil dafür sorgen, dass ein zum Parkbrems-Bremsdruck und/oder Parkbrems-Steuerdruck umgekehrt proportionaler Inverter-Steuerdruck erzeugt und ausgegeben wird. Dadurch kann vorteilhafterweise erreicht werden, dass ein im Parkbremskreis zur Ansteuerung der Federspeicherbremsen erzeugbarer Parkbrems-Bremsdruck und/oder Parkbrems-Steuerdruck, die jeweils die dem Parkbremskreis vorgegebene Bremsvorgabe charakterisieren, nach der Invertierung unmittelbar dazu verwendet werden können, die Betriebsbremsen anzusteuern und darüber die Bremsvorgabe im mindestens einen Betriebsbremskreis umzusetzen. D.h. über die Betriebsbremsen im Betriebsbremskreis wird in Abhängigkeit des invertierten Parkbrems-Bremsdruckes und/oder des invertierten Parkbrems-Steuerdruckes in etwa dieselbe Bremswirkung erzielt wie über die Federspeicherbremsen im Parkbremskreis in Abhängigkeit des Parkbrems-Bremsdruckes und/oder des Parkbrems-Steuerdruckes. Somit kann bei einem elektrischen Ausfall in den Betriebsbremskreisen auf eine aufwändige Druckregelung zum Erzeugen des Betriebsbrems-Bremsdruckes verzichtet werden.

Das Inverter-Steuerventil kann hierbei ergänzend für eine Skalierung sorgen, d.h. die Bremswirkung an den Betriebsbremsen kann gegenüber der Bremswirkung an den Federspeicherbremsen um einen Faktor skaliert, d.h. erhöht oder reduziert werden, beispielsweise zum Verbessern der Fahrstabilität des Fahrzeuges beim Bremsen. Weiterhin kann vorgesehen sein, den Inverter-Steuerdruck lediglich einem Betriebsbremskreis, insbesondere einem Vorderachs-Betriebsbremskreis, oder auch an weitere Betriebsbremskreise im Fahrzeug vorzugeben, falls ein elektrischer Ausfall vorliegt und der Ausfall durch eine Bremsung an weiteren Fahrzeugachsen mit Betriebsbremsen kompensiert werden soll. Die im Folgenden beschriebenen Ausführungsvarianten sind dementsprechend an lediglich einer oder ggf. auch an weiteren Fahrzeugachsen bzw. in weiteren Betriebsbremskreisen in identischer Weise vorzusehen.

Das Inverter-Steuerventil kann gemäß einer vorteilhaften Ausbildung als Anhängersteuerventil ausgebildet sein, dem der im Parkbremskreis aufgrund der Bremsvorgabe erzeugte Parkbrems-Bremsdruck und/oder Parkbrems-Steuerdruck und/oder ein damit zusammenhängender Steuerdruck zugeführt werden kann und das diesen Parkbrems-Bremsdruck und/oder Parkbrems-Steuerdruck und/oder den damit zusammenhängenden Steuerdruck über ein integriertes inverses Relaisventil invertiert.

Durch den Rückgriff auf ein Anhängersteuerventil, das in vielen Nutzfahrzeugen bereits vorhanden ist und über das ein zum Parkbrems-Bremsdruck und/oder Parkbrems-Steuerdruck inverser Anhänger-Steuerdruck erzeugt und an ein Bremssystem in einem möglicherweise angehängten Anhänger ausgesteuert werden kann, um darin Betriebsbremsen anzusteuern, können Kosten gespart werden, da die Invertierungsfunktion des Anhängersteuerventils zum Erzeugen des Anhänger-Steuerdruckes gleichzeitig auch zum Erzeugen des Inverter-Steuerdruckes und somit zur Vorgabe des Betriebsbrems-Bremsdruckes in dem ausgefallenen Betriebsbremskreis verwendet werden kann. Dadurch kann der Platzaufwand sowie der Steuerungs- und Regelungsaufwand im Bremssystem minimiert werden, da keine zusätzlichen Komponenten im Fahrzeug zu verbauen und anzusteuern sind. Es ist lediglich dafür zu sorgen, dass der Inverter-Steuerdruck bei einem elektrischen Ausfall in den entsprechenden Betriebsbremskreis eingesteuert werden kann.

Der Parkbremskreis im Bremssystem kann gemäß einer ersten Alternative ein Parkbrems-Steuermodul aufweisen, das den Parkbrems-Bremsdruck in Abhängigkeit der Bremsvorgabe erzeugt, wobei die Bremsvorgabe in dieser Alternative elektrisch an das Parkbrems-Steuermodul übertragen wird. Das Parkbrems-Steuermodul ist mit den Federspeicherbremsen des Parkbremskreises verbunden, um den Parkbrems-Bremsdruck pneumatisch an die Federspeicherbremsen zu übertragen. D.h. es liegt eine elektrisch gesteuerte Parkbremse vor.

Die Bremsvorgabe an den Parkbremskreis kann im Rahmen der Erfindung eine automatisiert angeforderte Assistenz-Bremsvorgabe sein, die automatisiert von einem Assistenz-Steuermodul erzeugt wird. Das Assistenz-Steuermodul ist dazu vorgesehen, das Fahrzeug automatisiert anhand von Umfeld-Informationen zu steuern, wobei das Fahrzeug anhand der Assistenz-Bremsvorgabe automatisiert abgebremst werden kann und die Assistenz-Bremsvorgabe dazu sowohl über den mindestens einen Betriebsbremskreis als auch über den Parkbremskreis umsetzbar ist. Weiterhin kann die Bremsvorgabe eine manuell vom Fahrer über eine Parkbrems-Betätigungsvorrichtung angeforderte Parkbrems-Bremsvorgabe und/oder eine manuell über eine Betriebsbrems-Betätigungsvorrichtung, z.B. ein elektropneumatisches Betriebsbremsventil oder eine rein elektrisch gesteuerte Betriebsbrems-Betätigungsvorrichtung, angeforderte Betriebsbrems-Bremsvorgabe sein, die auf diesem Wege über das Inverter-Steuerventil auch redundant an die Betriebsbremsen im jeweiligen Betriebsbremskreis zur Umsetzung vorgegeben werden können.

Bei einem elektrischen Ausfall des mindestens einen Betriebsbremskreises oder des Parkbremskreises kann im Rahmen einer redundanten Bremsung vorgesehen sein, die jeweiligen Bremsvorgaben an die jeweils noch funktionierenden Bremskreise auszusteuern, um den elektrischen Ausfall zu kompensieren. Dies kann durch eine entsprechende Vernetzung der jeweiligen Komponenten, z. B. über ein beliebiges fahrzeuginternes (Bus-)Netzwerk oder CAN-Bus oder über eine Direktverbindung der einzelnen Komponenten, gewährleistet werden. Demnach können alle genannten Bremsvorgaben als redundante Bremsvorgaben in jedem der Bremskreise dienen, die bei einem elektrischen Ausfall eines der Betriebsbremskreise über den Parkbremskreis in das Bremssystem eingesteuert und über das Inverter-Steuerventil an den mindestens einen Betriebsbremskreis ausgesteuert werden können.

Um dies zu gewährleisten, ist das Parkbrems-Steuermodul der elektrisch gesteuerten Parkbremse auch mit dem Inverter-Steuerventil verbunden, um den Parkbrems-Bremsdruck oder einen damit zusammenhängenden Druck, beispielsweise eine intern im Parkbrems-Steuermodul erzeugten Steuerdruck, pneumatisch an das Inverter-Steuerventil zu übertagen und darin zu invertieren und als Inverter-Steuerdruck auszugeben.

Gemäß einer alternativen Ausführungsform ist eine pneumatische Parkbremse vorgesehen, wobei dazu im Parkbremskreis ein Parkbremsventil angeordnet ist, das vom Fahrer manuell betätigt werden kann, um die Parkbrems-Bremsvorgabe anzufordern. Das Parkbremsventil gibt in Abhängigkeit der Parkbrems-Bremsvorgabe einen Parkbrems-Steuerdruck aus, der in einem Relaisventil luftmengenverstärkt und anschließend als Parkbrems-Bremsdruck an die Federspeicherbremsen ausgegeben wird, um die Parkbrems-Bremsvorgabe umzusetzen. Der vom Parkbremsventil ausgegebene Parkbrems-Steuerdruck oder ein damit zusammenhängender Druck wird an das Inverter-Steuerventil über eine Druckleitung übertragen und darin über das inverse Relaisventil invertiert, um den Inverter-Steuerdruck vorzugeben.

Somit können in zwei Alternativen eine Parkbrems-Bremsvorgabe über eine pneumatische Parkbremse oder eine Parkbrems-Bremsvorgabe und/oder eine Assistenz-Bremsvorgabe und/oder auch eine Betriebsbrems-Bremsvorgabe über eine elektrische Parkbremse im Parkbremskreis an das Inverter-Steuerventil übertragen werden. Bei einem elektrischen Ausfall des mindestens einen Betriebsbremskreises kann also auf den im Fahrzeug vorhandenen Parkbremskreis zurückgegriffen werden, um über diesen eine Bremsvorgabe in Form der manuellen Parkbrems-Bremsvorgabe und/oder Betriebsbrems-Bremsvorgabe und/oder der automatisiert angeforderten Assistenz-Bremsvorgabe aufzunehmen und über das Inverter-Steuerventil an die Betriebsbremsen umzuleiten und diese somit redundant anzusteuern.

Gemäß einer weiteren Alternative kann das Parkbrems-Steuermodul auch im Inverter-Steuerventil integriert sein und die Assistenz-Bremsvorgabe und/oder die Parkbrems-Bremsvorgabe und/oder die Betriebsbrems-Vorgabe können elektrisch an das Inverter-Steuerventil übertragen werden, z.B. über ein (Bus-)Netzwerk und/oder eine Direktverbindung. Im Inverter-Steuerventil kann über das Parkbrems-Steuermodul aus der Assistenz-Bremsvorgabe und/oder der Parkbrems-Bremsvorgabe der Parkbrems-Bremsdruck erzeugt werden und dieser über einen Parkbrems-Ausgang am Inverter-Steuerventil an die Federspeicherbremsen übertragen werden, falls eine Bremsung über die Federspeicherbremsen gewünscht ist.

Über ein im Inverter-Steuerventil integriertes Inverter-Steuermodul, das auch Bestandteil des Parkbrems-Steuermoduls sein kann, und ein Vorsteuermodul mit elektrisch steuerbaren Druckventilen enthält, kann aus der Assistenz-Bremsvorgabe und/oder der Parkbrems-Bremsvorgabe und/oder der Betriebsbrems-Bremsvorgabe der Inverter-Steuerdruck elektronisch gesteuert erzeugt und an den Inverter-Ausgang ausgegeben werden, wobei der im Parkbrems-Steuermodul erzeugte Parkbrems-Bremsdruck umgekehrt proportional zudem vom Vorsteuermodul erzeugten Inverter-Steuerdruck ist. Der dadurch erzeugte Inverter-Steuerdruck wird dann ebenfalls redundant dafür genutzt, die Betriebsbremsen anzusteuern.

Um den vom Inverter-Steuerventil über den Inverter-Ausgang ausgegebenen Inverter-Steuerdruck bei einem elektrischen Ausfall der Betriebsbremskreise an die Betriebsbremsen aussteuern zu können und diesen somit in den jeweiligen Betriebsbremskreis einspeisen zu können, ist eine vom Inverter-Ausgang ausgehende Redundanz-Druckleitung zu den jeweiligen Betriebsbremskreisen geführt. Die Position der Einspeisung in den jeweiligen Betriebskreis kann wie folgt festgelegt sein:
Zunächst ist in dem mindestens einen Betriebsbremskreis jeweils ein Druckmodulator vorgesehen, der ausgebildet ist, in Abhängigkeit des Betriebsbrems-Steuersignals einen Druckmodulator-Ausgangsdruck über einen Druckmodulator-Ausgang auszugeben, wobei der Druckmodulator-Ausgangsdruck als Betriebsbrems-Bremsdruck zur Umsetzung einer angeforderten Bremsvorgabe an die Betriebsbremsen übertragen werden kann. Dies ist im Normalbetrieb, d.h. ohne einen elektrischen Ausfall in den Betriebsbremskreisen, des Bremssystems der Fall.

Gemäß einer Ausführungsform weist der Druckmodulator einen pneumatischen Redundanzanschluss auf, wobei dem pneumatischen Redundanzanschluss wahlweise der Inverter-Steuerdruck oder ein von der als elektropneumatisches Betriebsbremsventil ausgeführten Betriebsbrems-Betätigungsvorrichtung aufgrund der Betriebsbrems-Bremsvorgabe ausgegebener Betriebsbrems-Steuerdruck als Redundanzdruck vorgegeben werden kann. Die Einspeisung des Inverter-Steuerdruckes in den Betriebsbremskreis kann somit gemäß dieser Ausführung über den pneumatischen Redundanzanschluss am jeweiligen Druckmodulator erfolgen.

Die wahlweise Vorgabe des Redundanzdruckes erfolgt vorzugsweise über ein Umschaltventil, das dem Redundanzanschluss vorgeschaltet ist, wobei das Umschaltventil in einer ersten Umschaltventil-Schaltstellung das Betriebsbremsventil mit dem Redundanzanschluss verbindet zum Vorgeben des Betriebsbrems-Steuerdruckes als Redundanzdruck und in einer zweiten Umschaltventil-Schaltstellung den Inverter-Steuerdruck an den Redundanzanschluss des Druckmodulators ausgibt zum Vorgeben des Inverter-Steuerdruckes als Redundanzdruck.

Der Druckmodulator ist ausgebildet, falls eine Vorgabe des Betriebsbrems-Bremsdruckes in Abhängigkeit eines Betriebsbrems-Steuersignals nicht möglich ist, d.h. ein elektrischer Ausfall im jeweiligen Betriebsbremskreis vorliegt, den Druckmodulator-Ausgangsdruck in Abhängigkeit des dem Redundanzanschluss wahlweise zugeführten Betriebsbrems-Steuerdruckes oder Inverter-Steuerdruckes zu erzeugen. Dadurch können in einfacher Weise zwei Rückfallebenen ausgebildet werden, in denen manuell oder automatisiert über den Parkbremskreis oder manuell direkt über das Betriebsbremsventil eine redundante Bremsung vorgegeben und umgesetzt werden kann. Vorteilhafterweise ist dazu in einem bestehenden Bremssystem mit einem pneumatisch redundant sowie elektrisch ansteuerbaren Druckmodulator lediglich ein zusätzliches Umschaltventil vorzusehen, über das der im Inverter-Steuerventil erzeugte Inverter-Steuerdruck an den Redundanzanschluss ausgegeben werden kann.

Gemäß einer alternativen Ausführungsform, in der der Druckmodulator lediglich elektrisch ansteuerbar ist und demnach kein Redundanzdruck vorgegeben werden kann, ist das Umschaltventil den Betriebsbremsen in dem mindestens einen Betriebsbremskreis im den Betriebsbrems-Bremsdruck übertragenden Druckpfad vorgelagert, so dass als Betriebsbrems-Bremsdruck wahlweise der Druckmodulator-Ausgangsdruck oder der Inverter-Steuerdruck vorgegeben werden können. Die Betriebsbrems-Betätigungsvorrichtung ist in dem Fall vorzugsweise rein elektrisch gesteuert ausgeführt, d. h. es ist kein Betriebsbremsventil vorgesehen.

In der ersten Umschaltventil-Schaltstellung wird der Druckmodulator-Ausgang mit den Betriebsbremsen verbunden zum Vorgeben des Druckmodulator-Ausgangsdruckes als Betriebsbrems-Bremsdruck an die Betriebsbremsen und in der zweiten Umschaltventil-Schaltstellung wird der Inverter-Steuerdruck an die Betriebsbremsen ausgegeben zum Vorgeben des ggf. zusätzlich volumenverstärkten Inverter-Steuerdruckes als Betriebsbrems-Bremsdruck an die Betriebsbremsen.

Das Umschaltventil kann dazu gemäß einer Ausführungsform direkt an einer dem mindestens einen Betriebsbremskreis zugeordneten Fahrzeugachse angeordnet sein, wobei das Inverter-Steuerventil dann den erzeugten Inverter-Steuerdruck über eine Redundanz-Druckleitung an das Umschaltventil vor oder nach dem Druckmodulator an der jeweiligen Fahrzeugachse ausgibt.

Gemäß einer alternativen Ausführungsform ist das Umschaltventil als ein Inverter-Umschaltventil im Inverter-Steuerventil integriert. Demnach ist dem Inverter-Steuerventil je nach Ausführung des Bremssystems entweder der Betriebsbrems-Steuerdruck oder der Druckmodulator-Ausgangsdruck zuzuführen, um diese dem integrierten Inverter-Umschaltventil vorzugeben. Die Vorgabe des Redundanzdruckes an den Redundanzanschluss erfolgt dann dadurch, dass in der ersten Umschaltventil-Schaltstellung das Betriebsbremsventil über das Inverter-Umschaltventil mit einem zusätzlichen Redundanz-Ausgang am Inverter-Steuerventil verbunden wird und in der zweiten Umschaltventil-Schaltstellung der im Inverter-Steuerventil erzeugte Inverter-Steuerdruck über das Inverter-Umschaltventil an den Redundanz-Ausgang ausgegeben wird, wobei der Redundanz-Ausgang des Inverter-Steuerventils mit dem Redundanzanschluss des Druckmodulators bzw. mit den Betriebsbremsen verbunden ist.

Somit kann in zwei alternativen Anordnungen des Umschaltventils vorteilhafterweise eine Umschaltung zwischen dem Fahrerwunsch und dem Inverter-Steuerdruck stattfinden, wobei bei der im Inverter-Steuerventil integrierten Lösung eine verbesserte Nachrüstbarkeit gegeben ist. In dem Fall kann die Umschaltfunktion mit dem Einbau des Inverter-Steuerventils in das Fahrzeug gleichzeitig nachgerüstet werden. Zudem kann Platz an den Fahrzeugachsen gespart werden, da eine Verbauung der Umschaltventile an der Fahrzeugachse entfallen kann. Zudem kann für beide Fahrzeugachsen lediglich ein Umschaltventil verwendet werden.

Auf der anderen Seite kann mit den an den Fahrzeugachsen angeordneten Umschaltventilen eine achsweise unterschiedliche redundante Ansteuerung bewirkt werden und bei bereits vorhandenem Anhängersteuerventil mit Invertierungsfunktion kann das Bremssystem durch ein Nachrüsten einzelner Umschaltventile an den Fahrzeugachsen modular aufgerüstet werden.

Ist in der integrierten Lösung vorgesehen, den Inverter-Steuerdruck auch als Anhänger-Steuerdruck zur Ausgabe an einen Anhänger zu verwenden, ist der Inverter-Steuerdruck separat über den Inverter-Ausgang ("gelber Kupplungskopf") als Anhänger-Steuerdruck auszugeben. In dem Fall können also nicht wie bei der anderen Lösung die Vorgaben an den Anhänger und den Betriebsbremskreis über denselben Inverter-Ausgang, der dem "gelben Kupplungskopf" entspricht, erfolgen.

Das Umschalten kann situationsbedingt beispielsweise dann erfolgen, wenn eine redundante Betriebsbrems-Bremsvorgabe vom Fahrer erfasst wurde und über diese Betriebsbrems-Bremsvorgabe eine stärkere Bremsung angefordert wird als über eine anderweitige, nicht vom Fahrer angeforderte redundante Bremsvorgabe, die zum jeweiligen Zeitpunkt gerade umgesetzt wird. Andernfalls kann auch vorgesehen sein, dass bei Erfassen eines Betriebsbrems-Bremswunsches durch den Fahrer eine gerade umgesetzte anderweitige Bremsvorgabe, die insbesondere eine stärkere Bremswirkung als die manuell angeforderte Betriebsbrems-Bremsvorgabe verursacht, kontrolliert beendet wird und anschließend das Umschaltventil in die erste Umschaltventil-Schaltstellung gebracht wird, in der die Betriebsbrems-Bremsvorgabe durch den Fahrer umgesetzt werden kann. Durch dieses Vorgehen können Instabilitäten bei der Umschaltung vermieden werden.

Das Umschalten des Umschaltventils in die erste Umschaltventil-Schaltstellung bei Vorliegen eines Fahrerwunsches kann hierbei je nach Art des Umschaltventils pneumatisch oder elektrisch gesteuert erfolgen, d. h. das Umschaltventil wird dadurch, dass am Umschaltventil ein gewisser Betriebsbrems-Bremsdruck wirkt automatisch in die erste Umschaltventil-Schaltstellung umgeschaltet oder der Betriebsbrems-Bremsdruck wird gemessen, vorzugsweise mit einem Drucksensor, und in Abhängigkeit der Messung wird das Umschaltventil elektrisch gesteuert in die erste Umschaltventil-Schaltstellung gebracht.

In beiden Ausführungsform kann das Umschaltventil dazu als ein Wechselventil bzw. Select-High-Ventil oder als ein elektrisch oder pneumatisch steuerbares 3/2-Wegeventil ausgeführt sein, wobei das Wechselventil ausgebildet ist, den höheren der beiden an den Umschaltventil-Eingängen anliegenden Drücke an den Umschaltventil-Ausgang auszugeben (Select-High-Ventil). Um in diesem Fall situationsabhängig auf den Fahrerwunsch umzuschalten zu können, ist dafür zu sorgen, dass der Inverter-Steuerdruck, der dem Wechselventil ebenfalls zugeführt wird, kontrolliert verringert wird, d.h. eine bereits durchgeführte redundante Bremsung kontrolliert beendet wird. Dadurch wird der Inverter-Steuerdruck bei Vorliegen einer über das Betriebsbremsventil pneumatisch vorgegebenen Betriebsbrems-Bremsvorgabe geringer als der Betriebsbrems-Steuerdruck, so dass das als Select-High-Ventil ausgeführte Wechselventil automatisch in die erste Umschaltventil-Schaltstellung gebracht wird.

Das 3/2-Wegeventil schaltet in Abhängigkeit eines beispielsweise elektrisch vorgegebenen Umschaltsignals in die erste Schaltstellung oder die zweite Schaltstellung. Somit kann vorteilhafterweise mit beiden Varianten des Umschaltventils automatisch oder aktiv gesteuert vorgegeben werden, welche Bremsvorgabe den Betriebsbremsen insbesondere bei einem elektrischen Ausfall des mindestens einen Betriebsbremskreises zugeführt wird.

Das Umschaltsignal kann dazu vorzugsweise in Abhängigkeit davon erzeugt werden, ob eine manuell angeforderte Betriebsbrems-Bremsvorgabe vorliegt, d.h. der Fahrer in die Bremsung eingreifen möchte. Dazu kann beispielsweise ein Drucksensor im Bremssystem, vorzugsweise im Inverter-Steuerventil oder am Betriebsbremsventil, vorgesehen sein, wobei der Drucksensor ausgebildet ist, den vom Betriebsbremsventil ausgesteuerten Betriebsbrems-Steuerdruck zu messen und in Abhängigkeit davon ein Bremswunsch-Signal auszugeben. In Abhängigkeit des Bremswunsch-Signals wird dann das Umschaltsignal an das 3/2-Wegeventil ausgegeben, um die entsprechende Umschaltventil-Schaltstellung einzustellen. Gemäß einer weiteren Alternative kann das 3/2-Wegeventil auch einen pneumatischen Steuereingang aufweisen, dem z.B. der Betriebsbrems-Steuerdruck oder ein dazu proportionaler Druck als Umschalt-Steuerdruck zugeführt wird. Aufgrund des Umschalt-Steuerdruckes am pneumatischen Steuereingang kann das Umschaltventil dann in die entsprechende Umschaltventil-Schaltstellung umgeschaltet werden. Alternativ kann der Bremswunsch auch elektrisch erfasst werden, wenn beispielsweise eine rein elektrische Betriebsbrems-Betätigungsvorrichtung vorliegt, und in Abhängigkeit dieser elektrischen Erfassung die entsprechende Umschaltventil-Schaltstellung eingestellt werden.

In beiden Varianten des Umschaltventils kann also insbesondere bei einem elektrischen Ausfall des mindestens einen Betriebsbremskreises und einer daraufhin veranlassten redundanten Bremsung gewährleistet werden, dass der Fahrer durch entsprechendes Umschalten des Umschaltventils redundant in die Bremsung eingreifen kann, falls dieser am Platz oder aufmerksam ist und auch selbst über das Betriebsbremsventil pneumatisch redundant eingreift. Ein möglicherweise aufgrund einer Bremsvorgabe im Parkbremskreis ebenfalls redundant vorgegebener Inverter-Steuerdruck kann dann bei Vorliegen einer Betriebsbrems-Bremsvorgabe durch den Fahrer kontrolliert beendet werden bevor die erste Umschaltventil-Schaltstellung eingestellt wird, um anschließend den Fahrerwunsch umzusetzen.

Um in bestimmten Situationen eine redundante Bremsung durch Vorgabe des Inverter-Steuerdruckes an mindestens einen der Betriebsbremskreise über die Redundanz-Druckleitung zu verhindern, kann vorgesehen sein, in der Redundanz-Druckleitung ein dem Inverter-Ausgang oder dem Redundanz-Ausgang des Inverter-Steuerventils nachgeschaltetes Abschaltventil anzuordnen, wobei das Abschaltventil in einer ersten Abschaltventil-Schaltstellung die Redundanz-Druckleitung mit einem Entlüftungsanschluss verbindet zum Entlüften der Redundanz-Druckleitung und in einer zweiten Abschaltventil-Schaltstellung die Redundanz-Druckleitung mit dem Inverter-Ausgang oder dem Redundanz-Ausgang des Inverter-Steuerventils verbindet zum redundanten Vorgeben des Betriebsbrems-Bremsdruckes in Abhängigkeit des Inverter-Steuerdruckes.

Das zusätzliche Abschaltventil ist hierbei insbesondere dann vorteilhaft für die gewünschte Abschaltfunktion, wenn als Umschaltventil ein Wechselventil vorgesehen ist. Ist das Umschaltventil jedoch als elektrisch steuerbares 3/2-Wegeventil ausgeführt, kann das Abschaltventil auch entfallen und die Abschaltfunktion des Abschaltventils stattdessen auch durch das ohnehin vorhandene Umschaltventil gewährleistet werden, indem dieses durch eine elektrische Ansteuerung in die entsprechende Umschaltventil-Schaltstellung gebracht wird, in der der Betriebsbrems-Bremsdruck nicht durch den Inverter-Steuerdruck vorgegeben wird sondern durch den Betriebsbrems-Steuerdruck, der ohne eine Betätigung des Betriebsbremsventils ebenfalls zu einer Entlüftung führt.

Das Abschaltventil kann in entsprechender Form auch im Inverter-Steuerventil integriert sein und somit vorgeben, ob an dem Inverter-Ausgang oder an dem Redundanz-Ausgang des Inverter-Steuerventils ein Druck ausgegeben oder ob die Redundanz-Druckleitung entlüftet werden soll. Dadurch können die Nachrüstbarkeit sowie der Platzbedarf verbessert werden, da lediglich ein kompaktes Bauteil nachzurüsten bzw. vorzusehen ist.

So kann in einfacher Weise die Vorgabe des Inverter-Steuerdruckes an die Betriebsbremsen verhindert werden, wenn beispielsweise bei einem dauerhaften Abstellen des Fahrzeuges nicht gewünscht ist, die Betriebsbremsen dauerhaft mit einem Betriebsbrems-Bremsdruck zu versorgen. Bei einem Abstellen können dazu in der entsprechenden Abschaltventil-Schaltstellung die Betriebsbremsen über den Entlüftungsanschluss entlüftet werden. Dadurch kann vermieden werden, dass Betriebsbrems-Druckmittelvorräte im Bremssystem entlüftet werden, wenn im Betriebsbremskreis Leckagen auftreten.

Erfindungsgemäß kann demnach in einem Verfahren zunächst festgestellt werden, ob der Betriebsbrems-Bremsdruck in dem mindestens einen Betriebsbremskreis in Abhängigkeit des z.B. von dem Betriebsbrems-Steuermodul ausgebbaren Betriebsbrems-Steuersignals zum Umsetzen der jeweiligen Bremsvorgabe an die Betriebsbremsen möglich ist und demnach die gewünschte Bremsvorgabe elektrisch gesteuert umgesetzt werden kann. Ist dies nicht der Fall, d.h. liegt beispielsweise ein Defekt in dem Betriebsbrems-Steuermodul vor und kann dieses entsprechend keine Betriebsbrems-Steuersignale ausgeben, wird der Inverter-Steuerdruck in dem Inverter-Steuerventil in Abhängigkeit der dem Parkbremskreis vorgegebenen Bremsvorgabe wie oben beschrieben durch eine Invertierung erzeugt und der Betriebsbrems-Bremsdruck in dem mindestens einen Betriebsbremskreis in Abhängigkeit des Inverter-Steuerdruckes wie beschrieben ausgegeben.

Dabei kann entweder vorgesehen sein, den Inverter-Steuerdruck direkt als Betriebsbrems-Bremsdruck an die Betriebsbremsen auszusteuern oder mit diesem zunächst den Druckmodulator pneumatisch redundant anzusteuern, woraufhin der Druckmodulator in Abhängigkeit davon den Betriebsbrems-Bremsdruck erzeugt und an die Betriebsbremsen aussteuert.

Die Erfindung wird im Folgenden anhand mehrerer Ausführungsbeispiele näher erläutert. Es zeigen:
- Fig. 1: ein elektronisch steuerbares Bremssystem mit einer elektrisch steuerbaren Parkbremse gemäß einer ersten Ausführungsform;
- Fig. 2a, b, c, d, e: verschiedene Ausführungsformen von Umschaltventilen in einem Bremssystem gemäß Fig. 1;
- Fig. 3: das Bremssystem gemäß Fig. 1 mit einem Abschaltventil zum Ausbilden einer Abschaltfunktion;
- Fig. 4: ein elektronisch steuerbares Bremssystem mit einer elektrisch steuerbaren Parkbremse gemäß einer zweiten Ausführungsform,
- Fig. 5: ein elektronisch steuerbares Bremssystem mit einer pneumatischen steuerbaren Parkbremse,
- Fig. 6, 7: Inverter-Steuerventile in alternativen Ausführungsformen,
- Fig. 8a, b, c: Inverter-Steuerventile mit einem integrierten Umschaltventil in unterschiedlichen Ausführungsformen; und
- Fig. 9, 10: elektronisch steuerbare Bremssysteme gemäß weiteren Ausführungsformen mit einem Inverter-Steuerventil gemäß Fig. 8c.

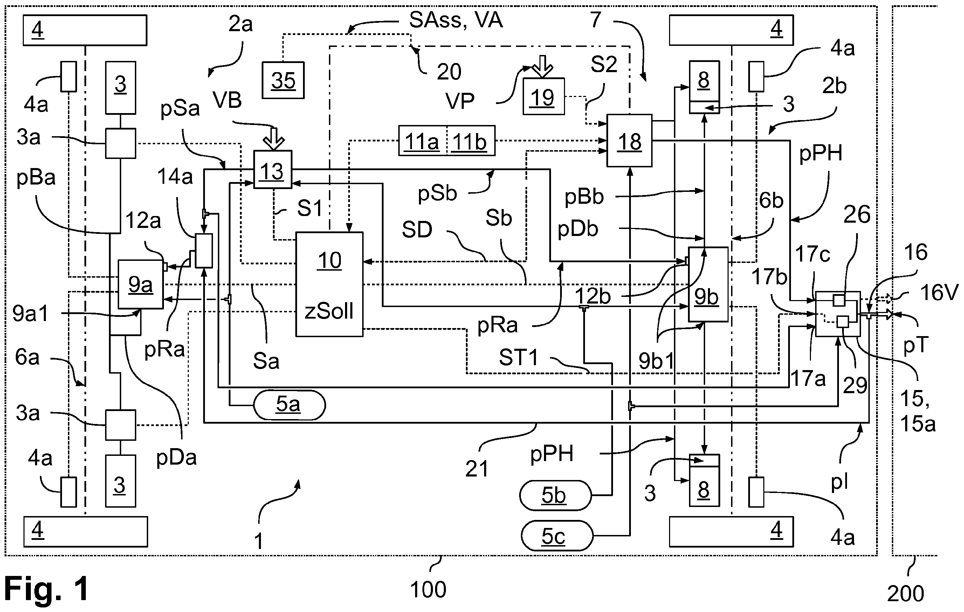

In Fig. 1 ist schematisch ein Fahrzeug 100 mit einem Bremssystem 1 dargestellt, das in zwei Betriebsbremskreisen 2a, 2b über Betriebsbremsen 3 an den Rädern 4 abgebremst werden kann. Ein Vorderachs-Betriebsbremskreis 2a ist einer Vorderachse 6a und ein Hinterachs-Betriebsbremskreis 2b einer Hinterachse 6b zugeordnet. Es können auch weitere Fahrzeugachsen vorgesehen sein, denen die Betriebsbremskreise 6a und 6b oder weitere Betriebsbremskreise zugeordnet sind. Den Betriebsbremskreisen 2a, 2b ist achsweise jeweils ein Druckmittelvorrat 5a, 5b zugeordnet.

Der Hinterachse 6b ist weiterhin ein Parkbremskreis 7 zugeordnet, wobei die Räder 4 an der Hinterachse 6b in diesem Parkbremskreis 7 über Federspeicherbremsen 8 abgebremst werden können, so dass die Räder 4 der Hinterachse 6b sowohl im Hinterachs-Betriebsbremskreis 2b über die Betriebsbremsen 3 und im Parkbremskreis 7 über die Federspeicherbremsen 8 verzögert werden können. An der Hinterachse 6b sind dazu kombinierte Betriebs-/Federspeicherbremsen vorgesehen. Der Parkbremskreis 7 wird von einem eigenständigen Parkbrems-Druckmittelvorrat 5c mit Druckmittel versorgt.

Zum Betätigen der Betriebsbremsen 3 und somit zum Umsetzen einer angeforderten Bremsvorgabe, die durch eine Fahrzeug-Soll-Verzögerung zSoll oder einen Soll-Bremsdruck charakterisiert wird, ist in den beiden Betriebsbremskreisen 2a, 2b an der jeweiligen Fahrzeugachse 6a, 6b jeweils ein Druckmodulator 9a, 9b angeordnet, wobei beide Druckmodulatoren 9a, 9b gemäß diesem Ausführungsbeispiel elektrisch oder pneumatisch angesteuert werden können, um einen bestimmten Betriebsbrems-Bremsdruck pBa, pBb an die Betriebsbremsen 3 der jeweiligen Fahrzeugachse 6a, 6b auszusteuern und die Betriebsbremsen 3 somit zuzuspannen. Grundsätzlich kann der Betriebsbrems-Bremsdruck pBa, pBb für jede der einzelnen Betriebsbremsen 3 individuell vorgegeben werden, beispielsweise im Rahmen einer Bremsschlupfregelung, die anhand von Daten von Raddrehzahlsensoren 4a an den einzelnen Rädern 4 durchgeführt wird. An der Hinterachse 6b kann die Bremsschlupfregelung direkt durch den Hinterachs-Druckmodulator 9b erfolgen und an der Vorderachse 6a über den Betriebsbremsen 3 vorgeschaltete ABS-Steuerventile 3a.

Im normalen Fahrbetrieb werden die jeweiligen Druckmodulatoren 9a, 9b elektrisch über Betriebsbrems-Steuersignale Sa, Sb angesteuert, wobei die jeweiligen Betriebsbrems-Steuersignale Sa, Sb in einem Betriebsbrems-Steuermodul 10 in Abhängigkeit der jeweiligen Bremsvorgabe bzw. der Fahrzeug-Soll-Verzögerung zSoll derartig erzeugt werden, dass der jeweilige Druckmodulator 9a, 9b einen Betriebsbrems-Bremsdruck pBa, pBb an die Betriebsbremsen 3 aussteuert, mit dem die angeforderte Bremsvorgabe umgesetzt wird. Das Betriebsbrems-Steuersignal Sa, Sb kann dabei beispielsweise über einen CAN-Bus, ein anderes Netzwerk, ein analoges oder pulsweitenmoduliertes Steuersignal ausgegeben werden, mit dem in bekannter Weise im Druckmodulator 9a, 9b über Druckventile ein Druckmodulator-Ausgangsdruck pDa, pDb erzeugt wird, der über einen Druckmodulator-Ausgang 9a1, 9b1 als Betriebsbrems-Bremsdruck pBa, pBb an die jeweilige Betriebsbremse 3 ausgegeben wird.

Die Druckmodulatoren 9a, 9b sind somit jeweils mit dem Betriebsbrems-Steuermodul 10 elektrisch verbunden, das die Bremswirkung in den beiden Betriebsbrems-Bremskreisen 2a, 2b individuell elektrisch steuern kann und dabei als ein zentrales Steuermodul ausgebildet ist, das im Normalbetrieb für die elektrische Umsetzung der Bremsvorgabe in beiden Betriebsbrems-Bremskreisen 2a, 2b verantwortlich ist. Das Betriebsbrems-Steuermodul 10 sowie die jeweiligen Druckmodulatoren 9a, 9b sowie weitere Komponenten der jeweiligen Betriebsbrems-Bremskreise 2a, 2b werden gemäß diesem Ausführungsbeispiel von einer ersten Energiequelle 11a mit Energie versorgt.

Die Fahrzeug-Soll-Verzögerung zSoll kann hierbei manuell durch den Fahrer festgelegt werden, der durch eine manuelle Betätigung eines Betriebsbremsventils 13 beispielsweise über ein Bremspedal eine Betriebsbrems-Bremsvorgabe VB vorgibt, die über ein Betriebsbrems-Betätigungssignal S1 an das Betriebsbrems-Steuermodul 10 ausgegeben wird und aus der die Fahrzeug-Soll-Verzögerung zSoll folgt. Weiterhin kann im automatisierten Fahrbetrieb von einem Assistenz-Steuermodul 35 eine automatisiert vorgegebene Assistenz-Bremsvorgabe VA über ein Assistenz-Steuersignal SAss ausgegeben werden, die beispielsweise über einen CAN-Bus 20 oder ein anderes Netzwerk im Fahrzeug 100 auch auf das Betriebsbrems-Steuermodul 10 übertragen wird und ebenfalls einer bestimmten Fahrzeug-Soll-Verzögerung zSoll entspricht.

Das Assistenz-Steuermodul 35 ist hierbei ausgebildet, das Fahrzeug 100 automatisiert anhand von Umfeldinformationen zu steuern, insbesondere gemäß der Assistenz-Bremsvorgabe VA abzubremsen, und in Abhängigkeit davon das Assistenz-Steuersignal SAss insbesondere an das Bremssystem 1 auszugeben.

Um bei einem elektrischen Ausfall weiterhin eine Umsetzung der Betriebsbrems-Bremsvorgabe VB oder der Assistenz-Bremsvorgabe VA, d.h. der Fahrzeug-Soll-Verzögerung zSoll, zu gewährleisten, kann auf mehrere Rückfallebenen ausgewichen werden. Durch die Rückfallebenen wird hierbei sichergestellt, dass das elektrisch steuerbare Bremssystem 1 für einen gewissen Automatisierungsgrad im Rahmen eines elektronisch gesteuerten autonomen Fahrbetriebs geeignet ist. Die Rückfallebenen sind wie folgt ausgestaltet:

In einer ersten Rückfallebene werden bei Feststellen eines elektrischen Ausfalls in einer der Komponenten der beiden Betriebsbremskreise 2a, 2b in dem jeweiligen Druckmodulator 9a, 9b automatisch pneumatische Redundanzanschlüsse 12a, 12b aktiviert. Diese bewirken, dass der jeweilige Druckmodulator 9a, 9b nicht mehr elektrisch über die Betriebsbrems-Steuersignale Sa, Sb angesteuert werden kann, sondern nur noch pneumatisch in Abhängigkeit eines vorgegebenen Redundanzdruckes pRa, pRb, der am jeweiligen pneumatischen Redundanzanschluss 12a, 12b anliegt. Die Vorgabe des jeweiligen Redundanzdruckes pRa, pRb erfolgt gemäß Fig. 1 achsweise unterschiedlich.

Demnach wird in dem Hinterachs-Betriebsbremskreis 2b als Hinterachs-Redundanzdruck pRb über eine pneumatische Leitung ein von dem Betriebsbremsventil 13 ausgesteuerter Hinterachs-Betriebsbrems-Steuerdruck pSb an den pneumatischen Hinterachs-Redundanzanschluss 12b ausgegeben. Das Betriebsbremsventil 13 steuert den Hinterachs-Betriebsbrems-Steuerdruck pSb hierbei in Abhängigkeit der vom Fahrer manuell vorgegebenen Betriebsbrems-Bremsvorgabe VB aus, so dass durch den Hinterachs-Betriebsbrems-Steuerdruck pSb pneumatisch dieselbe Bremsung angefordert wird wie über das Hinterachs-Betriebsbrems-Steuersignal Sb.

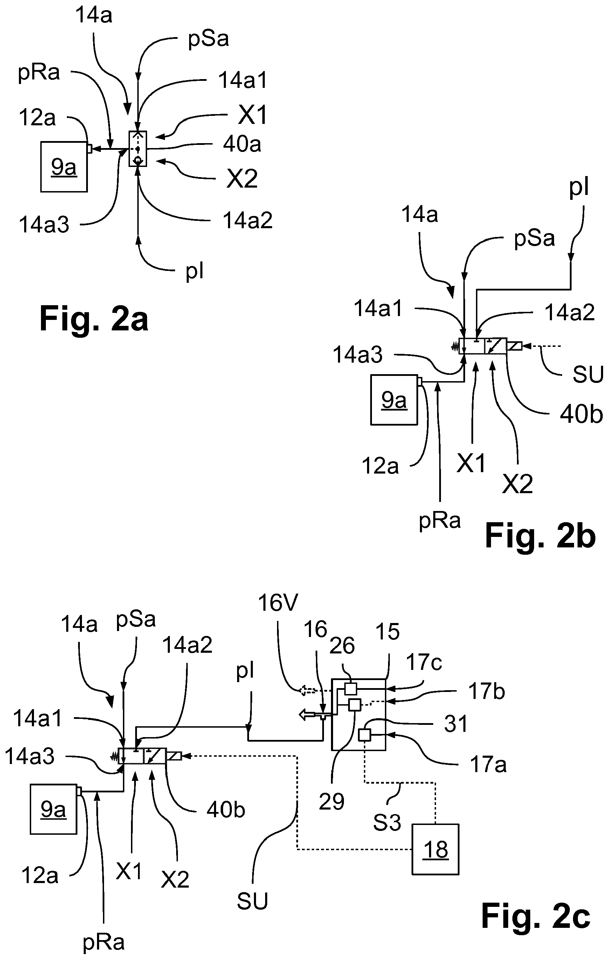

In dem Vorderachs-Betriebsbremskreis 2a kann als Vorderachs-Redundanzdruck pRa z.B. ein ebenfalls vom Betriebsbremsventil 13 gemäß der Betriebsbrems-Bremsvorgabe VB ausgesteuerter Vorderachs-Betriebsbrems-Steuerdruck pSa vorgegeben werden, wobei dieser im Gegensatz zum Hinterachs-Betriebsbremskreis 2b nicht direkt an den Vorderachs-Druckmodulator 9a bzw. dessen pneumatischen Vorderachs-Redundanzanschluss 12a ausgegeben wird. Vielmehr ist dem pneumatischen Vorderachs-Redundanzanschluss 12a ein Vorderachs-Umschaltventil 14a vorgelagert, das in zwei Umschaltventil-Schaltstellungen X1, X2 umgeschaltet werden kann. Der Übersichtlichkeit halber sind die Bezugszeichen, die im Folgenden für die Komponenten des Vorderachs-Umschaltventils 14a verwendet werden, in Fig. 1 nicht dargestellt. Es wird stattdessen auf die Detailansicht in den Figuren 2a und 2b verwiesen.

Das Vorderachs-Umschaltventil 14a weist einen ersten Vorderachs-Umschaltventil-Eingang 14a1 sowie einen zweiten Vorderachs-Umschaltventil-Eingang 14a2 und einen Vorderachs-Umschaltventil-Ausgang 14a3 auf, wobei der Vorderachs-Umschaltventil-Ausgang 14a3 mit dem pneumatischen Vorderachs-Redundanzanschluss 12a am Vorderachs-Druckmodulators 9a und der erste Vorderachs-Umschaltventil-Eingang 14a1 mit dem Betriebsbremsventil 13 verbunden ist. Befindet sich das Vorderachs-Umschaltventil 14a in seiner ersten Umschaltventil-Schaltstellung X1 wird der vom Betriebsbremsventil 13 vorgegebene, am ersten Vorderachs-Umschaltventil-Eingang 14a1 anliegende Vorderachs-Betriebsbrems-Steuerdruck pSa an den pneumatischen Vorderachs-Redundanzanschluss 12a durchgeleitet, so dass in dieser ersten Umschaltventil-Schaltstellung X1 vom Vorderachs-Druckmodulator 9a die pneumatisch vorgegebene Betriebsbrems-Bremsvorgabe VB des Fahrers umgesetzt wird, indem der Vorderachs-Betriebsbrems-Steuerdruck pSa luftmengenverstärkt an die Betriebsbremsen 3 der Vorderachse 6a ausgegeben wird.

Die durch das Betriebsbremsventil 13 vom Fahrer vorgegebene Betriebsbrems-Bremsvorgabe VB, d.h. eine bestimmte vorgegebene Fahrzeug-Soll-Verzögerung zSoll, kann somit im Normalbetrieb in Abhängigkeit der elektronisch über die jeweiligen von dem Betriebsbrems-Steuermodul 10 ausgegebenen Betriebsbrems-Steuersignale Sa, Sb oder in der ersten Rückfallebene in Abhängigkeit der pneumatisch über die jeweiligen vom Betriebsbremsventil 13 direkt ausgesteuerten Betriebsbrems-Steuerdrücke pSa, pSb von dem jeweiligen Druckmodulator 9a, 9b umgesetzt werden.

Der zweite Vorderachs-Umschaltventil-Eingang 14a2 des Vorderachs-Umschaltventils 14a ist über eine Redundanz-Druckleitung 21 mit einem Inverter-Steuerventil 15 verbunden. Dadurch kann in der zweiten Umschaltventil-Schaltstellung X2 des Vorderachs-Umschaltventils 14a ein aus einem Inverter-Ausgang 16 des Inverter-Ventils 15 ausgegebener Inverter-Steuerdruck pl als Vorderachs-Redundanzdruck pRa an den pneumatischen Vorderachs-Redundanzanschluss 12a des Vorderachs-Druckmodulators 9a durchgeleitet werden. Dadurch können die Betriebsbremsen 3 an der Vorderachse 6a zusätzlich mit einem Vorderachs-Bremsdruck pBa beaufschlagt werden, der von dem Inverter-Steuerdruck pl abhängig ist. Dies ermöglicht die Ausbildung einer zweiten Rückfallebene wie folgt:
Die Vorgabe des Inverter-Steuerdruckes pl durch das Inverter-Steuerventil 15 kann grundsätzlich in Abhängigkeit unterschiedlicher Pfade erfolgen: Gemäß Fig. 1 kann dem Inverter-Steuerventil 15 über einen ersten Inverter-Eingang 17a über eine Druckleitung z.B. der Vorderachs-Betriebsbrems-Steuerdruck pSa, der vom Betriebsbremsventil 13 in Abhängigkeit der Betriebsbrems-Bremsvorgabe VB direkt ausgesteuert wird, zugeführt werden. Im Inverter-Steuerventil 15 wird dieser luftmengenverstärkt und anschließend als Inverter-Steuerdruck pl an den Inverter-Ausgang 16 ausgegeben, wobei die Luftmengenverstärkung mit dem Druckmittel aus dem Parkbrems-Druckmittelvorrat 5c erfolgt, der dem Inverter-Steuerventil 15 ebenfalls zugeführt wird. Der im Inverter-Steuerventil 15 erzeugte Inverter-Steuerdruck pl kann über den Inverter-Ausgang 16 als Anhänger-Steuerdruck pT an einen möglicherweise angehängten Anhänger 200 ausgegeben werden, um auch diesen in Abhängigkeit der Betriebsbrems-Bremsvorgabe VB vom Fahrer abzubremsen.

Weiterhin kann eine elektrische Vorgabe der Betriebsbrems-Bremsvorgabe VB an das Inverter-Steuerventil 15 über einen zweiten Inverter-Eingang 17b erfolgen, wobei die elektrische Bremsvorgabe gemäß dieser Ausführungsform über ein von dem Betriebsbrems-Steuermodul 10 ausgegebenes erstes Inverter-Steuersignal ST1 erfolgt, das in Abhängigkeit der Fahrzeug-Soll-Verzögerung zSoll gebildet ist. Über den zweiten Inverter-Eingang 17b wird das erste Inverter-Steuersignal ST1 direkt an ein Vorsteuermodul 29 im Inverter-Steuerventil 15 übertragen und dieses in Abhängigkeit des ersten Inverter-Steuersignals ST1 derartig angesteuert, dass durch Öffnen und Schließen von Druckventilen im Vorsteuermodul 29 mit dem Druckmittel aus dem Parkbrems-Druckmittelvorrat 5c ein der Betriebsbrems-Bremsvorgabe VB entsprechender Druck erzeugt wird, der als Inverter-Steuerdruck pl am Inverter-Ausgang 16 ausgegeben wird. Somit kann eine vom Betriebsbrems-Steuermodul 10 elektrisch verarbeitete Betriebsbrems-Bremsvorgabe VB über das Inverter-Steuerventil 15 auch an einen möglicherweise angehängten Anhänger 200 übergeben werden.

Ein dritter Inverter-Eingang 17c am Inverter-Steuerventil 15 ist über eine Druckleitung mit einem Parkbrems-Steuermodul 18 verbunden, das im Parkbremskreis 7 beispielsweise in Abhängigkeit einer vom Fahrer manuell über eine Parkbrems-Betätigungseinrichtung 19 vorgegebenen Parkbrems-Bremsvorgabe VP einen Parkbrems-Bremsdruck pPH erzeugt und diesen oder einen im Parkbrems-Steuermodul 18 intern erzeugten Steuerdruck, in Abhängigkeit dessen der Parkbrems-Bremsdruck pPH erzeugt wird, an die Federspeicherbremsen 8 ausgibt, so dass über die Federspeicherbremsen 8 eine bestimmte Bremswirkung an der Hinterachse 6b erzielt werden kann. Dazu wird gemäß Fig. 1 bei Vorliegen einer Parkbrems-Bremsvorgabe VP von der Parkbrems-Betätigungseinrichtung 19 auf elektronischem Wege ein Parkbrems-Betätigungssignal S2 an das Parkbrems-Steuermodul 18 ausgegeben. Im Rahmen dieser Parkbremsung ist hierbei lediglich ein vollständiges Öffnen oder Zuspannen der Federspeicherbremsen 8 vorgesehen. Beispielhaft ist ein derartiges Parkbrems-Steuermodul 18 in DE 10 2015 008 377 A1 beschrieben, deren Inhalt hiermit durch Bezugnahme im vollen Umfang eingeschlossen ist.

Weiterhin kann auch die automatisiert vorgegebene Assistenz-Bremsvorgabe VA über den CAN-Bus 20 bzw. das Assistenz-Steuersignal SAss an das Parkbrems-Steuermodul 18 übertragen und von diesem auch umgesetzt werden, beispielsweise im Rahmen einer automatisiert vorgegebenen Hilfsbremsfunktion oder einer automatisiert vorgegebenen Notbremsfunktion oder einer automatisiert vorgegebenen Parkbremsfunktion. Dazu wird der Parkbrems-Bremsdruck pPH von dem Parkbrems-Steuermodul 18 in Abhängigkeit dieser automatisiert vorgegebenen Assistenz-Bremsvorgabe VP erzeugt und an die Federspeicherbremsen 8 ausgesteuert, um auch während der Fahrt eine unterstützende Bremsung oder im Stillstand ein Abstellen über den Parkbremskreis 7 und die Federspeicherbremsen 8 bewirken zu können. Im Rahmen dessen ist auch eine abgestufte Bremsung im Parkbremskreis 7 möglich.

Der dem Inverter-Steuerventil 15 über den dritten Inverter-Eingang 17c zugeleitete Parkbrems-Bremsdruck pPH - oder ein damit zusammenhängender Druck - wird im Inverter-Steuerventil 15 über ein in Fig. 1 lediglich schematisch dargestelltes inverses Relaisventil 26 invertiert und als Inverter-Steuerdruck pl an den Inverter-Ausgang 16 ausgegeben. Die Invertierung des Parkbrems-Bremsdruckes pPH ist hierbei vorgesehen, um mit dem Inverter-Steuerdruck pl auch Betriebsbremsen ansteuern zu können, die bei hohen Betriebsbrems-Bremsdrücken pBa, pBb zuspannen und bei niedrigen Betriebsbrems-Bremsdrücken pBa, pBb öffnen. Der Parkbrems-Bremsdruck pPH hingegen wird unter Berücksichtigung davon ausgegeben, dass die Federspeicherbremsen 8 im Parkbremskreis 7 bei niedrigen Parkbrems-Bremsdrücken pPH zuspannen und bei hohen Parkbrems-Bremsdrücken pPH öffnen.

Eine derartige Invertierungsfunktion über ein inverses Relaisventil 26 im Inverter-Steuerventil 15 ist in herkömmlichen Anhängersteuerventilen 15a bereits vorhanden, die dafür vorgesehen sind, einen am Fahrzeug 200 angehängten Anhänger 200 mit Betriebsbremsen über einen im Parkbremskreis 7 ausgesteuerten Parkbrems-Bremsdruck pPH abzubremsen und demnach in einer Parksituation, einer Hilfsbremssituation oder einer Notbremssituation auch den Anhänger 200 gemäß der Parkbrems-Bremsvorgabe VP oder der Assistenz-Bremsvorgabe VA gezielt einzubremsen. Der Inverter-Ausgang 16 entspricht demnach dem "gelben Kupplungskopf" eines herkömmlichen Anhängersteuerventils 15a. Ein zusätzlicher Vorratsdruck-Ausgang 16V am Anhänger-Steuerventil 15a dient hierbei dem Übertragen des Druckmittels aus dem Parkbrems-Druckmittelvorrat 5c an den Anhänger 200, wobei der Vorratsdruck-Ausgang 16V dem "roten Kupplungskopf" eines herkömmlichen Anhängersteuerventils 15a entspricht. Demnach kann das Inverter-Steuerventil 15 vorteilhafterweise auch als herkömmliches Anhängersteuerventil 15a ausgeführt sein.

Das Parkbrems-Steuermodul 18 ist mit einer zweiten Energiequelle 11b verbunden, die von der ersten Energiequelle 11a unabhängig ist, so dass die Betriebsbremskreise 2a, 2b und der Parkbremskreis 7 energetisch unabhängig voneinander betrieben werden. Bei einem Ausfall der ersten Energiequelle 11a können somit zumindest die Assistenz-Bremsvorgabe VA und die Parkbrems-Bremsvorgabe VP über den Parkbremskreis 7 und das Inverter-Steuerventil 15 vorgegeben und ausgesteuert werden. Die Unabhängigkeit der Energiequellen 11a, 11b kann dabei entweder dadurch gewährleistet werden, dass voneinander getrennte Energiequellen 11a, 11b eingesetzt werden oder aber eine galvanische Trennung zwischen den Energiequellen 11a, 11b stattfindet.

Der beschriebene Aufbau des elektronischen Bremssystems 1 gemäß Fig. 1 erlaubt allerdings bei einem Ausfall der ersten Energiequelle 11a oder der elektrischen Komponenten der Betriebsbremskreise 2a, 2b, d.h. für den Fall, dass keine Aussteuerung eines Betriebsbrems-Bremsdruckes pBa, pBb gemäß der elektrischen Vorgabe Sa, Sb bzw. durch das Betriebsbrems-Steuermodul 10 und durch die Druckmodulatoren 9a, 9b mehr möglich ist, auch eine Umsetzung der Betriebsbrems-Bremsvorgabe VB wie folgt, um den Ausfall der Betriebsbremskreise 2a, 2b zu kompensieren:
Wie bereits beschrieben, kann in der ersten Rückfallebene eine vom Fahrer pneumatisch über das Betriebsbremsventil 13 vorgegebene Betriebsbrems-Bremsvorgabe VB durch eine entsprechende Umschaltung des Vorderachs-Umschaltventils 14a in die erste Umschaltventil-Schaltstellung X1 an den pneumatischen Vorderachs-Redundanzanschluss 12a des Vorderachs-Druckmodulators 9a und weiterhin auch direkt an den pneumatischen Hinterachs-Redundanzanschluss 12b des Hinterachs-Druckmodulators 9b vorgegeben werden. Damit kann bei einem elektrischen Ausfall dennoch die vom Fahrer vorgegebene Betriebsbrems-Bremsvorgabe VB über die Betriebsbremsen 3 an beiden Fahrzeugachsen 6a, 6b redundant bewirkt werden.

In einer zweiten Rückfallebene, die dann eingreift, wenn der Fahrer bei einem elektrischen Ausfall der Betriebsbremskreise 2a, 2b nicht zur Verfügung steht, da er z.B. unaufmerksam ist oder sich im Falle von höher automatisierten Fahrmanövern nicht am Platz befindet, kann auch die automatisiert vorgegebene Assistenz-Bremsvorgabe VA durch die Betriebsbremsen 3 an zumindest einer Fahrzeugachse 6a, 6b umgesetzt werden. Dieser Fall kann beispielsweise bei einer automatisiert gesteuerten Fahrt des Fahrzeuges 100 auftreten, bei der die Assistenz-Bremsvorgabe VA beispielsweise in Form der Fahrzeug-Soll-Verzögerung über den CAN-Bus 20 von dem Assistenz-Steuermodul 35 vorgegeben wird.

Das automatisierte Eingreifen erfolgt dann dadurch, dass bei Erkennen eines elektrischen Ausfalls, beispielsweise in der ersten Energiequelle 11a oder dem Betriebsbrems-Steuermodul 10 oder den Druckmodulatoren 9a, 9b, die automatisiert vorgegebene Assistenz-Bremsvorgabe VA, die über die Betriebsbremskreise 2a, 2b bewirkt werden soll, statt von dem Betriebsbrems-Steuermodul 10 von dem Parkbrems-Steuermodul 18 verarbeitet wird. D.h. die über das Assistenz-Steuersignal SAss übertragene Assistenz-Bremsvorgabe VA bzw. die Fahrzeug-Soll-Verzögerung zSoll wird nicht mehr wie im Normalbetrieb von dem Betriebsbrems-Steuermodul 10 verarbeitet und darüber von den Betriebsbremsen 3 in den Betriebsbremskreisen 2a, 2b umgesetzt. Der elektrische Ausfall kann hierbei beispielsweise im Rahmen einer Selbstdiagnose durch das Betriebsbrems-Steuermodul 10 erkannt und in entsprechender Weise, z.B. über ein Diagnose-Signal SD oder eine entsprechende Botschaft auf dem CAN-Bus 20, an das Parkbrems-Steuermodul 18 gemeldet werden.

Das Parkbrems-Steuermodul 18 erzeugt in Abhängigkeit des Assistenz-Steuersignals SAss bzw. der vorgegebenen Fahrzeug-Soll-Verzögerung zSoll den Parkbrems-Bremsdruck pPH und gibt diesen über den dritten Inverter-Eingang 17c an das Inverter-Steuerventil 15 vor. Weiterhin werden auch die Federspeicherbremsen 8 mit diesem Parkbrems-Bremsdruck pPH beaufschlagt, so dass im Redundanzfall die Hinterachse 6b in Abhängigkeit der automatisierten Assistenz-Bremsvorgabe VA gebremst wird. Im Inverter-Steuerventil 15 wird der Parkbrems-Bremsdruck pPH über das inverse Relaisventil 26 invertiert sowie ggf. luftmengenverstärkt und über den Inverter-Ausgang 16 als Inverter-Steuerdruck pl ausgegeben. Der Inverter-Steuerdruck pl wird über die Redundanz-Druckleitung 21 an den zweiten Vorderachs-Umschaltventil-Eingang 14a2 des Vorderachs-Umschaltventils 14a geleitet und als Anhänger-Steuerdruck pT an einen möglicherweise angehängten Anhänger 200. In der zweiten Umschaltventil-Schaltstellung X2 des Vorderachs-Umschaltventils 14a kann der Inverter-Steuerdruck pl somit als Vorderachs-Redundanzdruck pRa an den pneumatischen Vorderachs-Redundanzanschluss 12a geleitet und darüber - auch ohne Vorliegen einer Fahreranforderung - die automatisiert vorgegebene Assistenz-Bremsvorgabe VA redundant an der Vorderachse 6a über die Betriebsbremsen 3 bewirkt werden. Auch hierzu ist die Invertierung im Inverter-Steuerventil 15 über das inverse Relaisventil 26 erforderlich, da im Vorderachs-Betriebsbremskreis 2a im Gegensatz zum Parkbremskreis 7 Betriebsbremsen 3 angesteuert werden.

Somit ist in der zweiten Rückfallebene auch die Umsetzung einer automatisiert vorgegebenen Assistenz-Bremsvorgabe VA an beiden Fahrzeugachsen 6a, 6b möglich, wobei die Vorderachse 6a über die Betriebsbremsen 3 und die Hinterachse 6b über die Federspeicherbremsen 8 abgebremst wird. In dieser zweiten Rückfallebene übernimmt das Parkbrems-Steuermodul 18 dabei die Umsetzung der automatisiert vorgegebenen Bremsung, wobei der aus der Assistenz-Bremsvorgabe VA folgende Parkbrems-Bremsdruck pPH über das Inverter-Steuerventil 15 an die Vorderachse 6a umgeleitet wird.

Um auf die beiden beschriebenen Rückfallebenen zurückgreifen zu können, ist eine entsprechende Umschaltung des Vorderachs-Umschaltventils 14a nötig. Gemäß den Fig. 2a und 2b kann das Vorderachs-Umschaltventil 14a dazu als ein Wechselventil 40a (Fig. 2a) oder als ein 3/2-Wegeventil 40b (Fig. 2b) ausgeführt sein. Beide Ventile 40a, 40b weisen jeweils zwei Vorderachs-Umschaltventil-Eingänge 14a1, 14a2 sowie einen Vorderachs-Umschaltventil-Ausgang 14a3 auf, die wie beschrieben druckleitend zu den entsprechenden Komponenten des Vorderachs-Bremskreises 2a des Bremssystems 1 geführt sind. Die Funktionsweise der dargestellten Ventile 40a, 40b unterscheidet sich wie folgt:
Das Wechselventil 40a, auch als "Select-High-Ventil" bezeichnet, leitet den jeweils höheren der an den beiden Vorderachs-Umschaltventil-Eingängen 14a1, 14a2 anliegenden Druck an den Vorderachs-Umschaltventil-Ausgang 14a3 durch. In der Ausführung gemäß Fig. 1 wird also entweder der vom Betriebsbremsventil 13 ausgegebene Vorderachs-Betriebsbrems-Steuerdruck pSa oder der vom Inverter-Steuerventil 15 ausgegebene Inverter-Steuerdruck pl als Vorderachs-Redundanzdruck pRa an den pneumatischen Vorderachs-Redundanzanschluss 12a des Vorderachs-Druckmodulators 9a geleitet, je nachdem, welcher der beiden Drücke pSa, pl der Höhere ist.

Liegt eine manuell vorgegebene Betriebsbrems-Bremsvorgabe VB vom Fahrer über das Betriebsbremsventil 13 vor und führt diese Betriebsbrems-Bremsvorgabe VB zu einem höheren ausgesteuerten Druckwert für den Vorderachs-Betriebsbrems-Steuerdruck pSa als der vom Parkbrems-Steuermodul 18 ausgesteuerte Parkbrems-Bremsdruck pPH, der aufgrund einer über das Assistenz-Steuersignal SAss automatisiert angeforderten Assistent-Bremsvorgabe VA ausgesteuert und als Inverter-Steuerdruck pl an das Wechselventil 40a geleitet wird, wird das Wechselventil 40a automatisch in die erste Umschaltventil-Schaltstellung X1 geschaltet und an der Vorderachse 6a wird über die Betriebsbremsen 3 die manuell vorgegebene Betriebsbrems-Bremsvorgabe VB umgesetzt. Ist der Fahrer jedoch unaufmerksam oder nicht am Platz oder greift nicht manuell in die Bremsung ein und wird eine automatisierte Bremsung über das Assistenz-Steuersignal SAss angefordert, ist demnach der Vorderachs-Betriebsbrems-Steuerdruck pSa immer geringer als der Parkbrems-Bremsdruck pPH bzw. der Inverter-Steuerdruck pl, so dass das Wechselventil 40a automatisch in die zweite Umschaltventil-Schaltstellung X2 übergeht und über die Betriebsbremsen 3 an der Vorderachse 3 die automatisiert vorgegebene Assistenz-Bremsvorgabe VA umgesetzt wird.

Gemäß Fig. 2b ist das Vorderachs-Umschaltventil 14a als ein 3/2-Wegeventil 40b ausgeführt, das elektrisch über ein Umschaltsignal SU gesteuert in die jeweilige Umschaltventil-Schaltstellung X1, X2 gebracht werden kann und somit entweder der erste Vorderachs-Umschaltventil-Eingang 14a1 (X1) oder der zweiten Vorderachs-Umschaltventil-Eingang 14a2 (X2) mit dem Vorderachs-Umschaltventil-Ausgang 14a3 verbunden wird. Das Umschaltsignal SU kann beispielsweise von dem Parkbrems-Steuermodul 18 erzeugt und ausgegeben werden, um die Umschaltventil-Schaltstellung X1, X2 elektrisch vorzugeben.

Gemäß einer Ausführungsform, die in Fig. 2c dargestellt ist, kann vorgesehen sein, z.B. im Inverter-Steuerventil 15 - ggf. auch direkt am Betriebsbremsventil 13 - einen Drucksensor 31 anzuordnen, der den dem ersten Inverter-Eingang 17a vorgegebenen Vorderachs-Betriebsbrems-Steuerdruck pSa misst und demnach feststellt, ob eine Betriebsbrems-Bremsvorgabe VB durch den Fahrer vorliegt. Der Drucksensor 31 gibt ein Bremswunsch-Signal S3 beispielsweise an das Parkbrems-Steuermodul 18 zur Verarbeitung aus und das Parkbrems-Steuermodul 18 gibt daraufhin ein entsprechendes Umschaltsignal SU aus, das das 3/2-Wegeventil 40b in die erste Schaltstellung X1 umschaltet, wenn über das Bremswunsch-Signal S3 eine vorliegende Betriebsbrems-Bremsvorgabe VB gemeldet wird, so dass die durch das Betriebsbremsventil 13 pneumatisch vorgegebene Betriebsbrems-Bremsvorgabe VB vom 3/2-Wegeventil 40b an den Vorderachs-Redundanzanschluss 12a geleitet und vom Vorderachs-Druckmodulator 9a in einen entsprechenden Vorderachs-Betriebsbrems-Bremsdruck pBa umgesetzt wird.

Mit den in den Fig. 2a, 2b, 2c angegebenen Umschaltventilen 40a, 40b kann also in dem Bremssystem 1 gemäß Fig. 1 automatisiert oder aktiv gesteuert vorgegeben werden, welcher Vorderachs-Redundanzdruck pRa am pneumatischen Vorderachs-Redundanzanschluss 12a anliegt und demnach welche redundante Bremswirkung an der Vorderachse 6a über die Betriebsbremsen 3 umgesetzt werden soll, die Betriebsbrems-Bremsvorgabe VB oder die automatisiert vorgegebene Assistenz-Bremsvorgabe VA.

Das Wechselventil 40a hat hierbei den Vorteil, dass der Fahrer in jeder Situation automatisch die über das Inverter-Steuerventil 15 automatisiert vorgegebene Assistenz-Bremsvorgabe VA übersteuern kann, so dass der Betriebsbrems-Bremsvorgabe VB, d.h. einer vom Fahrer angeforderten Bremsung, immer eine höhere Priorität eingeräumt werden kann gegenüber einer automatisiert angeforderten Bremsung, falls der Fahrer eine stärkere Bremsung anfordert. Diese höhere Priorität kann auch in dem in Fig. 2c dargestellten Ausführungsbeispiel mit einem aktiv gesteuerten 3/2-Wegeventil 40b eingeräumt werden, indem bei Vorliegen einer Fahrerbremsung, die z.B. über den Drucksensor 31 erfasst wird, über das Umschaltsignal SU eine Umschaltung in die erste Umschaltventil-Schaltstellung X1 stattfindet. Allerdings findet eine solche Umschaltung mit dem 3/2 Wegeventil 40b lediglich dann statt, wenn nicht zum jeweiligen Zeitpunkt bereits in der zweiten Umschaltventil-Schaltstellung X2 eine insbesondere stärkere Bremsung umsetzt wird. Um durch die Umschaltung keinen unsicheren Fahrzustand oder eine anderweitig gefährliche Situation zu verursachen, wird die andere Bremsung zunächst kontrolliert beendet und anschließend erst in die erste Umschaltventil-Schaltstellung X1 umgeschaltet.

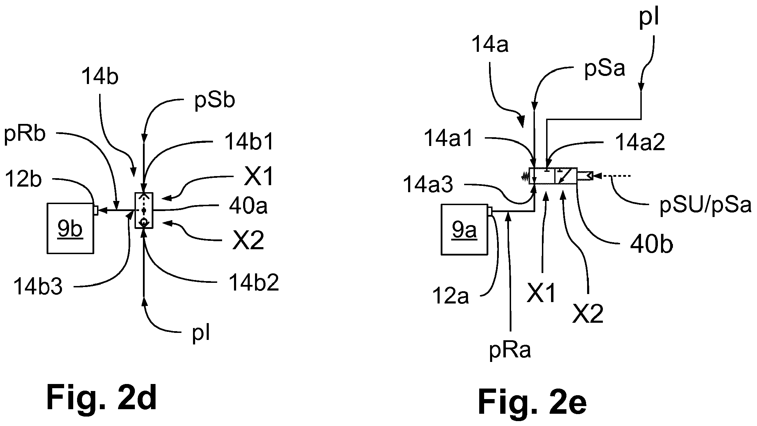

Grundsätzlich ist ein derartiges Umschaltventil 40a, 40b - wie in Fig. 2d stellvertretend für das Wechselventil 40a dargestellt - auch an der Hinterachse 6b bzw. dem pneumatischen Hinterachs-Redundanzanschluss 12b vorgelagert möglich, um auch den Hinterachs-Redundanzdruck pRb fahrerwunschabhängig VB oder gemäß der Assistenz-Bremsvorgabe VA festzulegen, wenn ein elektrischer Ausfall vorliegt. Demnach ist ein Hinterachs-Umschaltventil 14b mit einem ersten Hinterachs-Umschaltventil-Eingang 14b1 und einem zweiten Hinterachs-Umschaltventil-Eingang 14b2 vorgesehen, die je nach Umschaltventil-Schaltstellung X1, X2 den Hinterachs-Betriebsbrems-Steuerdruck pSb oder den Inverter-Steuerdruck pl an einen Hinterachs-Umschaltventil-Ausgang 14b3 leiten.

Die konstruktive Ausgestaltung im elektrisch gesteuerten Bremssystem 1 ist in dem Fall vergleichbar zu einer Anordnung an der Vorderachse 6a, so dass die redundante Ansteuerung über das Hinterachs-Umschaltventil 14b in analoger Weise erfolgen kann. Bei Verwendung eines Hinterachs-Umschaltventils 14b ist lediglich dafür zu sorgen, dass in den jeweiligen Rückfallebenen von dem Parkbrems-Steuermodul 18 die Federspeicherbremsen 8 nicht gleichzeitig mit den Betriebsbremsen 3 an der Hinterachse 6b zugespannt werden, um keine überlagerte Bremswirkung an der Hinterachse 6b durch das gleichzeitige Betätigen beider Bremsen 3, 8 an der Hinterachse 6b zu bewirken. Dies kann beispielsweise durch eine entsprechende Steuerung und Regelung in dem Parkbrems-Steuermodul 18 erfolgen, indem beispielsweise eine Ausgabe des Parkbrems-Bremsdruckes pPH an die Federspeicherbremsen 8 verhindert wird, wenn ein elektrischer Ausfall in den Betriebsbremskreisen 2a, 2b vorliegt und eine redundante Ansteuerung der Betriebsbremsen 3 an der Hinterachse 6b über das Inverter-Steuerventil 15 erfolgen soll.

Gemäß Fig. 2e ist beispielhaft als Vorderachs-Umschaltventil 14a ein pneumatisch steuerbares 3/2-Wegeventil 40b dargestellt. Diesem kann pneumatisch ein Umschalt-Steuerdruck pSU zugeführt werden, der hier durch den Vorderachs-Betriebsbrems-Steuerdruck pSa oder einem dazu proportionalen Druck gegeben ist. In Abhängigkeit der Höhe des Umschalt-Steuerdruckes pSU kann die erste Umschaltventil-Schaltstellung X1 eingestellt werden, den Fahrerwunsch als redundanten Bremswunsch an den jeweiligen Betriebsbremskreis 2a, 2b auszugeben.

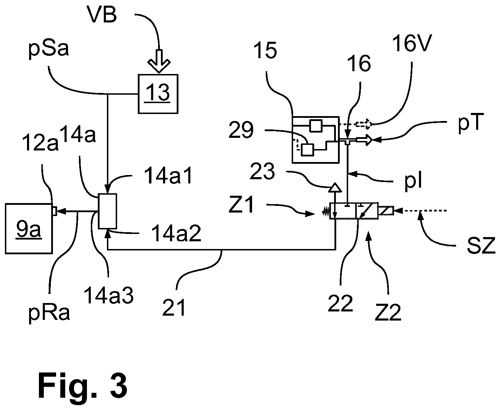

Gemäß Fig. 3 ist eine weitere Ausführungsform des Bremssystems 1 dargestellt, wobei zusätzlich ein Abschaltventil 22 vorgesehen ist, das in der Redundanz-Druckleitung 21 zwischen dem Inverter-Steuerventil 15 bzw. dem Inverter-Ausgang 16 und dem Vorderachs-Umschaltventil 14a angeordnet ist. Der Übersichtlichkeit halber ist lediglich der relevante Teil aus dem Bremssystem 1 dargestellt, um die Funktion des zusätzlichen Abschaltventils 22 zu verdeutlichen. Alle weiteren Komponenten des Bremssystems 1 sind identisch mit der in Fig. 1 gezeigten Ausführungsform.

Das Abschaltventil 22 ist als ein elektrisch steuerbares 3/2-Wegeventil ausgeführt, das in Abhängigkeit eines Abschaltsignals SZ zwischen zwei Abschaltventil-Schaltstellungen Z1, Z2 umgeschaltet werden kann. In einer ersten Abschaltventil-Schaltstellung Z1 ist die Redundanz-Druckleitung 21 mit einem Entlüftungsanschluss 23 verbunden, so dass der Inverter-Steuerdruck pl vom Inverter-Steuerventil 15 nicht an das Vorderachs-Umschaltventil 14a übertragen wird. Der zweite Vorderachs-Umschaltventil-Eingang 14a2 ist demnach drucklos. Bei Umschalten des Vorderachs-Umschaltventils 14a in die zweite Umschaltventil-Schaltstellung X2 bleiben die Betriebsbremsen 3 an der Vorderachse 6a somit ebenfalls drucklos und werden somit nicht zugespannt. Ein redundantes Umsetzen einer automatisiert vorgegebenen Assistenz-Bremsvorgabe VA über die Betriebsbremsen 3 der Vorderachse 6a in der zweiten Rückfallebene ist somit bei eingestellter erster Abschaltventil-Schaltstellung Z1 nicht möglich.

In einer zweiten Abschaltventil-Schaltstellung Z2 des Abschaltventils 22 wird die Redundanz-Druckleitung 21 mit dem Inverter-Ausgang 16 druckleitend verbunden, so dass - wie in dem Bremssystem 1 gemäß Fig. 1 - ein redundanter Betrieb gemäß obiger Beschreibung erfolgen kann, in dem der Inverter-Steuerdruck pl gemäß der Assistenz-Bremsvorgabe VA in der zweiten Rückfallebene auch an das Vorderachs-Umschaltventil 14a geleitet wird.

Die jeweilige Abschaltventil-Schaltstellung Z1, Z2 wird hierbei von dem Parkbrems-Steuermodul 18 über das Abschaltsignal SZ vorgegeben, so dass vorgegeben werden kann, ob und wann in der zweiten Rückfallebene redundant eingegriffen werden soll. Die Abschaltfunktion kann beispielsweise dann vorteilhaft sein, wenn das Fahrzeug 100 für einen längeren Zeitraum abgestellt wird und demnach ein Abbremsen des Fahrzeuges 100 über die Vorderachse 6a nicht zwingend nötig ist, da das Fahrzeug 100 bereits über die Federspeicherbremsen 8 sowie ggf. den Anhänger 200 im Stillstand gehalten wird. Durch ein Umschalten in die erste Abschaltventil-Schaltstellung Z1 in einer derartigen Situation kann beispielsweise verhindert werden, dass bei möglichen Leckagen in den Betriebsbremsen 3 das Druckmittel entweichen kann, wenn diese im Stillstand dauerhaft mit einem Betriebsbrems-Bremsdruck pBa, pBb zugespannt werden.

Ist das Umschaltventil 14a in Fig. 3 als 3/2-Wegeventil 40b ausgeführt, kann die Abschaltfunktion auch bereits durch das Umschaltventil 14a umgesetzt werden, indem im Stillstand bzw. bei dauerhaftem Abstellen die erste Umschaltventil-Schaltstellung X1 eingestellt wird, die in dem Fall der ersten Abschaltventil-Schaltstellung Z1 entspricht. Ohne eine Fahrerbetätigung wird der erste Umschaltventil-Eingang 14a1 demnach über das Betriebsbremsventil 13 quasi entlüftet, was in Fig. 3 dem Verbinden der Redundanz-Druckleitung 21 mit dem Entlüftungsanschluss 23 entspricht. Somit kann in einer derartigen Ausführungsform die Abschaltfunktion ohne ein zusätzliches Ventil lediglich mit dem 3/2-Wegeventil 40b als Umschaltventil 14a erfolgen.

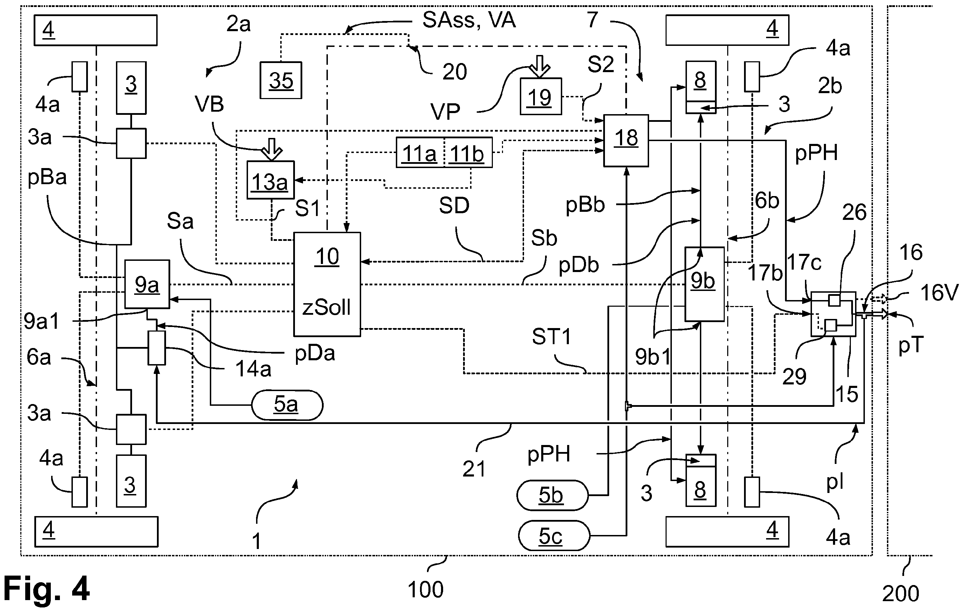

Gemäß Fig. 4 ist eine weitere Ausführungsform des elektronisch steuerbaren Bremssystems 1 dargestellt, wobei im Unterschied zu der Ausführungsform in Fig. 1 die Druckmodulatoren 9a, 9b keinen pneumatischen Redundanzanschluss 12a, 12b aufweisen, d. h. es findet eine rein elektrisch gesteuerte Ausgabe eines Druckmodulator-Ausgangsdruckes pDa, pDb durch die Druckmodulatoren 9a, 9b an die jeweiligen Betriebsbremsen 3 statt. Es kann also keine Rückfallebene dadurch ausgebildet werden, dass dem jeweiligen Druckmodulator 9a, 9b bei einem elektrischen Ausfall ein Redundanzdruck pRa, pRb zugeführt wird. Demnach wird von der in dem Fall rein elektrisch ausgeführten Betriebsbrems-Bremsvorrichtung 13a auch kein Betriebsbrems-Steuerdruck pSa, pSb an die jeweilige Fahrzeugachse 6a, 6b ausgegeben und die Betriebsbrems-Bremsvorgabe VB wird von der elektrischen Betriebsbrems-Bremsvorrichtung 13a rein elektrisch über das Betriebsbrems-Betätigungssignal S1 übertragen. Weiterhin wird auch der erste Inverter-Eingang 17a am Inverter-Steuerventil 15 nicht mehr mit dem Vorderachs-Betriebsbrems-Steuerdruck pSa bedient.

Um bei einem elektrischen Ausfall dennoch eine Bremsung über die Betriebsbremsen 3 zu ermöglichen, ist vorgesehen, das Vorderachs-Umschaltventil 14a im Druckpfad hinter dem Vorderachs-Druckmodulator-Ausgang 9a1 des Vorderachs-Druckmodulators 9a anzuordnen. Der erste Vorderachs-Umschaltventil-Eingang 14a1 des Vorderachs-Umschaltventils 14a ist demnach mit dem Vorderachs-Druckmodulator-Ausgang 9a1 verbunden, so dass der vom Vorderachs-Druckmodulator 9a ausgegebene Vorderachs-Druckmodulator-Ausgangsdruck pDa dem ersten Vorderachs-Umschaltventil-Eingang 14a1 zugeführt wird. Am zweiten Vorderachs-Umschaltventil-Eingang 14a2 liegt wie in der Ausführungsform gemäß Fig. 1 der Inverter-Steuerdruck pl über die Redundanz-Druckleitung 21 an.

Somit wird das Bremssystem 1 gemäß der vorherigen Ausführungsform derartig abgeändert, dass im Redundanzfall der von dem Inverter-Steuerventil 15 ausgegebene Inverter-Steuerdruck pl in der zweiten Umschaltventil-Schaltstellung X2 nicht vor dem Vorderachs-Druckmodulator 9a in den Vorderachs-Betriebsbremskreis 2a eingespeist wird sondern dahinter. Der Inverter-Steuerdruck pl wird somit in der zweiten Umschaltventil-Schaltstellung X2 direkt als Vorderachs-Betriebsbremsdruck pBa verwendet. Um den Betriebsbremsen 3 der Vorderachse 6a in diesem Fall eine angemessene Luftmenge vorzugeben, kann ergänzend eine zusätzliche Luftmengenverstärkung des Inverter-Steuerdruckes pl vorgesehen sein, z.B. über ein zusätzliches Relaisventil (nicht dargestellt) in der Redundanz-Druckleitung 21.

In der ersten Umschaltventil-Schaltstellung X1, die im Normalbetrieb eingestellt wird, wird gemäß Fig. 4 der Vorderachs-Druckmodulator-Ausgangsdruck pDa als Vorderachs-Betriebsbremsdruck pBa verwendet, d.h. es findet eine von dem Betriebsbrems-Steuermodul 10 gesteuerte Bremsung gemäß der Betriebsbrems-Bremsvorgabe VB oder gemäß einer automatisiert an das Betriebsbrems-Steuermodul 10 vorgegebenen Assistenz-Bremsvorgabe VA statt. Somit ist die erste Umschaltventil-Schaltstellung X1 standardmäßig eingestellt und bei einem elektrischen Ausfall in den Betriebsbremskreisen 2a, 2b wird auf die zweite Umschaltventil-Schaltstellung X2 umgestellt.

Die erste Rückfallebene, die in der Ausführungsform gemäß Fig. 1 bei einem elektronischen Ausfall der ersten Energiequelle 11a dadurch bewirkt wird, dass manuell gesteuert vom Fahrer über das Betriebsbremsventil 13 und über das Vorderachs-Umschaltventil 14a in der ersten Umschaltventil-Schaltstellung X1 ein Betriebsbrems-Steuerdruck pSa an den pneumatischen Vorderachs-Redundanzanschluss 12a ausgegeben wird, fällt in diesem Ausführungsbeispiel gemäß Fig. 4 weg, da keine pneumatisch gesteuerte Redundanz in den Druckmodulatoren 9a, 9b vorhanden ist.

Ein redundanter Fahrereingriff an der Vorderachse 6a über die Betriebsbremsen 3 kann in diesem Ausführungsbeispiel allerdings dadurch erfolgen, dass der Fahrer manuell über die Parkbrems-Betätigungsrichtung 19 eine Parkbrems-Bremsvorgabe VP vorgibt und damit über den Parkbremskreis 7 während der Fahrt in die Bremsung eingreift. Über das Parkbrems-Steuermodul 18 wird diese Parkbrems-Bremsvorgabe VP an das Inverter-Steuerventil 15 und über die Redundanz-Druckleitung 21 an das Vorderachs-Umschaltventil 14a umgeleitet, wie bereits zu der Ausführung gemäß Fig. 1 beschrieben. Die Hinterachse 6b wird in dem Fall durch Vorgabe des Parkbrems-Bremsdruckes pPH an die Federspeicherbremsen 8 abgebremst, so dass bei einem elektrischen Ausfall der Betriebsbremskreise 2a, 2b weiterhin beide Fahrzeugachsen 6a, 6b abgebremst werden können.

Alternativ oder ergänzend kann das von der elektrischen Betriebsbrems-Bremsvorrichtung 13a ausgegebene Betriebsbrems-Betätigungssignal S1 - d.h. eine manuell vorgegebene Betriebsbrems-Bremsvorgabe VB - zusätzlich auch an das Parkbrems-Steuermodul 18 übertragen werden, z.B. über eine Direktverbindung oder über ein vom CAN-Bus 20 abweichendes, weiteres (Bus-)Netzwerk, so dass auch bei einer Betätigung der elektrischen Betriebsbrems-Bremsvorrichtung 13a über den Parkbremskreis 7 eine redundante Bremsung an der Vorderachse 6a bewirkt werden kann. Die elektrische Betriebsbrems-Bremsvorrichtung 13a ist dazu ebenfalls von der zweiten Energiequelle 11b redundant mit Energie zu versorgen, um eine Ausgabe der Betriebsbrems-Betätigungssignale S1 an das Parkbrems-Steuermodul 18 zu gewährleisten, wenn ein elektrischer Ausfall in den Betriebsbremskreisen 2a, 2b und dabei insbesondere in der ersten Energiequelle 11a vorliegt.

In dem Ausführungsbeispiel gemäß Fig. 4 entscheidet z.B. das Parkbrems-Steuermodul 18, ob die erste Rückfallebene (manuelle Parkbrems-Bremsvorgabe VP oder Betriebsbrems-Bremsvorgabe VB) oder die zweite Rückfallebene (Assistenz-Bremsvorgabe VA) eingreifen soll, beispielsweise in Abhängigkeit davon, ob der Fahrer-Bremsvorgabe VP, VP die höhere Priorität eingeräumt werden soll. Die zweite Rückfallebene, in der bei einem elektrischen Ausfall der Betriebsbremskreise 2a, 2b eine automatisiert angeforderte Assistenz-Bremsvorgabe VA über das Inverter-Steuerventil 15 an die Betriebsbremsen 3 der Vorderachse 6a umgeleitet wird, ist gemäß dieser Ausführungsform im Wesentlichen identisch zu den vorherigen Ausführungsformen. Lediglich die Position der Einspeisung des durch die automatisierte Assistenz-Bremsvorgabe VA vorgegebenen Inverter-Steuerdruckes pl hat sich - wie bereits beschrieben - verschoben.

Auch gemäß dieser Ausführungsform kann das Vorderachs-Umschaltventil 14a als Wechselventil 40a oder als 3/2-Wegeventil 40b, wie in den Fig. 2a oder 2b gezeigt, ausgeführt sein, um die Umschaltventil-Schaltstellung X1, X2 automatisch oder aktiv gesteuert umschalten zu können. Da in diesem Ausführungsbeispiel die Fahrer-Bremsvorgabe VB, VP über den Parkbremskreis 7 ausgesteuert wird, ist die Ausführung gemäß Fig. 2c, d.h. mit einem zusätzlichen Drucksensor 31, nicht erforderlich, da wie oben beschrieben im Parkbrems-Steuermodul 18 bereits erkannt und entschieden werden kann, ob eine manuell vorgegebene Fahrer-Bremsvorgabe VB, VP vorliegt und diese bevorzugt umgesetzt werden soll oder die Assistenz-Bremsvorgabe VA.

Weiterhin kann auch in Fig. 4 ergänzend an der Hinterachse 6b - wie in Fig. 2d angedeutet - ein Hinterachs-Umschaltventil 14b vorgesehen sein, um in analoger Weise wie an der Vorderachse 6a die Betriebsbremsen 3 an der Hinterachse 6b bei einem elektronischen Ausfall über den Parkbremskreis 7 ansteuern zu können. Auch das Abschaltventil 22 gemäß Fig. 3, das den Inverter-Steuerdruck pl in der Redundanz-Druckleitung 21 freigibt, kann in dieser Ausführungsform verwendet werden, um beispielsweise bei einem dauerhaften Abstellen des Fahrzeuges 100 ein Zuspannen der Betriebsbremsen 3 an der Vorderachse 6a zu vermeiden, falls dies gewünscht ist.

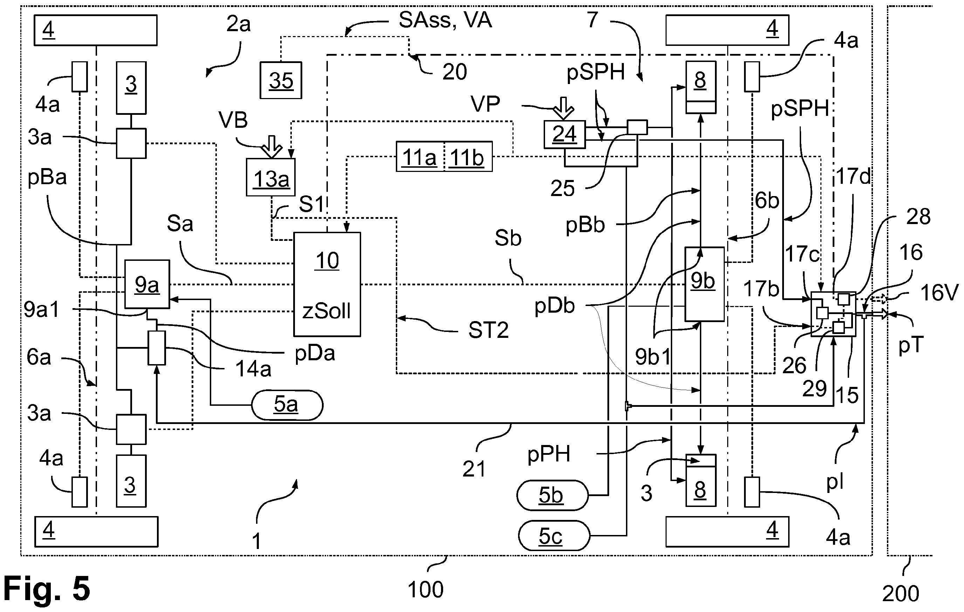

Gemäß Fig. 5 ist eine weitere Ausführungsform des elektrisch steuerbaren Bremssystems 1 dargestellt, wobei sich diese Ausführungsform von dem Bremssystem 1 gemäß Fig. 4 dadurch unterscheidet, dass der Parkbremskreis 7 nicht durch eine elektrisch gesteuerte Parkbremse ausgebildet wird sondern durch eine pneumatisch gesteuerte Parkbremse. Demnach ist in dieser Ausführungsform kein Parkbrems-Steuermodul 18 vorgesehen, das den Parkbrems-Bremsdruck pPH an das Inverter-Steuerventil 15 sowie die Federspeicherbremsen 8 vorgibt. Um in diesem Parkbremskreis 7 eine Bremsung bewirken zu können, ist vom Fahrer manuell eine Parkbrems-Bremsvorgabe VP über ein Parkbremsventil 24 vorzugeben, das einen der Parkbrems-Bremsvorgabe VP entsprechenden Parkbrems-Steuerdruck pSPH an ein Relaisventil 25 aussteuert. Das Relaisventil 25 sorgt für eine Luftmengenverstärkung und gibt diesen luftmengenverstärkten Parkbrems-Steuerdruck pSPH als Parkbrems-Bremsdruck pPH an die Federspeicherbremsen 8 aus, um an diesen eine entsprechende Bremsung zu bewirken.

Der vom Parkbremsventil 24 ausgegebene Parkbrems-Steuerdruck pSPH oder ein damit zusammenhängender Druck wird zudem an den dritten Inverter-Eingang 17c des Inverter-Ventils 15 übertragen, im Inverter-Steuerventil 15 durch das inverse Relaisventil 26 invertiert und über den Inverter-Ausgang 16 an den zweiten Vorderachs-Umschaltventil-Eingang 14a2 des Vorderachs-Umschaltventils 14a ausgesteuert, so dass wie im vorherigen Ausführungsbeispiel je nach Umschaltventil-Schaltstellung X1, X2 am Vorderachs-Umschaltventil-Ausgang 14a3 der entsprechende Vorderachs-Betriebsbrems-Bremsdruck pBa an die Betriebsbremsen 3 ausgegeben wird. Der Inverter-Steuerdruck pl kann wie beschrieben auch luftmengenverstärkt werden, um eine angemessene Luftmenge an die Betriebsbremsen 3 aussteuern zu können. Demnach kann der Fahrer manuell über das Parkbremsventil 24 in die Bremsung eingreifen, falls mindestens einer der Betriebsbremskreise 2a, 2b ausgefallen ist.

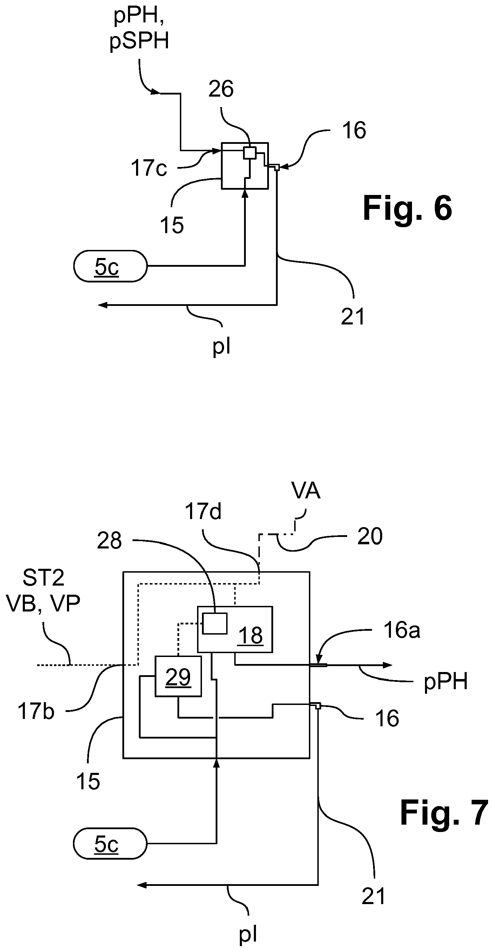

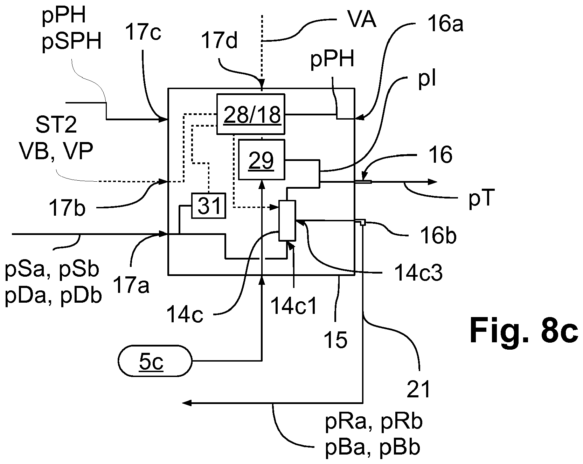

Eine Umsetzung der automatisiert angeforderten Assistenz-Bremsvorgabe VA, wenn das Betriebsbrems-Steuermodul 10 ausgefallen ist, kann in dem Bremssystem 1 gemäß Fig. 5 lediglich über das Inverter-Steuerventil 15 erfolgen, indem die Assistenz-Bremsvorgabe VA ausgehend vom CAN-Bus 20 an dieses übertragen wird und in dem Fall über eine entsprechende im Inverter-Steuerventil 15 integrierte Elektronik (vgl. Fig. 7 oder 8c), z.B. ein Inverter-Steuermodul 28, und das Vorsteuermodul 29 parallel zu der zu Fig. 1 beschriebenen Invertierung in einen Inverter-Steuerdruck pl umgesetzt wird. Die Betriebsbrems-Bremsvorgabe VB, die über die elektrische Betriebsbrems-Bremsvorrichtung 13a vorgegeben wird, kann bei einem elektrischen Ausfall umgesetzt werden, indem beispielsweise die Betriebsbrems-Bremsvorgabe VB über ein zweites Inverter-Steuersignal ST2 von der elektrischen Betriebsbrems-Bremsvorrichtung 13a an den zweiten Inverter-Eingang 17b übertragen wird - beispielsweise über ein (Bus-)Netzwerk oder eine Direktverbindung oder dgl. - um über die im Inverter-Steuerventil 15 integrierte Elektronik (vgl. Fig. 7 oder 8c), z. B. dem Inverter-Steuermodul 28, und das Vorsteuermodul 29 analog zur Assistenz-Bremsvorgabe VA den entsprechenden Inverter-Steuerdruck pl zu erzeugen. Die Übertragung des ersten Inverter-Steuersignals ST1 an den zweiten Inverter-Eingang 17b entfällt in diesem Fall. Um dies auch bei einem elektrischen Ausfall der Betriebsbremskreise 2a, 2b und ggf. auch der ersten Energiequelle 11a zu ermöglichen, sind das Betriebsbremsventil 13 und auch das Inverter-Steuerventil 15 redundant z.B. über die zweite Energiequelle 11b mit Energie zu versorgen.

Gemäß einer nicht dargestellten Ausführungsform kann das Bremssystem 1 gemäß Fig. 1 in analoger Weise wie in Fig. 5 statt der Parkbrems-Betätigungsvorrichtung 19 und dem Parkbrems-Steuermodul 18 das Parkbremsventil 24 aufweisen. D.h. in dem Bremssystem 1 gemäß Fig. 1 ist statt einer elektrischen Parkbremse eine pneumatische Parkbremse vorgesehen, die in analoger Weise wie zu Fig. 5 beschrieben auch für den redundanten Betrieb verwendet werden kann, wobei in dem Fall das jeweilige Umschaltventil 14a, 14b im Vergleich zu Fig. 5 an der jeweiligen Fahrzeugachse 6a, 6b vor den dann wieder vorhandenen Redundanzanschlüssen 12a, 12b angeordnet ist.

In allen beschriebenen Ausführungsformen wird somit erreicht, dass bei einem elektrischen Ausfall in mindestens einem der Betriebsbremskreise 2a, 2b, d.h. für den Fall, dass die Druckmodulatoren 9a, 9b nicht elektrisch vom Betriebsbrems-Steuermodul 10 gesteuert einen entsprechenden Betriebsbrems-Bremsdrucks pBa, pBb aussteuern können, mindestens eine Rückfallebene ausgebildet wird, in der die Betriebsbremsen 3 an der Vorderachse 6a und/oder an der Hinterachse 6b in Abhängigkeit einer im Parkbremskreis 7 vorliegenden manuell vorgegebenen Parkbrems-Bremsvorgabe VP oder automatisiert vorgegebenen Assistenz-Bremsvorgabe VA angesteuert werden. Ggf. kann dem Parkbremskreis 7 auch eine vom Betriebsbremsventil 13 ausgegebene Betriebsbrems-Bremsvorgabe VB vorliegen. Der der jeweiligen Bremsvorgabe VA, VB, VP entsprechende im Parkbremskreis 7 ausgesteuerte Parkbrems-Bremsdruck pPH (Fig. 1 bis 4) bzw. Parkbrems-Steuerdruck pSPH (Fig. 5) wird über das Inverter-Steuerventil 15 invertiert und an die Vorderachse 6a bzw. Hinterachse 6b umgeleitet, wobei die Invertierung dafür sorgt, dass im Bedarfsfall eine Bremsung über die Betriebsbremsen 3 zu in etwa derselben Bremswirkung führt wie eine Bremsung mit den Federspeicherbremsen 8 gemäß der vorgegebenen Bremsvorgabe VA, VB, VP.

Unter Umständen kann es auch sinnvoll sein, die Bremsvorgabe VA, VB, VP achsweise zu skalieren, d.h. der Parkbrems-Bremsdruck pPH ist gegenüber dem in Abhängigkeit davon erzeugten Betriebsbrems-Bremsdruck pBa, pBb um einen Faktor kleiner oder größer. Der vom Inverter-Steuerventil 15 bereitgestellte Inverter-Steuerdruck pl wird in allen Ausführungsbeispielen über das jeweilige Umschaltventil 14a, 14b an die jeweilige Fahrzeugachse 6a, 6b ausgegeben, um ein Umschalten zwischen dem Normalbetrieb und einer der Rückfallebenen oder einem Umschalten zwischen zwei Rückfallebenen zu ermöglichen und somit dem Fahrer in einem Bremssystem 1 gemäß beispielsweise Fig. 1 situationsbedingt die Möglichkeit zu geben, über das Betriebsbremsventil 13 bremsend einzugreifen, wobei ggf. eine bereits automatisiert durchgeführte Bremsung vorher kontrolliert beendet wird, um keinen unsicheren Fahrzustand oder eine anderweitig gefährliche Situation zu bewirken..

Das Inverter-Steuerventil 15 ist in den bisherigen Ausführungsformen im Wesentlichen wie ein Anhängersteuerventil 15a mit den entsprechenden Inverter-Eingängen 17a, 17b, 17c und dem Inverter-Ausgang 16, der dem "gelben Kupplungskopf" entspricht, sowie dem Vorratsdruck-Ausgang 16V, der dem "roten Kupplungskopf" entspricht, ausgeführt. Gemäß Fig. 6 kann aber in der einfachsten Variante auch vorgesehen sein, dass das Inverter-Steuerventil 15 lediglich aus einem inversen Relaisventil 26 besteht, dem über den dritten Inverter-Eingang 17c der Parkbrems-Bremsdruck pPH oder der Parkbrems-Steuerdruck pSPH wie oben beschrieben zugeführt wird. Das inverse Relaisventil 26 invertiert den Parkbrems-Bremsdruck pPH oder der Parkbrems-Steuerdruck pSPH entsprechend und gibt über den Inverter-Ausgang 16 den Inverter-Steuerdruck pl an die Redundanz-Druckleitung 21 aus. Der erste und der zweite Inverter-Eingang 17b, 17c können in diesem Ausführungsbeispiel entfallen.

Somit wird in dieser einfachsten Variante von einem bekannten Anhängersteuerventil 15a lediglich die Invertierungsfunktion in das Inverter-Steuerventil 15 übernommen, was beispielsweise dann ausreichend ist, wenn mit dem Inverter-Steuerventil 15 lediglich eine redundante Abbremsung erfolgen soll und nicht vorgesehen ist, darüber einen Anhänger 200 anzusteuern. Optional können über ein zusätzliches Steuermodul und weitere Inverter-Eingänge sukzessive weitere Funktionalitäten, die den redundanten Bremsbetrieb ausbauen, umgesetzt werden.

In einer rein elektrisch gesteuerten Variante des Inverter-Ventils 15, die in Fig. 7 dargestellt ist, kann vorgesehen sein, den Inverter-Steuerdruck pl rein elektronisch zu erzeugen, d.h. die Invertierung elektronisch durchzuführen. Dazu ist das Parkbrems-Steuermodul 18 im Inverter-Steuerventil 15 angeordnet und über den zweiten Inverter-Eingang 17b oder einen zusätzlichen Inverter-Eingang wird dem Inverter-Steuerventil 15 die Parkbrems-Bremsvorgabe VP bzw. das Parkbrems-Betätigungssignal S2 und/oder die Betriebsbrems-Bremsvorgabe VB bzw. das Betriebsbrems-Betätigungssignal S1 über das zweite Inverter-Steuersignal ST2, das über ein vom CAN-Bus 20 abweichendes (Bus-)Netzwerk oder über eine Direktverbindung ausgehend vom Betriebsbremsventil 13 oder der elektrischen Betriebsbrems-Betätigungsvorrichtung 13a und/oder von der Parkbrems-Betätigungsvorrichtung 19 übertragen wird, zugeführt. Über einen vierten Inverter-Eingang 17d kann weiterhin die Assistenz-Bremsvorgabe VA bzw. das Assistenz-Steuersignal SAss zugeführt werden, das über den CAN-Bus 20 im Fahrzeug 100 übertragen wird. Das Parkbrems-Steuermodul 18 erzeugt in Abhängigkeit einer dieser Bremsvorgaben VA, VB, VP den Parkbrems-Bremsdruck pPH und gibt diesen über einen zusätzlichen Parkbrems-Ausgang 16a am Inverter-Steuerventil 15 an die Federspeicherbremsen 8 aus. Das Vorsteuermodul 29 im Inverter-Steuerventil 15 erzeugt gesteuert vom im Parkbrems-Steuermodul 18 integrierten Inverter-Steuermodul 28 in Abhängigkeit der jeweiligen Bremsvorgabe VA, VB, VP einen zum Parkbrems-Bremsdruck pPH inversen Inverter-Steuerdruck pl, der über den Inverter-Ausgang 16 an das jeweilige Umschaltventil 14a, 14b zur Umsetzung der Bremsung mit den Betriebsbremsen 3 ausgegeben wird.

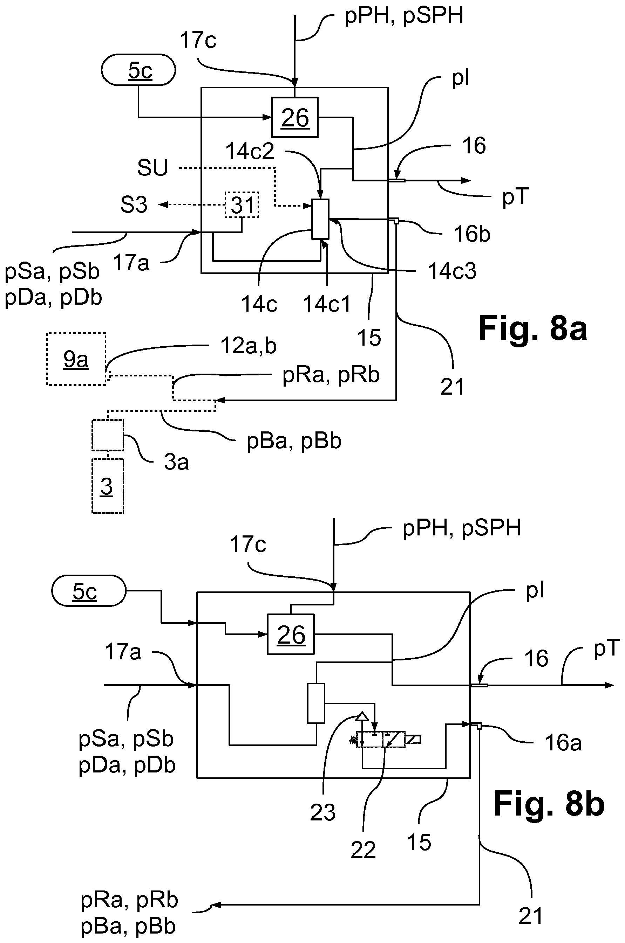

Gemäß weiterer Ausführungsformen des Inverter-Steuerventils 15, die in den Figuren 8a, 8b und 8c dargestellt sind, ist in dem Inverter-Steuerventil 15 ein Inverter-Umschaltventil 14c integriert, wobei das Inverter-Umschaltventil 14c dieselbe Aufgabe und Funktionalität übernimmt wie die in den vorherigen Ausführungsbeispielen genannten Umschaltventile 14a, 14b an den jeweiligen Fahrzeugachsen 6a, 6b. Das Inverter-Umschaltventil 14c kann hierbei wie auch in den vorherigen Ausführungsformen als Wechselventil 40a (s. Fig. 2a) oder als elektrisch steuerbares 3/2-Wegeventil 40b (s. Fig. 2b und 2c) ausgeführt sein. In den Figuren 8a bis 8c sind der Übersichtlichkeit halber teilweise lediglich die gegenüber den vorherigen Ausführungsformen abweichenden Komponenten im Inverter-Steuerventil 15 dargestellt.

Gemäß Fig. 8a ist demnach vorgesehen, dem Inverter-Umschaltventil 14c über einen ersten Inverter-Umschaltventil-Eingang 14c1 den vom Betriebsbremsventil 13 aufgrund der Betriebsbrems-Bremsvorgabe VB ausgesteuerten Betriebsbrems-Steuerdruck pSa, pSb, vorzugsweise den Vorderachs-Betriebsbrems-Steuerdruck pSa, vorzugeben, der wie in dem Bremssystem 1 gemäß Fig. 1 über den ersten Inverter-Eingang 17a an das Inverter-Steuerventil 15 übertragen werden kann, um den Anhänger 200 in Abhängigkeit vom Vorderachs-Betriebsbrems-Steuerdruck pSa abzubremsen. Alternativ kann für das Bremssystem 1 gemäß Fig. 4, in dem kein Betriebsbrems-Steuerdruck pSa, pSb von der in dem Fall rein elektrischen Betriebsbrems-Betätigungsvorrichtung 13a vorgegeben wird, vorgesehen sein, den aufgrund des jeweiligen Betriebsbrems-Steuersignals Sa, Sb von dem jeweiligen Druckmodulator 9a, 9b erzeugten Druckmodulator-Ausgangsdruck pDa, pDb an den ersten Inverter-Eingang 17a des Inverter-Steuerventils 15 zu leiten und diesen an den ersten Inverter-Umschaltventil-Eingang 14c1 vorzugeben.

An einen zweiten Inverter-Umschaltventil-Eingang 14c2 des Inverter-Umschaltventils 14c wird der von dem inversen Relaisventil 26 im Inverter-Steuerventil 15 aus dem Parkbrems-Druckmittelvorrat 5c erzeugte Inverter-Steuerdruck pl vorgegeben. Das inverse Relaisventil 26 erzeugt den Inverter-Steuerdruck pl gemäß dieser Ausführungsform in Abhängigkeit des an dem dritten Inverter-Eingang 17c anliegenden Parkbrems-Bremsdruckes pPH (vgl. Fig. 1 und Fig. 4) oder Parkbrems-Steuerdruckes pSPH (s. Fig. 5) durch eine Invertierung wie bereits zu den anderen Ausführungsbeispielen beschrieben. Der erzeugte Inverter-Steuerdruck pl wird anschließend an den zweiten Inverter-Umschaltventil-Eingang 14c2 sowie auch an den Inverter-Ausgang 16 - d.h. den "gelben Kupplungskopf" eines Anhängersteuerventils 15a - übertragen, um diesen als Anhänger-Steuerdruck pT an ein Bremssystem mit Betriebsbremsen im angehängten Anhänger 200 vorgeben zu können.

An einen Inverter-Umschaltventil-Ausgang 14c3 des Inverter-Umschaltventils 14c werden je nach Umschaltventil-Schaltstellung X1, X2 wahlweise die an den Inverter-Umschaltventil-Eingängen 14c1, 14c2 anliegenden Drücke pl, pSa, pSb, pDa, pDb nach der oben beschriebenen Systematik, d.h. automatisiert über das Wechselventil 40a oder aktiv gesteuert über das 3/2-Wegeventil 40b, ausgegeben. Der Inverter-Umschaltventil-Ausgang 14c3 ist mit einem zusätzlichen Redundanz-Ausgang 16b des Inverter-Steuerventils 15 verbunden, der in dieser Ausführungsform dafür vorgesehen ist, den vom Inverter-Umschaltventil-Ausgang 14c3 wahlweise ausgegebenen Druck pl, pSa, pSb, pDa, pDb für eine Ansteuerung der Betriebsbremsen 3 über den Druckmodulator 9a, 9b auszugeben. In dieser Ausführung des Inverter-Steuerventils 15 ist dazu die Redundanz-Druckleitung 21 an den Redundanz-Ausgang 16b angeschlossen, um darüber für eine Einspeisung des wahlweise ausgegebenen Druckes pl, pSa, pSb, pDa, pDb in den mindestens einen Betriebsbremskreis 2a, 2b zu sorgen.

Die Position der Einspeisung über die Redundanz-Druckleitung 21 wird hierbei wie folgt gewählt:
Ist eine Vorgabe des Betriebsbrems-Steuerdruckes pSa, pSb, vorzugsweise des Vorderachs-Betriebsbrems-Steuerdruckes pSa, über den ersten Inverter-Eingang 17a des Inverter-Steuerventils 15 vorgesehen, ist die Redundanz-Druckleitung 21 direkt mit dem Redundanzanschluss 12a, 12b des jeweiligen Druckmodulators 9a, 9b, vorzugsweise des Vorderachs-Druckmodulators 9a, zu verbinden, um als Redundanzdruck pRa, pRb den am Redundanz-Ausgang 16b des Inverter-Steuerventils 15 ausgegebenen Druck - d.h. wahlweise den Inverter-Steuerdruck pl oder den jeweiligen Betriebsbrems-Steuerdruck pSa, pSb - zu verwenden. Wird hingegen der Druckmodulator-Ausgangsdruck pDa, pDb an den ersten Inverter-Eingang 17a vorgegeben, ist die Redundanz-Druckleitung 21 direkt mit den Betriebsbremsen 3 zu verbinden, um den am Redundanz-Ausgang 16b anliegenden Druck - d.h. wahlweise den Inverter-Steuerdruck pl oder den Druckmodulator-Ausgangsdruck pDa, pDb - als Betriebsbrems-Bremsdruck pBa, pBb zur Ansteuerung der Betriebsbremsen 3 zu verwenden. In Fig. 8a ist der Übersichtlichkeit halber lediglich eine Betriebsbremse 3 dargestellt.

Je nachdem, ob in Anhängigkeit des Inverter-Steuerdruckes pl im redundanten Bremsbetrieb lediglich eine der Fahrzeugachsen 6a, 6b über den entsprechenden Betriebsbremskreis 2a, 2b redundant abgebremst werden soll, kann die Redundanz-Druckleitung 21 auch lediglich für eine Einspeisung des Inverter-Steuerdruckes pl in einen der Betriebsbremskreise 2a, 2b sorgen. Der oder die jeweils andere Betriebsbremskreise 2a, 2b können dann nicht redundant über die vom Inverter-Steuerventil 15 umgeleitete Bremsvorgabe aus dem Parkbremskreis 7 abgebremst werden

Die Einstellung der jeweiligen Umschaltventil-Schaltstellung X1, X2 des Inverter-Umschaltventils 14c erfolgt - je nach Ausführung - im Falle eines Wechselventils 40a automatisch oder im Falle eines 3/2-Wegeventils 40b aktiv gesteuert über das Umschaltsignal SU wie auch bereits zu den vorherigen Ausführungsformen beschrieben. Vorteilhafterweise kann das Umschaltsignal SU dabei in Abhängigkeit der Messung des in Fig. 8a angedeutet Drucksensors 31 - wie auch in dem Ausführungsbeispiel gemäß Fig. 2c - erfolgen. D.h. im Parkbrems-Steuermodul 18 wird anhand des Bremswunsch-Signals S3 ausgewertet, ob eine manuell vorgegebenen Betriebsbrems-Bremsvorgabe VB vorliegt und anhand dessen das in dem Fall als 3/2-Wegeventil 40b ausgeführte Inverter-Umschaltventil 14c angesteuert und in die entsprechende Umschaltventil-Schaltstellung X1, X2 geschaltet.

Die Auswertung des Drucksensors 31 und die darauffolgende Ausgabe des Umschaltsignals SU ist wie bereits oben beschrieben lediglich dann vorteilhaft, wenn es ich um ein Bremssystem 1 vergleichbar zu Fig. 1 handelt, d.h. es wird ein Betriebsbrems-Steuerdruck pSa, pSb über den ersten Inverter-Eingang 17a vorgegeben. Wird demnach vom Fahrer über das Betriebsbremsventil 13 eine Betriebsbrems-Bremsvorgabe VB erzeugt und liegt ein elektrischer Ausfall in den Betriebsbremskreisen 2a, 2b vor, liegt der Betriebsbrems-Steuerdruck pSa, pSb am ersten Inverter-Eingang 17a an, was vom Drucksensor 31 gemessen werden kann. Daraufhin wird das Inverter-Umschaltventil 14c aktiv über das Umschaltsignal SU in die erste Umschaltventil-Schaltstellung X1 geschaltet, so dass der Betriebsbrems-Steuerdruck pSa, pSb gemäß der Betriebsbrems-Bremsvorgabe VB an den jeweiligen Redundanzanschluss 12a, 12b des jeweiligen Druckmodulators 9a, 9b als Redundanzdruck pRa, pRb ausgegeben werden kann. Dadurch kann auf die erste Rückfallebene gemäß obiger Beschreibung zurückgegriffen werden. Eine möglicherweise vorher automatisiert angeforderte Bremsung VA in der zweiten Rückfallebene über den Parkbrems-Bremskreis 7, d.h. in der zweiten Umschaltventil-Schaltstellung X2, wird demnach kontrolliert abgebrochen.

In dem Bremssystem 1 gemäß Fig. 4 wird kein Betriebsbrems-Steuerdruck vorgegeben und bei einem elektrischen Ausfall wird auch kein Druckmodulator-Ausgangsdruck pDa, pDb ausgesteuert, so dass der Drucksensor 31 nichts messen würde. Das Umschaltsignal SU kann jedoch von dem Parkbrems-Steuermodul 18 aufgrund eines detektierten elektrischen Ausfalls in dem mindestens einen Betriebsbremskreis 2a, 2b erzeugt und ausgegeben werden, um das Inverter-Umschaltventil 14c entsprechend einzustellen, so dass kein Drucksensor 31 nötig ist.

Gemäß Fig. 8b ist zusätzlich zu dem Inverter-Umschaltventil 14c auch das Abschaltventil 22 im Inverter-Steuerventil 15 integriert, um wie gemäß der Ausführung in Fig. 3 eine Abschaltfunktion realisieren zu können, die gemäß dieser Ausführung identisch ausgebildet ist und in Abhängigkeit der Abschaltventil-Schaltstellung Z1, Z2 festlegt, ob der Inverter-Steuerdruck pl in der zweiten Umschaltventil-Schalstellung X2 - und hier auch der Betriebsbrems-Steuerdruck pSa, pSb bzw. der Druckmodulator-Ausgangsdruck pDa, pDb in der ersten Umschaltventil-Schaltstellung X1 - über die Redundanz-Druckleitung 21 an den jeweiligen Betriebsbremskreis 2a, 2b übertragen wird oder nicht. Bei einer vom Fahrer manuell vorgegebenen Betriebsbrems-Bremsvorgabe VB ist hierbei vorzugsweise standardmäßig vorgesehen, die zweite Abschaltventil-Schaltstellung Z2 einzustellen, um den Fahrerbrems-wunsch in jedem Fall über die Betriebsbremskreise 2a, 2b umsetzen zu können, unabhängig von einem elektrischen Ausfall in den Betriebsbremskreisen 2a, 2b. Ist das Inverter-Umschaltventil 14c als 3/2-Wegeventil 40b ausgeführt, kann die Abschaltfunktion statt über das Abschaltventil 22 durch eine entsprechende Ansteuerung auch durch das Inverter-Umschaltventil 14c erreicht werden - wie bereits oben zu Fig. 3 beschrieben.

Durch die konstruktiven Ausgestaltungen des Inverter-Steuerventils 15 gemäß den Figuren 8a und 8b wird also erreicht, dass keine Umschaltventile 14a, 14b bzw. kein Abschaltventil 22 mehr an den jeweiligen Fahrzeugachsen 6a, 6b zu positionieren sind sondern eine integrierte, kompakte Lösung im Fahrzeug 100 verbaut werden kann. Dadurch kann eine einfache Nachrüstbarkeit sowie ein geringer Platzbedarf an den Fahrzeugachsen 6a, 6b erreicht werden, da sich die relevanten Komponenten im Wesentlichen im Inverter-Steuerventil 15 befinden und somit in einfacher Weise nachträglich in einem Arbeitsschritt eingebaut werden können, z.B. statt einem herkömmlichen Anhängersteuerventil 15a. Lediglich die Redundanz-Druckleitung 21 zum Inverter-Steuerventil 15 ist demnach neu zu verlegen.

Gemäß Fig. 8c kann vergleichbar zu der Ausführung in Fig. 7 vorgesehen sein, die entsprechende Bremsvorgabe VA, VB, VP elektrisch an das Inverter-Steuerventil 15 zu übertragen. Dazu wird die automatisiert vorgegebene Assistenz-Bremsvorgabe VA ausgehend vom CAN-Bus 20 (vierter Inverter-Eingang 17d) bzw. die Betriebsbrems-/Parkbrems-Bremsvorgabe VB, VP über eine Direktverbindung oder ein weiteres (Bus-)Netzwerk (zweiter Inverter-Eingang 17b) über das zweite Inverter-Steuersignal ST2 an das Inverter-Steuerventil 15 übertragen. Im Inverter-Steuerventil 15 wird aus der jeweiligen Bremsvorgabe VA, VB, VP über das Vorsteuermodul 29 gesteuert von dem Inverter-Steuermodul 28 der Inverter-Steuerdruck pl erzeugt und an den zweiten Inverter-Umschaltventil-Eingang 14c2 des Inverter-Umschaltventils 14c ausgegeben. Alternativ bzw. ergänzend kann - wie auch zu Fig. 7 beschrieben - das Parkbrems-Steuermodul 18 zusammen mit dem Inverter-Steuermodul 28 im Inverter-Steuerventil 15 integriert sein, dann mit entsprechendem Parkbrems-Ausgang 16a zur Ausgabe des darin erzeugten Parkbrems-Bremsdruckes pPH.

Das Erzeugen eines Inverter-Steuerdruckes pl, der umgekehrt proportional zu einem im Parkbremskreis 7 aufgrund der jeweiligen Bremsvorgabe VA, VB, VP umsetzbaren Parkbrems-Bremsdruck pPH bzw. Parkbrems-Steuerdruck pSPH ist, wird also auch hier wieder über eine elektronische Ansteuerung des Vorsteuermoduls 29 erreicht. Besonders bevorzugt ist hierbei der Drucksensor 31 im Inverter-Steuerventil 15 integriert, um den Fahrerwunsch zu erkennen und das Inverter-Umschaltventil 14c entsprechend über das im Inverter-Steuerventil 15 integrierte Inverter-Steuermodul 28 oder Parkbrems-Steuermodul 18 situationsabhängig umzuschalten.

Ergänzend kann im Inverter-Steuerventil 15 gemäß Fig. 8c auch ein inverses Relaisventil 26 (nicht dargestellt) angeordnet sein, um im Bedarfsfall ein über den dritten Inverter-Eingang 17c vorgegebenen Parkbrems-Steuerdruck pSPH oder Parkbrems-Bremsdruck pPH - wie zu den vorherigen Ausführungsbeispielen beschrieben - invertieren zu können, so dass eine weitere Redundanz ausgebildet werden kann. Dies ist dann der Fall, wenn das Parkbrems-Steuermodul 18 nicht im Inverter-Steuerventil 15 integriert ist, sondern lediglich das Inverter-Steuermodul 28 oder eine pneumatische Parkbremse gemäß Fig. 4 oder 5 vorgesehen ist und demnach eine nicht-elektrisch gesteuerte Invertierung benötigt wird.

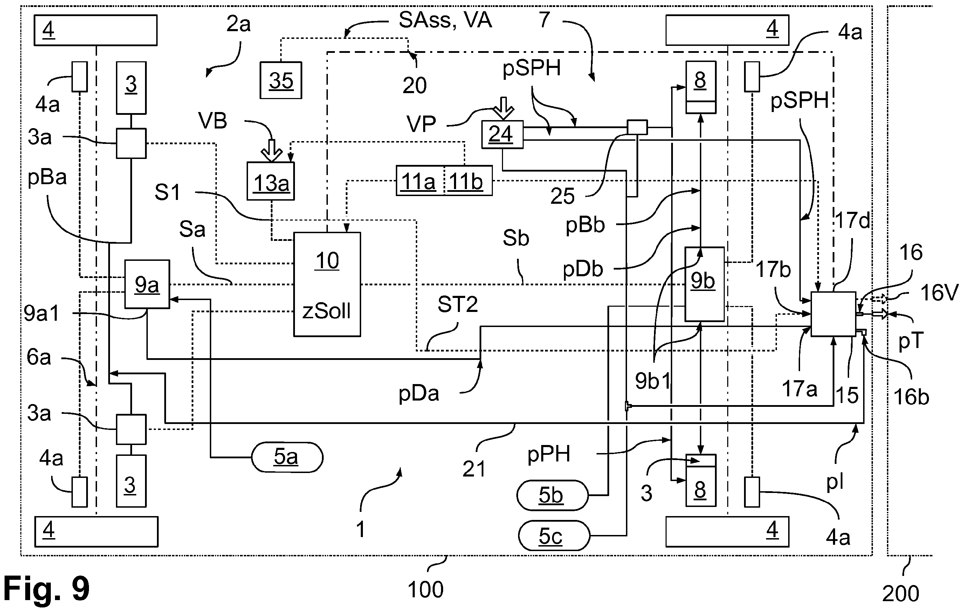

Die Variante des Inverter-Steuermoduls 15 gemäß Fig. 8c kann für eine pneumatische Parkbremse, d.h. mit integriertem Inverter-Steuermodul 28 ohne integriertes Parkbrems-Steuermodul 18 sowie mit Zuführung des Parkbrems-Steuerdruckes pSPH über den dritten Inverter-Eingang 17c und ohne Parkbrems-Ausgang 16a, beispielsweise in einem in Fig. 9 dargestellten Bremssystem 1 verwendet werden. Demnach wird dem Inverter-Steuerventil 15 über den ersten Inverter-Eingang 17a der Vorderachs-Druckmodulator-Ausgangsdruck pDa und hier über den zweiten Inverter-Eingang 17b das zweite Inverter-Steuersignal ST2 mit einer vom Betriebsbremsventil 13 elektrisch vorgegebenen Betriebsbrems-Bremsvorgabe VB und über den vierten Inverter-Eingang 17d die automatisiert angeforderte Assistenz-Bremsvorgabe VA an das Inverter-Steuerventil 15 übertragen.

Im Inverter-Steuerventil 15 wird die jeweilige elektrisch übertragene Bremsvorgabe VA, VB gesteuert vom Inverter-Steuermodul 28 von dem Vorsteuermodul 29 in einen Inverter-Steuerdruck pl umgesetzt, um diesen sowohl als Anhänger-Steuerdruck pT über den Inverter-Ausgang 16 an einen Anhänger 200 und je nach Umschaltventil-Schaltstellung X1, X2 des Inverter-Umschaltventils 14c über den Redundanz-Ausgang 16b und die Redundanz-Druckleitung 21 an den Vorderachs-Betriebsbremskreis 2a auszugeben. Durch die über das zweite Inverter-Steuersignal ST2 übertragene Betriebsbrems-Bremsanforderung VB kann diese also auch an den Anhänger 200 als Anhänger-Steuerdruck pT übertragen werden.

Das im Inverter-Steuerventil 15 integrierte Inverter-Steuermodul 18 kann hierbei festlegen, ob eine Umsetzung der über den vierten Inverter-Eingang 14d bzw. den zweiten Inverter-Eingang 14b elektrisch vorgegebenen Bremsvorgaben VA, VB, VP erfolgen soll oder die über den ersten Inverter-Eingang 17a in Form des Vorderachs-Druckmodulator-Ausgangsdruckes pDa vorgegebene Bremsvorgabe. Dies kann entweder durch eine aktive Ansteuerung des in dem Fall als 3/2-Wegeventil 40b ausgeführten Inverter-Umschaltventils 14c insbesondere in Abhängigkeit des vom Drucksensor 31 ausgegebenen Bremswunsch-Signals S3 erfolgen und/oder dadurch, dass bei entsprechendem Bremswunsch-Signal S3 durch kontrolliertes Beenden der bereits vorgegebenen automatisiert angeforderten Bremsung ein geringer Inverter-Steuerdruck pl vom Vorsteuermodul 29 erzeugt wird, was im Falle eines als Wechselventil 40a ausgeführten Inverter-Umschaltventils 14c dazu führt, dass dieses automatisch in die erste Umschaltventil-Schaltstellung X1 geschaltet wird und dadurch der Vorderachs-Betriebsbrems-Steuerdruck pSa vom Inverter-Steuerventil 15 über den Redundanz-Ausgang 16b ausgesteuert wird.

Über den dritten Inverter-Eingang 17c wird der vom Parkbremsventil 24 auch an die Federspeicherbremsen 8 ausgegebene Parkbrems-Steuerdruck pSPH oder ein damit zusammenhängender Druck auch an das Inverter-Steuerventil 15 übertragen, um im Bedarfsfall auch eine Invertierung über das verbaute inverse Relaisventil 26 (der Übersichtlichkeit halber nicht dargestellt) im Inverter-Steuermodul 15 zu ermöglichen und den darüber erzeugten Inverter-Steuerdruck pl redundant an den Redundanz-Ausgang 16b auszugeben, so dass eine weitere Redundanz ausgebildet werden kann.

Dadurch kann gewährleistet werden, dass in einem Bremssystem 1 mit einer pneumatischen Parkbremse auch eine automatisiert angeforderte Assistenz-Bremsvorgabe VA über das Inverter-Steuerventil 15 und das Inverter-Umschaltventil 14c an den Vorderachs-Betriebsbremskreis 2a übertragen werden kann, wenn in diesem ein elektrischer Ausfall vorliegt und die Assistenz-Bremsvorgabe VA somit nicht über das Betriebsbrems-Steuermodul 10 direkt in den Vorderachs-Betriebsbremskreis 2a eingesteuert werden kann. Dies ist insbesondere auch dann vorteilhaft, wenn der Fahrer bei einem elektrischen Ausfall nicht selbst über eine manuelle Bremsvorgabe VB, VP eingreift und diese daher über das Inverter-Steuerventil 15 nicht redundant an den Vorderachs-Betriebsbremskreis 2a übertragen wird.

In analoger Weise kann eine derartig elektrisch gesteuerte Vorgabe des Inverter-Steuerdruckes pl über das Inverter-Steuerventil 15 auch in einem Bremssystem 1 vergleichbar z.B. zu Fig. 5 gewährleistet werden, in dem die Umschaltventile 14a, 14b nicht im Inverter-Steuerventil 15, sondern an den jeweiligen Fahrzeugachsen 6a, 6b angeordnet sind. Auch in Fig. 5 kann demnach ergänzend vorgesehen sein, über das im Inverter-Steuerventil 15 integrierte Inverter-Steuermodul 28 oder über ein externes Steuermodul das Vorsteuermodul 29 im Inverter-Steuerventil 15 anzusteuern, um bei einem elektrischen Ausfall der Betriebsbremskreise 2a, 2b die Assistenz-Bremsvorgabe VA über das Inverter-Steuerventil 15 und das jeweilige Umschaltventil 14a, 14b an die Betriebsbremskreise 2a, 2b umzuleiten und damit im Redundanzfall eine automatisiert angeforderte Bremsung bewirken zu können.

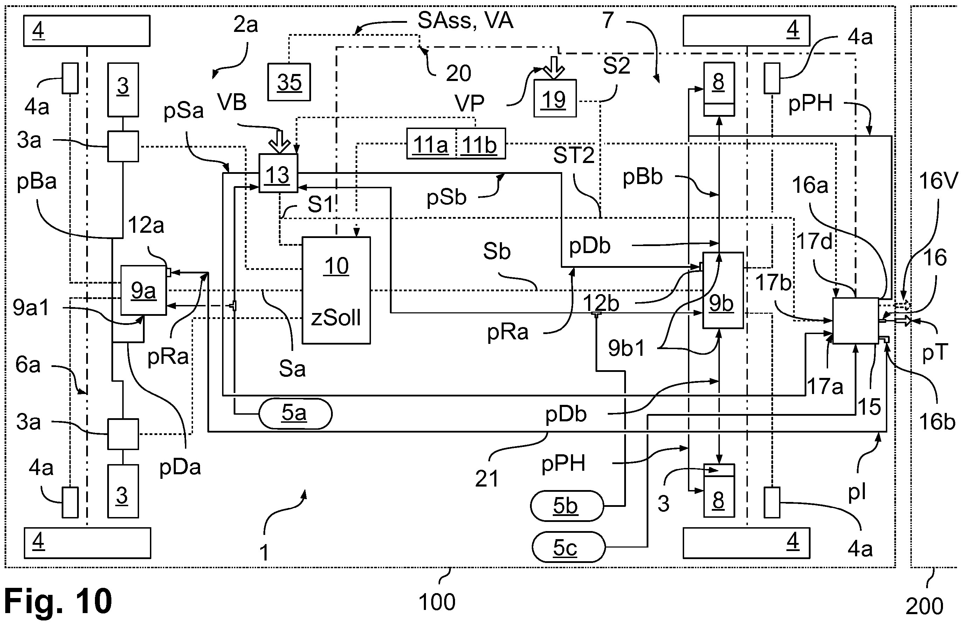

Alternativ kann das Inverter-Steuerventil 15 gemäß Fig. 8c aber auch in einem Bremssystem 1 mit einer elektronischen Parkbremse und/oder einem elektropneumatischen Betriebsbremsventil 13, wie in Fig. 10 dargestellt, verwendet werden, wobei dann über das zweite Inverter-Steuersignal ST2 auch das Parkbrems-Betätigungssignal S2 bzw. die Parkbrems-Bremsvorgabe VP elektronisch an den zweiten Inverter-Eingang 17b ausgegeben wird, um den Inverter-Steuerdruck pl - in dem Fall über das im Inverter-Steuerventil 15 integrierte Parkbrems-Steuermodul 18 - im Inverter-Steuerventil 15 zu erzeugen und an das im Inverter-Steuerventil 15 angeordnete Inverter-Umschaltventil 14c zu übertragen. Über den Inverter-Ausgang 16 wird der Anhänger-Steuerdruck pT an den Anhänger 200, über den Parkbrems-Ausgang 16a der Parkbrems-Bremsdruck pPH an die Federspeicherbremsen 8 und über den Redundanz-Ausgang 16b wahlweise der Inverter-Steuerdruck pl, der umgekehrt proportional zum Parkbrems-Bremsdruck pPH ist, oder der Betriebsbrems-Steuerdruck pSa, pSb über die Redundanz-Druckleitung 21 ausgegeben werden können.

### Bezugszeichenliste (Bestandteil der Beschreibung)

- 1: Bremssystem
- 2a: Vorderachs-Betriebsbremskreis
- 2b: Hinterachs-Betriebsbremskreis
- 3: Betriebsbremsen
- 3a: ABS-Steuerventile
- 4: Räder
- 4a: Raddrehzahlsensoren
- 5a: Vorderachs-Druckmittelvorrat
- 5b: Hinterachs-Druckmittelvorrat
- 5c: Parkbrems-Druckmittelvorrat
- 6a: Vorderachse
- 6b: Hinterachse
- 7: Parkbremskreis
- 8: Federspeicherbremsen
- 9a: Vorderachs-Druckmodulator
- 9a1: Vorderachs-Druckmodulator-Ausgang
- 9b: Hinterachs-Druckmodulator
- 9b1: Hinterachs-Druckmodulator-Ausgang
- 10: Betriebsbrems-Steuermodul
- 11a: erste Energiequelle
- 11b: zweite Energiequelle
- 12a: pneumatischer Vorderachs-Redundanzanschluss
- 12b: pneumatischer Hinterachs-Redundanzanschluss
- 13: Betriebsbremsventil
- 13: elektronische Betriebsbrems-Betätigungsvorrichtung
- 14a: Vorderachs-Umschaltventil
- 14a1: erster Vorderachs-Umschaltventil-Eingang
- 14a2: zweiter Vorderachs-Umschaltventil-Eingang
- 14a3: Vorderachs-Umschaltventil-Ausgang
- 14b: Hinterachs-Umschaltventil
- 14b1: erster Hinterachs-Umschaltventil-Eingang
- 14b2: zweiter Hinterachs-Umschaltventil-Eingang
- 14b3: Hinterachs-Umschaltventil-Ausgang
- 15: Inverter-Ventil
- 15a: Anhängersteuerventil
- 16: Inverter-Ausgang
- 16a: Parkbrems-Ausgang
- 16V: Vorratsdruck-Ausgang
- 17a: erster Inverter-Eingang
- 17b: zweiter Inverter-Eingang
- 17c: dritter Inverter-Eingang
- 17d: vierter Inverter-Eingang
- 18: Parkbrems-Steuermodul
- 19: Parkbrems-Betätigungsvorrichtung
- 20: CAN-Bus
- 21: Redundanz-Druckleitung
- 22: Abschaltventil
- 23: Entlüftungsanschluss
- 24: Parkbremsventil
- 25: Relaisventil
- 26: inverses Relaisventil
- 28: Inverter-Steuermodul
- 29: Vorsteuermodul
- 31: Drucksensor
- 35: Assistenz-Steuermodul
- 40a: Wechselventil
- 40b: 3/2-Wegeventil
- 100: Fahrzeug
- 200: Anhänger
- pBa: Vorderachs-Bremsdruck
- pBb: Hinterachs-Bremsdruck
- pDa: Vorderachs-Druckmodulator-Ausgangsdruck
- pDb: Hinterachs-Druckmodulator-Ausgangsdruck
- pl: Inverter-Steuerdruck
- pPH: Parkbrems-Bremsdruck
- pRa: Vorderachs-Redundanzdruck
- pRb: Hinterachs-Redundanzdruck
- pSa: Vorderachs-Betriebsbrems-Steuerdruck
- pSb: Hinterachs-Betriebsbrems-Steuerdruck
- pSPH: Parkbrems-Steuerdruck
- pSU: Umschalt-Steuerdruck
- pT: Anhänger-Steuerdruck
- S1: Betriebsbrems-Betätigungssignal
- S2: Parkbrems-Betätigungssignal
- S3: Bremswunsch-Signal
- SAss: Assistenz-Steuersignal
- Sa: Vorderachs-Betriebsbrems-Steuersignal
- Sb: Hinterachs-Betriebsbrems-Steuersignal
- SD: Diagnose-Signal
- ST1: erstes Inverter-Steuersignal
- SU: Umschaltsignal
- SZ: Abschaltsignal
- VA: Assistenz-Bremsvorgabe
- VB: Betriebsbrems-Bremsvorgabe
- VP: Parkbrems-Bremsvorgabe
- X1: erste Umschaltventil-Schaltstellung
- X2: zweite Umschaltventil-Schaltstellung
- Z1: erste Abschaltventil-Schaltstellung
- Z2: zweite Abschaltventil-Schaltstellung
- zSoll: Fahrzeug-Soll-Verzögerung

## Patentansprüche

1. Elektronisch steuerbares Bremssystem (1), insbesondere elektronisch steuerbares pneumatisches Bremssystem (1), für ein Fahrzeug (100), insbesondere Nutzfahrzeug (100), mindestens aufweisend:
- mindestens ein Betriebsbremskreis (2a, 2b) mit Betriebsbremsen (3) und einem Betriebsbrems-Steuermodul (10), wobei den Betriebsbremsen (3) ein Betriebsbrems-Bremsdruck (pBa, pBb) zuführbar ist und das Betriebsbrems-Steuermodul (10) ausgebildet ist, in Abhängigkeit einer Bremsvorgabe (VA, VB, VP) ein Betriebsbrems-Steuersignal (Sa, Sb) zu erzeugen, wobei der Betriebsbrems-Bremsdruck (pBa, pBb) in Abhängigkeit des Betriebsbrems-Steuersignals (Sa, Sb) erzeugt und an die Betriebsbremsen (3) vorgegeben werden kann zum von dem Betriebsbrems-Steuermodul (10) elektrisch gesteuerten Umsetzen der Bremsvorgabe (VA, VB, VP) über den mindestens einen Betriebsbremskreis (2a, 2b),
- einem Parkbremskreis (7) mit Federspeicherbremsen (8), wobei den Federspeicherbremsen (8) ein Parkbrems-Bremsdruck (pPH) zuführbar ist, wobei der Parkbrems-Bremsdruck (pPH) in Abhängigkeit der Bremsvorgabe (VA, VB, VP) erzeugt und an die Federspeicherbremsen (8) vorgegeben werden kann zum Umsetzen der Bremsvorgabe (VA, VB, VP) über den Parkbremskreis (7),
- einem Inverter-Steuerventil (15; 15a) mit einem Inverter-Ausgang (16) und/oder einem Redundanz-Ausgang (16b), wobei das Inverter-Steuerventil (15; 15a) ausgebildet ist, einen Inverter-Steuerdruck (pl) zu erzeugen und über den Inverter-Ausgang (16) und/oder den Redundanz-Ausgang (16b) auszugeben, wobei der Inverter-Steuerdruck (pl) umgekehrt proportional zu dem Parkbrems-Bremsdruck (pPH) und/oder einem den Parkbrems-Bremsdruck (pPH) vorgebenden Parkbrems-Steuerdruck (pSPH) ist, die auszusteuern sind, um die Bremsvorgabe (VA, VB, VP) im Parkbremskreis (7) über die Federspeicherbremsen (8) umzusetzen, wobei der Betriebsbrems-Bremsdruck (pBa, pBb) in Abhängigkeit des von dem Inverter-Steuerventil (15; 15a) vorgegebenen Inverter-Steuerdruckes (pl) an die Betriebsbremsen (3) des mindestens einen Betriebsbremskreises (2a, 2b) aussteuerbar ist, falls ein durch das Betriebsbrems-Steuermodul (10) elektrisch gesteuertes Umsetzen der Bremsvorgabe (VA, VB, VP) über den mindestens einen Betriebsbremskreis (2a, 2b) verhindert ist.

2. Elektronisch steuerbares Bremssystem (1) nach Anspruch 1, **dadurch gekennzeichnet, dass** die Bremsvorgabe eine von einem Assistenz-Steuermodul (35) automatisiert vorgegebene Assistenz-Bremsvorgabe (VA) und/oder eine über eine Parkbrems-Betätigungsvorrichtung (19) oder über ein Parkbremsventil (24) manuell vorgegebene Parkbrems-Bremsvorgabe (VP) und/oder eine über ein elektropneumatisches Betriebsbremsventil (13) oder eine elektrische Betriebsbrems-Betätigungsvorrichtung (13a) manuell vorgegebene Betriebsbrems-Bremsvorgabe (VB) ist.

3. Elektronisch steuerbares Bremssystem (1) nach Anspruch 1 oder 2, **dadurch gekennzeichnet, dass** im Parkbremskreis (7) ein Parkbrems-Steuermodul (18) angeordnet ist zum Ausgeben des Parkbrems-Bremsdruckes (pPH) in Abhängigkeit der dem Parkbremskreis (7) vorgegebenen Bremsvorgabe (VA, VB, VP).

4. Elektronisch steuerbares Bremssystem (1) nach Anspruch 3, **dadurch gekennzeichnet, dass**
- das Parkbrems-Steuermodul (18) mit den Federspeicherbremsen (8) des Parkbremskreises (7) verbunden ist zum pneumatischen Übertragen des Parkbrems-Bremsdruckes (pPH) an die Federspeicherbremsen (8) und/oder
- das Parkbrems-Steuermodul (18) mit dem Inverter-Steuerventil (15; 15a) verbunden ist zum pneumatischen Übertragen des Parkbrems-Bremsdruckes (pPH) oder eines im Parkbrems-Steuermodul (18) erzeugten davon abhängigen Druckes an das Inverter-Steuerventil (15; 15a).

5. Elektronisch steuerbares Bremssystem (1) nach Anspruch 3, **dadurch gekennzeichnet, dass** das Parkbrems-Steuermodul (18) im Inverter-Steuerventil (15) integriert ist und die Bremsvorgabe (VA, VB, VP) elektrisch an das Inverter-Steuerventil (15) übertragen werden kann, wobei das Inverter-Steuerventil (15) ausgebildet ist,
- über das Parkbrems-Steuermodul (18) aus der Bremsvorgabe (VA, VB, VP) den Parkbrems-Bremsdruck (pPH) zu erzeugen und über einen Parkbrems-Ausgang (16a) an die Federspeicherbremsen (8) im Parkbremskreis (7) auszusteuern, und
- über ein Inverter-Steuermodul (28) und ein Vorsteuermodul (29) aus der Bremsvorgabe (VA, VB, VP) den Inverter-Steuerdruck (pl) zu erzeugen und an den Inverter-Ausgang (16) und/oder den Redundanz-Ausgang (16b) auszugeben,
wobei der über den Parkbrems-Ausgang (16a) ausgegebene Parkbrems-Bremsdruck (pPH) umgekehrt proportional zu dem über den Inverter-Ausgang (16) und/oder den Redundanz-Ausgang (16b) ausgegebenen Inverter-Steuerdruck (pl) ist.

6. Elektronisch steuerbares Bremssystem (1) nach Anspruch 3, **dadurch gekennzeichnet, dass** das Parkbremsventil (24) ausgebildet ist, den Parkbrems-Steuerdruck (pSPH) in Abhängigkeit der über das Parkbremsventil (24) manuell vorgegebenen Parkbrems-Bremsvorgabe (VP) zu erzeugen und auszugeben.

7. Elektronisch steuerbares Bremssystem (1) nach Anspruch 6, **dadurch gekennzeichnet, dass**
- das Parkbremsventil (24) mit einem Relaisventil (25) verbunden ist und das Relaisventil (25) ausgebildet ist, den Parkbrems-Bremsdruck (pPH) aus dem Parkbrems-Steuerdruck (pSPH) zu erzeugen und das Relaisventil (25) mit den Federspeicherbremsen (8) des Parkbremskreises (7) verbunden ist zum pneumatischen Übertragen des vom Relaisventil (25) ausgesteuerten Parkbrems-Bremsdruckes (pPH) an die Federspeicherbremsen (8), und/oder
- das Parkbremsventil (24) mit dem Inverter-Steuerventil (15; 15a) verbunden sind zum pneumatischen Übertragen des Parkbrems-Steuerdruckes (pSPH) oder eines davon abhängigen Druckes an das Inverter-Steuerventil (15; 15a).

8. Elektronisch steuerbares Bremssystem (1) nach einem der vorhergehenden Ansprüche, **dadurch gekennzeichnet, dass** im Inverter-Steuerventil (15; 15a) ein inverses Relaisventil (26) angeordnet ist zum Invertieren des dem Inverter-Steuerventil (15; 15a) von dem Parkbrems-Steuermodul (18) pneumatisch übertragenen Parkbrems-Bremsdruckes (pPH) und/oder des vom Parkbremsventil (24) pneumatisch übertragenen Parkbrems-Steuerdruckes (pSPH) oder eines davon abhängig erzeugten Druckes zum Erzeugen eines gegenüber dem Parkbrems-Bremsdruck (pPH) und/oder dem Parkbrems-Steuerdruck (pSPH) umgekehrt proportionalen Inverter-Steuerdruckes (pl).

9. Elektronisch steuerbares Bremssystem (1) nach Anspruch 8, **dadurch gekennzeichnet, dass** das Inverter-Steuerventil als ein Anhängersteuerventil (15a) ausgeführt ist, wobei das Anhängersteuerventil (15a) ausgebildet ist, einen vom Parkbrems-Bremsdruck (pPH) und/oder vom Parkbrems-Steuerdruck (pSPH) abhängigen Anhänger-Steuerdruck (pT) zu erzeugen und über den Inverter-Ausgang (16) an einen Anhänger (200) zu übertragen, wobei der Anhänger-Steuerdruck (pT) umgekehrt proportional zum Parkbrems-Bremsdruck (pPH) und/oder zum Parkbrems-Steuerdruck (pSPH) ist und der Anhänger-Steuerdruck (pT) dem Inverter-Steuerdruck (pl) entspricht.

10. Elektronisch steuerbares Bremssystem (1) nach einem der vorhergehenden Ansprüche, **dadurch gekennzeichnet, dass** in dem mindestens einen Betriebsbremskreis (2a, 2b) ein Druckmodulator (9a, 9b) angeordnet ist, wobei der Druckmodulator (9a, 9b) einen Druckmodulator-Ausgang (9a1, 9b1) aufweist und der Druckmodulator (9a, 9b) ausgebildet ist, in Abhängigkeit des Betriebsbrems-Steuersignals (Sa, Sb) ein Druckmodulator-Ausgangsdruck (pDa, pDb) zu erzeugen und über den Druckmodulator-Ausgang (9a1, 9b1) auszugeben, wobei der Druckmodulator-Ausgangsdruck (pDa, pDb) als Betriebsbrems-Bremsdruck (pBa, pBb) an die Betriebsbremsen (3) des mindestens einen Betriebsbremskreises (2a, 2b) übertragbar ist.

11. Elektronisch steuerbares Bremssystem (1) nach Anspruch 10, **dadurch gekennzeichnet, dass** der Druckmodulator (9a, 9b) einen pneumatischen Redundanzanschluss (12a, 12b) aufweist und dem pneumatischen Redundanzanschluss (12a, 12b) wahlweise der Inverter-Steuerdruck (pl) oder ein von einem elektropneumatischen Betriebsbremsventil (13) aufgrund einer Betriebsbrems-Bremsvorgabe (VB) ausgesteuerter Betriebsbrems-Steuerdruck (pSa, pSb) als Redundanzdruck (pRa, pRb) vorgegeben werden kann, wobei dem jeweiligen Redundanzanschluss (12a, 12b) dazu ein Umschaltventil (14a, 14b, 14c) vorgeschaltet ist, wobei das Umschaltventil (14a, 14b, 14c) in zwei Umschaltventil-Schaltstellungen (X1, X2) gebracht werden kann und das Umschaltventil (14a, 14b, 14c)
- in einer ersten Umschaltventil-Schaltstellung (X1) den von dem Betriebsbremsventil (13) aufgrund der Betriebsbrems-Bremsvorgabe (VB) ausgesteuerten Betriebsbrems-Steuerdruck (pSa, pSb) und
- in einer zweiten Umschaltventil-Schaltstellung (X2) den im Inverter-Steuerventil (15) erzeugten Inverter-Steuerdruck (pl) als Redundanzdruck (pRa, pRb) an den Redundanzanschluss (12a, 12b) ausgeben kann zum redundanten Ansteuern des Druckmodulators (9a, 9b).

12. Elektronisch steuerbares Bremssystem (1) nach Anspruch 11, **dadurch gekennzeichnet, dass** das Umschaltventil (14a, 14b) in dem mindestens einen Betriebsbremskreis (2a, 2b) angeordnet ist, vorzugsweise an einer dem mindestens einen Betriebsbremskreis (2a, 2b) zugeordneten Fahrzeugachse (6a, 6b) und das Umschaltventil (14a, 14b)
- in der ersten Umschaltventil-Schaltstellung (X1) das Betriebsbremsventil (13) mit dem Redundanzanschluss (12a, 12b) verbindet zum Vorgeben des Betriebsbrems-Steuerdruckes (pSa, pSb) als Redundanzdruck (pRa, pRb) an den Redundanzanschluss (12a, 12b), und
- in der zweiten Umschaltventil-Schaltstellung (X2) den Inverter-Ausgang (16) des Inverter-Steuerventils (15; 15a) mit dem Redundanzanschluss (12a, 12b) verbindet zum Vorgeben des Inverter-Steuerdruckes (pl) als Redundanzdruck (pRa, pRb) an den Redundanzanschluss (12a, 12b).

13. Elektronisch steuerbares Bremssystem (1) nach Anspruch 11, **dadurch gekennzeichnet, dass** als Umschaltventil ein Inverter-Umschaltventil (14c) im oder am Inverter-Steuerventil (15; 15a) angeordnet ist und das Inverter-Umschaltventil (14c)
- in der ersten Umschaltventil-Schaltstellung (X1) das Betriebsbremsventil (13) mit dem Redundanz-Ausgang (16b) des Inverter-Steuerventils (15) verbindet, und
- in der zweiten Umschaltventil-Schaltstellung (X2) den im Inverter-Steuerventil (15; 15a) erzeugten Inverter-Steuerdruck (pl) an den Redundanz-Ausgang (16b) ausgibt,
wobei der Redundanz-Ausgang (16b) des Inverter-Steuerventils (15; 15a) mit dem Redundanzanschluss (12a, 12b) des Druckmodulators (9a, 9b) verbunden ist.

14. Elektronisch steuerbares Bremssystem (1) nach einem der Ansprüche 11 bis 13, **dadurch gekennzeichnet, dass** der Druckmodulator (9a, 9b) ausgebildet ist, falls eine Vorgabe des Betriebsbrems-Bremsdruckes (pBa, pBb) in Abhängigkeit des Betriebsbrems-Steuersignals (Sa, Sb) verhindert ist, den Druckmodulator-Ausgangsdruck (pDa, pDb) in Abhängigkeit des dem Redundanzanschluss (12a, 12b) wahlweise zugeführten Betriebsbrems-Steuerdruckes (pSa, pSb) oder Inverter-Steuerdruckes (pl) zu erzeugen zum redundanten Vorgeben des Betriebsbrems-Bremsdruckes (pBa, pBb).

15. Elektronisch steuerbares Bremssystem (1) nach Anspruch 10, **dadurch gekennzeichnet, dass** den Betriebsbremsen (3) in dem mindestens einen Betriebsbremskreis (2a, 2b) als Betriebsbrems-Bremsdruck (pBa, pBb) wahlweise der Druckmodulator-Ausgangsdruck (pDa, pDb) oder der Inverter-Steuerdruck (pl) vorgebbar ist, wobei den Betriebsbremsen (3) dazu ein Umschaltventil (14a, 14b, 14c) vorgeschaltet ist, wobei das Umschaltventil (14a, 14b, 14c) in zwei Umschaltventil-Schaltstellungen (X1, X2) gebracht werden kann und das Umschaltventil (14a, 14b, 14c)
- in einer ersten Umschaltventil-Schaltstellung (X1) den Druckmodulator-Ausgangsdruck (pDa, pDb) und
- in einer zweiten Umschaltventil-Schaltstellung (X2) den im Inverter-Steuerventil (15) erzeugten Inverter-Steuerdruck (pl) als Betriebsbrems-Bremsdruck (pBa, pBb) an die Betriebsbremsen (3) aussteuern kann zum redundanten Ansteuern der Betriebsbremsen (3).

16. Elektronisch steuerbares Bremssystem (1) nach Anspruch 15, **dadurch gekennzeichnet, dass** das Umschaltventil (14a, 14b) in dem mindestens einen Betriebsbremskreis (2a, 2b) angeordnet ist, vorzugsweise an einer dem mindestens einen Betriebsbremskreis (2a, 2b) zugeordneten Fahrzeugachse (6a, 6b) und das Umschaltventil (14a, 14b)
- in einer ersten Umschaltventil-Schaltstellung (X1) den Druckmodulator-Ausgang (9a1, 9b1) mit den Betriebsbremsen (3) verbindet zum Vorgeben des Druckmodulator-Ausgangsdruckes (pDa, pDb) als Betriebsbrems-Bremsdruck (pBa, pBb) an die Betriebsbremsen (3), und
- in einer zweiten Umschaltventil-Schaltstellung (X2) den Inverter-Ausgang (16) des Inverter-Steuerventils (15; 15a) mit den Betriebsbremsen (4) verbindet zum Vorgeben des Inverter-Steuerdruckes (pl) als Betriebsbrems-Bremsdruck (pBa, pBb) an die Betriebsbremsen (3).

17. Elektronisch steuerbares Bremssystem (1) nach Anspruch 15, **dadurch gekennzeichnet, dass** als Umschaltventil ein Inverter-Umschaltventil (14c) im oder am Inverter-Steuerventil (15; 15a) angeordnet ist und das Inverter-Umschaltventil (14c)
- in der ersten Umschaltventil-Schaltstellung (X1) den Druckmodulator-Ausgang (9a1, 9b1) mit dem Redundanz-Ausgang (16b) des Inverter-Steuerventils (15) verbindet, und
- in der zweiten Umschaltventil-Schaltstellung (X2) den im Inverter-Steuerventil (15; 15a) erzeugten Inverter-Steuerdruck (pl) an den Redundanz-Ausgang (16b) ausgibt,
wobei der Redundanz-Ausgang (16b) des Inverter-Steuerventils (15; 15a) mit den Betriebsbremsen (3) verbunden ist.

18. Elektronisch steuerbares Bremssystem (1) nach einem der Ansprüche 11 bis 17, **dadurch gekennzeichnet, dass** das Umschaltventil (14a, 14b, 14c) als ein Wechselventil (40a) oder ein elektrisch oder pneumatisch steuerbares 3/2-Wegeventil (40b) ausgeführt ist,
wobei das Wechselventil (40a) ausgebildet ist, die erste oder die zweite Umschaltventil-Schaltstellung (X1, X2) wahlweise in Abhängigkeit davon einzustellen, ob der Inverter-Steuerdruck (pl) oder der Betriebsbrems-Steuerdruck (pSa, pSb) bzw. der Druckmodulator-Ausgangsdruck (pDa, pDb) höher ist, wobei die erste Umschaltventil-Schaltstellung (X1) eingestellt wird, wenn der Betriebsbrems-Steuerdruck (pSa, pSb) bzw. der Druckmodulator-Ausgangsdruck (pDa, pDb) höher ist, und
das 3/2-Wegeventil (40b) in Abhängigkeit eines elektrisch vorgegebenen Umschaltsignals (SU) oder eines pneumatisch vorgegebenen Umschalt-Steuerdruckes (pSU) in die erste Umschaltventil-Schaltstellung (X1) oder in die zweite Umschaltventil-Schaltstellung (X2) schaltbar ist, wobei das Umschaltsignal (SU) oder der Umschalt-Steuerdruck (pSU) in Abhängigkeit davon erzeugt werden können, ob eine angeforderte Betriebsbrems-Bremsvorgabe (VB) in dem mindestens einen Betriebsbremskreis (2a, 2b) vorliegt.

19. Elektronisch steuerbares Bremssystem (1) nach einem der vorhergehenden Ansprüche, **dadurch gekennzeichnet, dass** im Bremssystem (1) weiterhin ein Abschaltventil (22) vorgesehen ist, wobei das Abschaltventil (22) in einer ersten Abschaltventil-Schaltstellung (Z1) eine Aussteuerung des Betriebsbrems-Bremsdruckes (pBa, pBb) an die Betriebsbremsen (3) in Abhängigkeit des im Inverter-Steuerventil (15; 15a) erzeugten Inverter-Steuerdrucks (pl) verhindert und in einer zweiten Abschaltventil-Schaltstellung (Z2) zum redundanten Umsetzen der Bremsvorgabe (VA, VB, VP) über den mindestens einen Betriebsbremskreis (2a, 2b) erlaubt, wobei das Abschaltventil (22) ausgebildet ist, die Betriebsbremsen (3) und/oder eine zwischen dem Inverter-Ausgang (16) oder dem Redundanz-Ausgang (16b) des Inverter-Steuerventils (15; 15a) und dem mindestens einen Betriebsbremskreis (2a, 2b) verlaufenden Redundanz-Druckleitung (21) in der ersten Abschaltventil-Schaltstellung (Z1) zu entlüften.

20. Elektronisch steuerbares Bremssystem (1) nach Anspruch 19, **dadurch gekennzeichnet, dass** das Abschaltventil (22) im Inverter-Steuerventil (15; 15a) integriert ist oder dem Inverter-Ausgang (16) oder dem Redundanz-Ausgang (16b) nachgeschaltet in der Redundanz-Druckleitung (21) angeordnet ist.

21. Elektronisch steuerbares Bremssystem (1) nach Anspruch 19 oder 20 **dadurch gekennzeichnet, dass** das Umschaltventil (14a, 14b, 14c) das Abschaltventil (22) ausbildet, wobei das Umschaltventil (14a, 14b, 14c) ausgebildet ist, in der ersten Umschaltventil-Schaltstellung (X1) die Betriebsbremsen (3) und/oder die Redundanz-Druckleitung (21) zu entlüften.

22. Elektronisch steuerbares Bremssystem (1) nach einem der vorhergehenden Ansprüche, **dadurch gekennzeichnet, dass** der mindestens eine Betriebsbremskreis (2a, 2b) von einer ersten Energiequelle (11a) und der Parkbremskreis (7) und/oder das Inverter-Steuerventil (15; 15a) von einer zweiten Energiequelle (11b) mit Energie versorgt ist, wobei die erste Energiequelle (11a) unabhängig von der zweiten Energiequelle (11b) ist.

23. Elektronisch steuerbares Bremssystem (1) nach einem der vorhergehenden Ansprüche, **dadurch gekennzeichnet, dass** das Bremssystem (1) an einen CAN-Bus (20) des Fahrzeuges (100) angebunden ist und die Bremsvorgabe (VA, VB, VP) über den CAN-Bus (20) an den mindestens einen Betriebsbremskreis (2a, 2b) und/oder den Parkbremskreis (7) und/oder das Inverter-Steuerventil (15; 15a) des Bremssystems (1) übertragbar sind.

24. Fahrzeug (100), insbesondere Nutzfahrzeug (100), mit einem elektronisch steuerbaren Bremssystem (1) nach einem der vorhergehenden Ansprüche.

25. Verfahren zum Steuern eines elektronischen Bremssystems (1) nach einem der Ansprüche 1 bis 23, mit mindestens den folgenden Schritten:
- Feststellen, ob die Bremsvorgabe (VA, VB, VP) über den mindestens einen Betriebsbremskreis (2a, 2b) elektrisch gesteuert durch das Betriebsbrems-Steuermodul (10) umgesetzt werden kann;
- Erzeugen des Inverter-Steuerdruckes (pl) in dem Inverter-Steuerventil (15; 15a) in Abhängigkeit einer dem Parkbremskreis (7) vorgegebenen Bremsvorgabe (VA, VB, VP); und
- Erzeugen des Betriebsbrems-Bremsdruckes (pBa, pBb) in dem mindestens einen Betriebsbremskreis (2a, 2b) in Abhängigkeit des in dem Inverter-Steuerventil (15; 15a) erzeugten Inverter-Steuerdruckes (pl), falls ein durch das Betriebsbrems-Steuermodul (10) elektrisch gesteuertes Umsetzen der Bremsvorgabe (VA, VB, VP) über den mindestens einen Betriebsbremskreis (2a, 2b) verhindert ist.

26. Verfahren nach Anspruch 25, **dadurch gekennzeichnet, dass** der Inverter-Steuerdruck (pl) in dem Inverter-Steuerventil (15; 15a) in Abhängigkeit des im Parkbremskreis (7) aufgrund der Bremsvorgabe (VA, VB, VP) erzeugten Parkbrems-Bremsdruckes (pPH) oder Parkbrems-Steuerdruckes (pSPH) erzeugt wird, wobei dazu im Inverter-Steuerventil (15; 15a) ein zu dem Parkbrems-Bremsdruck (pPH) oder dem Parkbrems-Steuerdruck (pSPH) umgekehrt proportionaler Inverter-Steuerdruck (pl) erzeugt wird zum redundanten Ansteuern des jeweiligen Betriebsbremskreises (2a, 2b) mit dem Inverter-Steuerdruck (pl).

27. Verfahren nach Anspruch 25 oder 26, **dadurch gekennzeichnet, dass** zur Vorgabe des Betriebsbrems-Bremsdruckes (pBa, pBb) an die Betriebsbremsen in Abhängigkeit des von dem Inverter-Steuerventil (15; 15a) erzeugten Inverter-Steuerdruck (pl) dieser Inverter-Steuerdruck (pl)
- den Betriebsbremsen (3) direkt als Betriebsbrems-Bremsdruck (pBa, pBb) zugeführt wird oder
- dem Redundanzanschluss (12a, 12b) des Druckmodulators (9a, 9b) als Redundanzdruck (pRa, pRb) zugeführt wird und im Druckmodulator (9a, 9b) in Abhängigkeit davon der Betriebsbrems-Bremsdruck (pBa, pBb) erzeugt und ausgesteuert wird, falls ein durch das Betriebsbrems-Steuermodul (10) elektrisch gesteuertes Umsetzen der Bremsvorgabe (VA, VB, VP) über den mindestens einen Betriebsbremskreis (2a, 2b) verhindert ist.

## Claims

1. Electronically controllable brake system (1), in particular electronically controllable pneumatic brake system (1), for a vehicle (100), in particular commercial vehicle (100), at least comprising:
- at least one service brake circuit (2a, 2b) having service brakes (3) and a service brake control module (10), wherein a service brake braking pressure (pBa, pBb) can be supplied to the service brakes (3) and the service brake control module (10) is designed to generate a service brake control signal (Sa, Sb) on the basis of a braking specification (VA, VB, VP), wherein the service brake braking pressure (pBa, pBb) can be generated on the basis of the service brake control signal (Sa, Sb) and can be specified at the service brakes (3) in order to implement the braking specification (VA, VB, VP) via the at least one service brake circuit (2a, 2b) in an electrically controlled manner by means of the service brake control module (10),
- a parking brake circuit (7) having spring-loaded brakes (8), wherein a parking brake braking pressure (pPH) can be supplied to the spring-loaded brakes (8), wherein the parking brake braking pressure (pPH) can be generated on the basis of the braking specification (VA, VB, VP) and can be specified at the spring-loaded brakes (8) in order to implement the braking specification (VA, VB, VP) via the parking brake circuit (7), and
- an inverter control valve (15; 15a) having an inverter output (16) and/or a redundancy output (16b), wherein the inverter control valve (15; 15a) is designed to generate an inverter control pressure (pl) and output this pressure via the inverter output (16) and/or the redundancy output (16b), wherein the inverter control pressure (pl) is inversely proportional to the parking brake braking pressure (pPH) and/or a parking brake control pressure (pSPH) which specifies the parking brake braking pressure (pPH), which pressures are to be driven to full output in order to implement the braking specification (VA, VB, VP) in the parking brake circuit (7) via the spring-loaded brakes (8), wherein the service brake braking pressure (pBa, pBb) can be driven to full output at the service brakes (3) of the at least one service brake circuit (2a, 2b) on the basis of the inverter control pressure (pl) specified by the inverter control valve (15; 15a) if the braking specification (VA, VB, VP) is prevented from being implemented via the at least one service brake circuit (2a, 2b) in an electrically controlled manner by means of the service brake control module (10).

2. Electronically controllable brake system (1) according to claim 1,
**characterized in that** the braking specification is an assistance braking specification (VA) which is automatically specified by an assistance control module (35), and/or a parking brake braking specification (VP) which is manually specified by means of a parking brake actuation device (19) or by means of a parking brake valve (24), and/or a service brake braking specification (VB) which is manually specified by means of an electropneumatic service brake valve (13) or an electrical service brake actuation device (13a).

3. Electronically controllable brake system (1) according to either claim 1 or claim 2, **characterized in that** a parking brake control module (18) is arranged in the parking brake circuit (7) in order to output the parking brake braking pressure (pPH) on the basis of the braking specification (VA, VB, VP) specified for the parking brake circuit (7).

4. Electronically controllable brake system (1) according to claim 3,
**characterized in that**
- the parking brake control module (18) is connected to the spring-loaded brakes (8) of the parking brake circuit (7) in order to pneumatically transmit the parking brake braking pressure (pPH) to the spring-loaded brakes (8) and/or
- the parking brake control module (18) is connected to the inverter control valve (15; 15a) in order to pneumatically transmit the parking brake braking pressure (pPH) or a pressure generated on the basis thereof in the parking brake control module (18) to the inverter control valve (15; 15a).

5. Electronically controllable brake system (1) according to claim 3,
**characterized in that** the parking brake control module (18) is integrated in the inverter control valve (15) and the braking specification (VA, VB, VP) can be electrically transmitted to the inverter control valve (15), the inverter control valve (15) being designed
- to generate the parking brake braking pressure (pPH) from the braking specification (VA, VB, VP) by means of the parking brake control module (18) and to drive this braking pressure to full output at the spring-loaded brakes (8) in the parking brake circuit (7) via a parking brake output (16a), and
- to generate the inverter control pressure (pl) from the braking specification (VA, VB, VP) by means of an inverter control module (28) and a pilot module (29) and to output this pressure at the inverter output (16) and/or the redundancy output (16b),
the parking brake braking pressure (pPH) output via the parking brake output (16a) being inversely proportional to the inverter control pressure (pl) output via the inverter output (16) and/or the redundancy output (16b).

6. Electronically controllable brake system (1) according to claim 3,
**characterized in that** the parking brake valve (24) is designed to generate and output the parking brake control pressure (pSPH) on the basis of the parking brake braking specification (VP) specified manually by means of the parking brake valve (24).

7. Electronically controllable brake system (1) according to claim 6,
**characterized in that**
- the parking brake valve (24) is connected to a relay valve (25) and the relay valve (25) is designed to generate the parking brake braking pressure (pPH) from the parking brake control pressure (pSPH) and the relay valve (25) is connected to the spring-loaded brakes (8) of the parking circuit (7) in order to pneumatically transmit the parking brake braking pressure (pPH) driven to full output by the relay valve (25) to the spring-loaded brakes (8), and/or
- the parking brake valve (24) is connected to the inverter control valve (15; 15a) in order to pneumatically transmit the parking brake control pressure (pSPH) or a pressure on the basis thereof to the inverter control valve (15; 15a).

8. Electronically controllable brake system (1) according to any of the preceding claims, **characterized in that** an inverse relay valve (26) is arranged in the inverter control valve (15; 15a) in order to invert the parking brake braking pressure (pPH) pneumatically transmitted from the parking brake control module (18) to the inverter control valve (15; 15a) and/or the parking brake control pressure (pSPH) pneumatically transmitted from the parking brake valve (24) or a pressure generated on the basis thereof to generate an inverter control pressure (pl) which is inversely proportional to the parking brake braking pressure (pPH) and/or the parking brake control pressure (pSPH).

9. Electronically controllable brake system (1) according to claim 8,
**characterized in that** the inverter control valve is designed as a trailer control valve (15a), the trailer control valve (15a) being designed to generate a trailer control pressure (pT) on the basis of the parking brake braking pressure (pPH) and/or the parking brake control pressure (pSPH) and to transmit this trailer control pressure via the inverter output (16) to a trailer (200), the trailer control pressure (pT) being inversely proportional to the parking brake braking pressure (pPH) and/or to the parking brake control pressure (pSPH) and the trailer control pressure (pT) corresponding to the inverter control pressure (pl).

10. Electronically controllable brake system (1) according to any of the preceding claims, **characterized in that** a pressure modulator (9a, 9b) is arranged in the at least one service brake circuit (2a, 2b), the pressure modulator (9a, 9b) having a pressure modulator output (9a1, 9b1) and the pressure modulator (9a, 9b) being designed to generate a pressure modulator output pressure (pDa, pDb) on the basis of the service brake control signal (Sa, Sb) and to output this output pressure via the pressure modulator output (9a1, 9b1), it being possible for the pressure modulator output pressure (pDa, pDb) to be transmitted as service brake braking pressure (pBa, pBb) to the service brakes (3) of the at least one service brake circuit (2a, 2b).

11. Electronically controllable brake system (1) according to claim 10,
**characterized in that** the pressure modulator (9a, 9b) has a pneumatic redundancy connection (12a, 12b) and either the inverter control pressure (pl) or a service brake control pressure (pSa, pSb) driven to full output by an electropneumatic service brake valve (13) on the basis of a service brake braking specification (VB) can be specified to the pneumatic redundancy connection (12a, 12b) as a redundancy pressure (pRa, pRb), a switching valve (14a, 14b, 14c) being connected upstream of each redundancy connection (12a, 12b) for this purpose, it being possible for the switching valve (14a, 14b, 14c) to be brought into two switching valve switching positions (X1, X2) and it being possible for the switching valve (14a, 14b, 14c)
- in a first switching valve switching position (X1), to output the service brake control pressure (pSa, pSb) driven to full output by the service brake valve (13) on the basis of the service brake braking specification (VB), and
- in a second switching valve switching position (X2), to output the inverter control pressure (pl) generated in the inverter control valve (15)
as redundancy pressure (pRa, pRb) to the redundancy connection (12a, 12b) for redundant control of the pressure modulator (9a, 9b).

12. Electronically controllable brake system (1) according to claim 11,
**characterized in that** the switching valve (14a, 14b) is arranged in the at least one service brake circuit (2a, 2b), preferably on a vehicle axle (6a, 6b) associated with the at least one service brake circuit (2a, 2b) and the switching valve (14a, 14b)
- in the first switching valve switching position (X1), connects the service brake valve (13) to the redundancy connection (12a, 12b) in order to specify the service brake control pressure (pSa, pSb) as redundancy pressure (pRa, pRb) to the redundancy connection (12a, 12b), and
- in the second switching valve switching position (X2), connects the inverter output (16) of the inverter control valve (15; 15a) to the redundancy connection (12a, 12b) in order to specify the inverter control pressure (pl) as redundancy pressure (pRa, pRb) to the redundancy connection (12a, 12b).

13. Electronically controllable brake system (1) according to claim 11,
**characterized in that** an inverter switching valve (14c) is arranged as the switching valve in or on the inverter control valve (15; 15a) and the inverter switching valve (14c)
- in the first switching valve switching position (X1), connects the service brake valve (13) to the redundancy output (16b) of the inverter control valve (15), and
- in the second switching valve switching position (X2), outputs the inverter control pressure (pl) generated in the inverter control valve (15; 15a) to the redundancy output (16b),
the redundancy output (16b) of the inverter control valve (15; 15a) being connected to the redundancy connection (12a, 12b) of the pressure modulator (9a, 9b).

14. Electronically controllable brake system (1) according to any of claims 11 to 13, **characterized in that** the pressure modulator (9a, 9b) is designed, if a specification of the service brake braking pressure (pBa, pBb) on the basis of the service brake control signal (Sa, Sb) is prevented, to generate the pressure modulator output pressure (pDa, pDb) on the basis of the service brake control pressure (pSa, pSb) or the inverter control pressure (pl) optionally supplied to the redundancy connection (12a, 12b) for redundant specification of the service brake braking pressure (pBa, pBb).

15. Electronically controllable brake system (1) according to claim 10,
**characterized in that** either the pressure modulator output pressure (pDa, pDb) or the inverter control pressure (pl) can be specified to the service brakes (3) in the at least one service brake circuit (2a, 2b) as the service brake braking pressure (pBa, pDb), a switching valve (14a, 14b, 14c) being connected upstream of the service brakes (3) for this purpose, it being possible for the switching valve (14a, 14b, 14c) to be brought into two switching valve switching positions (X1, X2) and it being possible for the switching valve (14a, 14b, 14c)
- in a first switching valve switching position (X1), to drive the pressure modulator output pressure (pDa, pDb), and
- in a second switching valve switching position (X2), to drive the inverter control pressure (pl) generated in the inverter control valve (15)
as service brake braking pressure (pBa, pBb) to full output at the service brakes (3) for redundant control of the service brakes (3).

16. Electronically controllable brake system (1) according to claim 15,
**characterized in that** the switching valve (14a, 14b) is arranged in the at least one service brake circuit (2a, 2b), preferably on a vehicle axle (6a, 6b) associated with the at least one service brake circuit (2a, 2b) and the switching valve (14a, 14b)
- in a first switching valve switching position (X1), connects the pressure modulator output (9a1, 9b1) to the service brakes (3) in order to specify the pressure modulator output pressure (pDa, pDb) as service brake braking pressure (pBa, pBb) to the service brakes (3), and
- in a second switching valve switching position (X2), connects the inverter output (16) of the inverter control valve (15; 15a) to the service brakes (4) in order to specify the inverter control pressure (pl) as service brake braking pressure (pBa, pBb) to the service brakes (3).

17. Electronically controllable brake system (1) according to claim 15,
**characterized in that** an inverter switching valve (14c) is arranged as the switching valve in or on the inverter control valve (15; 15a) and the inverter switching valve (14c)
- in the first switching valve switching position (X1), connects the pressure modulator output (9a1, 9b1) to the redundancy output (16b) of the inverter control valve (15), and
- in the second switching valve switching position (X2), outputs the inverter control pressure (pl) generated in the inverter control valve (15; 15a) to the redundancy output (16b),
the redundancy output (16b) of the inverter control valve (15; 15a) being connected to the service brakes (3).

18. Electronically controllable brake system (1) according to any of claims 11 to 17, **characterized in that** the switching valve (14a, 14b, 14c) is designed as a shuttle valve (40a) or an electrically or pneumatically controllable 3/2 directional valve (40b), the shuttle valve (40a) being designed to selectively adjust the first or the second switching valve switching position (X1, X2) depending on whether the inverter control pressure (pl) or the service brake control pressure (pSa, pSb) or the pressure modulator output pressure (pDa, pDb) is higher, the first switching valve switching position (X1) being adjusted when the service brake control pressure (pSa, pSb) or the pressure modulator output pressure (pDa, pDb) is higher, and
it being possible for the 3/2 directional valve (40b) to be switched, on the basis of an electrically specified switching signal (SU) or a pneumatically specified switching control pressure (pSU), into the first switching valve switching position (X1) or into the second switching valve switching position (X2), it being possible for the switching signal (SU) or the switching control pressure (pSU) to be generated depending on whether there is a requested service brake braking specification (VB) in the at least one service brake circuit (2a, 2b).

19. Electronically controllable brake system (1) according to any of the preceding claims, **characterized in that** a shut-off valve (22) is further provided in the brake system (1), the shut-off valve (22) preventing the service brake braking pressure (pBa, pBb) from being driven to full output at the service brakes (3) on the basis of the inverter control pressure (pl) generated in the inverter control valve (15; 15a) in a first shut-off valve switching position (Z1) and allowing for redundant implementation of the braking specification (VA, VB, VP) via the at least one service brake circuit (2a, 2b) in a second shut-off valve switching position (Z2), the shut-off valve (22) being designed to bleed the service brakes (3) and/or a redundancy pressure line (21) extending between the inverter output (16) or the redundancy output (16b) of the inverter control valve (15; 15a) and the at least one service brake circuit (2a, 2b) in the first shut-off valve switching position (Z1).

20. Electronically controllable brake system (1) according to claim 19,
**characterized in that** the shut-off valve (22) is integrated in the inverter control valve (15; 15a) or is arranged downstream of the inverter output (16) or the redundancy output (16b) in the redundancy pressure line (21).

21. Electronically controllable brake system (1) according to either claim 19 or claim 20, **characterized in that** the switching valve (14a, 14b, 14c) forms the shut-off valve (22), the switching valve (14a, 14b, 14c) being designed to bleed the service brakes (3) and/or the redundancy pressure line (21) in the first switching valve switching position (X1).

22. Electronically controllable brake system (1) according to any of the preceding claims, **characterized in that** the at least one service brake circuit (2a, 2b) is supplied with energy from a first energy source (11a) and the parking brake circuit (7) and/or the inverter control valve (15; 15a) is supplied with energy from a second energy source (11b), the first energy source (11a) being independent of the second energy source (11b).

23. Electronically controllable brake system (1) according to any of the preceding claims, **characterized in that** the brake system (1) is connected to a CAN bus (20) of the vehicle (100) and the braking specification (VA, VB, VP) can be transmitted via the CAN bus (20) to the at least one service brake circuit (2a, 2b) and/or the parking brake circuit (7) and/or the inverter control valve (15; 15a) of the brake system (1).

24. Vehicle (100), in particular commercial vehicle (100), having an electronically controllable brake system (1) according to any of the preceding claims.

25. Method for controlling an electronically controllable brake system (1) according to any of claims 1 to 23, comprising at least the following steps:
- determining whether the brake specification (VA, VB, VP) can be implemented via the at least one service brake circuit (2a, 2b) electrically controlled by the service brake control module (10);
- generating the inverter control pressure (pl) in the inverter control valve (15; 15a) on the basis of a braking specification (VA, VB, VP) specified to the parking brake circuit (7); and
- generating the service brake braking pressure (pBa, pBb) in the at least one service brake circuit (2a, 2b) on the basis of the inverter control pressure (pl) generated in the inverter control valve (15; 15a) if the braking specification (VA, VB, VP) is prevented from being implemented via the at least one service brake circuit (2a, 2b) in an electrically controlled manner by means of the service brake control module (10).

26. Method according to claim 25, **characterized in that** the inverter control pressure (pl) is generated in the inverter control valve (15; 15a) on the basis of the parking brake braking pressure (pPH) or parking brake control pressure (pSPH) generated in the parking brake circuit (7) on the basis of the braking specification (VA, VB, VP), an inverter control pressure (pl) which is inversely proportional to the parking brake braking pressure (pPH) or the parking brake control pressure (pSPH) being generated for this purpose in the inverter control valve (15; 15a) for redundant control of each service brake circuit (2a, 2b) with the inverter control pressure (pl).

27. Method according to either claim 25 or claim 26, **characterized in that**, in order to specify the service brake braking pressure (pBa, pBb) to the service brakes on the basis of the inverter control pressure (pl) generated by the inverter control valve (15; 15a), this inverter control pressure (pl)
- is supplied to the service brakes (3) directly as service brake braking pressure (pBa, pBb), or
- is supplied to the redundancy connection (12a, 12b) of the pressure modulator (9a, 9b) as redundancy pressure (pRa, pRb) and is generated and driven to full output in the pressure modulator (9a, 9b) on the basis of the service brake braking pressure (pBa, pBb) if the braking specification (VA, VB, VP) is prevented from being implemented via the at least one service brake circuit (2a, 2b) in an electrically controlled manner by means of the service brake control module (10).

## Revendications

1. Système de freinage (1) pouvant être commandé électroniquement, en particulier système de freinage (1) pneumatique pouvant être commandé électroniquement, pour un véhicule (100), en particulier un véhicule utilitaire (100), présentant au moins :
- au moins un circuit de freinage de service (2a, 2b) comportant des freins de service (3) et un module de commande de frein de service (10), dans lequel une pression de freinage de frein de service (pBa, pBb) peut être acheminée aux freins de service (3) et le module de commande de frein de service (10) est configuré pour générer un signal de commande de frein de service (Sa, Sb) en fonction d'une consigne de freinage (VA, VB, VP), dans lequel la pression de freinage de frein de service (pBa, pBb) peut être générée en fonction du signal de commande de frein de service (Sa, Sb) et fournie aux freins de service (3) pour l'exécution, électriquement commandée par le module de commande de frein de service (10), de la consigne de freinage (VA, VB, VP) par l'intermédiaire de l'au moins un circuit de freinage de service (2a, 2b),
- un circuit de freinage de stationnement (7) comportant des freins à accumulateur à ressort (8), dans lequel une pression de freinage de frein de stationnement (pPH) peut être acheminée aux freins à accumulateur à ressort (8), dans lequel la pression de freinage de frein de stationnement (pPH) peut être générée en fonction de la consigne de freinage (VA, VB, VP) et fournie aux freins à accumulateur à ressort (8) pour l'exécution de la consigne de freinage (VA, VB, VP) par l'intermédiaire du circuit de freinage de stationnement (7),
- une soupape de commande d'onduleur (15 ; 15a) comportant une sortie d'onduleur (16) et/ou une sortie de redondance (16b), dans lequel la soupape de commande d'onduleur (15 ; 15a) est conçue pour générer une pression de commande d'onduleur (pl) et pour la délivrer par l'intermédiaire de la sortie d'onduleur (16) et/ou de la sortie de redondance (16b), dans lequel la pression de commande d'onduleur (pl) est inversement proportionnelle à la pression de freinage de frein de stationnement (pPH) et/ou à une pression de commande de frein de stationnement (pSPH) prédéfinissant la pression de freinage de frein de stationnement (pPH), lesquelles sont appliquées pour exécuter, par l'intermédiaire des freins à accumulateur à ressort (8), la consigne de freinage (VA, VB, VP) dans le circuit de freinage de stationnement (7), dans lequel la pression de freinage de frein de service (pBa, pBb) peut être appliquée aux freins de service (3) de l'au moins un circuit de freinage de service (2a, 2b) en fonction de la pression de commande d'onduleur (pl) prédéfinie par la soupape de commande d'onduleur (15 ; 15a) lorsqu'une exécution, électriquement commandée par le module de commande de frein de service (10), de la consigne de freinage (VA, VB, VP) est empêchée par l'intermédiaire de l'au moins un circuit de freinage de service (2a, 2b).

2. Système de freinage (1) pouvant être commandé électroniquement selon la revendication 1, **caractérisé en ce que** la consigne de freinage est une consigne de freinage d'assistance (VA) prédéfinie de manière automatisée par un module de commande d'assistance (35) et/ou une consigne de freinage de frein de stationnement (VP) prédéfinie manuellement par l'intermédiaire d'un dispositif d'actionnement de frein de stationnement (19) ou par l'intermédiaire d'une soupape de frein de stationnement (24) et/ou une consigne de freinage de frein de service (VB) prédéfinie manuellement par l'intermédiaire d'une soupape de frein de service (13) électropneumatique ou d'un dispositif d'actionnement de frein de service (13a) électrique.

3. Système de freinage (1) pouvant être commandé électroniquement selon la revendication 1 ou 2, **caractérisé en ce que,** dans le circuit de freinage de stationnement (7), un module de commande de frein de stationnement (18) est disposé pour délivrer la pression de freinage de frein de stationnement (pPH) en fonction de la consigne de freinage (VA, VB, VP) prédéfinie par le circuit de freinage de stationnement (7).

4. Système de freinage (1) pouvant être commandé électroniquement selon la revendication 3, **caractérisé en ce que**
- le module de commande de frein de stationnement (18) est relié aux freins à accumulateur à ressort (8) du circuit de freinage de stationnement (7) pour la transmission pneumatique de la pression de freinage de frein de stationnement (pPH) aux freins à accumulateur à ressort (8) et/ou
- le module de commande de frein de stationnement (18) est relié à la soupape de commande d'onduleur (15 ; 15a) pour la transmission pneumatique, à la soupape de commande d'onduleur (15 ; 15a), de la pression de freinage de frein de stationnement (pPH) ou d'une pression dépendant de celle-ci et générée dans le module de commande de frein de stationnement (18).

5. Système de freinage (1) pouvant être commandé électroniquement selon la revendication 3, **caractérisé en ce que** le module de commande de frein de stationnement (18) est intégré dans la soupape de commande d'onduleur (15) et la consigne de freinage (VA, VB, VP) peut être transmise électriquement à la soupape de commande d'onduleur (15), dans lequel la soupape de commande d'onduleur (15) est conçue pour
- générer, par l'intermédiaire du module de commande de frein de stationnement (18) et à partir de la consigne de freinage (VA, VB, VP), la pression de freinage de frein de stationnement (pPH) et l'appliquer, par l'intermédiaire d'une sortie de frein de stationnement (16a), aux freins à accumulateur à ressort (8) dans le circuit de freinage de stationnement (7), et
- générer, par l'intermédiaire d'un module de commande d'onduleur (28) et d'un module de commande pilote (29) et à partir de la consigne de freinage (VA, VB, VP), la pression de commande d'onduleur (pl) et la délivrer à la sortie d'onduleur (16) et/ou à la sortie de redondance (16b),
dans lequel la pression de freinage de frein de stationnement (pPH) délivrée par l'intermédiaire de la sortie de frein de stationnement (16a) est inversement proportionnelle à la pression de commande d'onduleur (pl) délivrée par l'intermédiaire de la sortie d'onduleur (16) et/ou de la sortie de redondance (16b).

6. Système de freinage (1) pouvant être commandé électroniquement selon la revendication 3, **caractérisé en ce que** la soupape de frein de stationnement (24) est conçue pour générer et délivrer la pression de commande de frein de stationnement (pSPH) en fonction de la consigne de freinage de frein de stationnement (VP) prédéfinie manuellement par l'intermédiaire de la soupape de frein de stationnement (24).

7. Système de freinage (1) pouvant être commandé électroniquement selon la revendication 6, **caractérisé en ce que**
- la soupape de frein de stationnement (24) est reliée à une soupape relais (25) et la soupape relais (25) est conçue pour générer la pression de freinage de frein de stationnement (pPH) à partir de la pression de commande de frein de stationnement (pSPH), et la soupape relais (25) est reliée aux freins à accumulateur à ressort (8) du circuit de freinage de stationnement (7) pour la transmission pneumatique, aux freins à accumulateur à ressort (8), de la pression de freinage de frein de stationnement (pPH) appliquée par la soupape relais (25), et/ou
- la soupape de frein de stationnement (24) sont reliées à la soupape de commande d'onduleur (15 ; 15a) pour la transmission pneumatique, à la soupape de commande d'onduleur (15 ; 15a), de la pression de commande de frein de stationnement (pSPH) ou d'une pression dépendant de celle-ci.

8. Système de freinage (1) pouvant être commandé électroniquement selon l'une des revendications précédentes, **caractérisé en ce que,** dans la soupape de commande d'onduleur (15 ; 15a), une soupape relais inverse (26) est disposée pour inverser la pression de freinage de frein de stationnement (pPH) transmise pneumatiquement à la soupape de commande d'onduleur (15 ; 15a) par le module de commande de frein de stationnement (18) et/ou la pression de commande de frein de stationnement (pSPH) transmise pneumatiquement par la soupape de frein de stationnement (24) ou une pression générée dépendant de celles-ci, afin de générer une pression de commande d'onduleur (pl) inversement proportionnelle par rapport à la pression de freinage de frein de stationnement (pPH) et/ou à la pression de commande de frein de stationnement (pSPH).

9. Système de freinage (1) pouvant être commandé électroniquement selon la revendication 8, **caractérisé en ce que** la soupape de commande d'onduleur est réalisée comme soupape de commande de remorque (15a), dans lequel la soupape de commande de remorque (15a) est conçue pour générer une pression de commande de remorque (pT) dépendant de la pression de freinage de frein de stationnement (pPH) et/ou de la pression de commande de frein de stationnement (pSPH) et pour la transmettre à une remorque (200) par l'intermédiaire de la sortie d'onduleur (16), dans lequel la pression de commande de remorque (pT) est inversement proportionnelle à la pression de freinage de frein de stationnement (pPH) et/ou à la pression de commande de frein de stationnement (pSPH) et la pression de commande de remorque (pT) correspond à la pression de commande d'onduleur (pl).

10. Système de freinage (1) pouvant être commandé électroniquement selon l'une des revendications précédentes, **caractérisé en ce que,** dans l'au moins un circuit de freinage de service (2a, 2b), un modulateur de pression (9a, 9b) est disposé, dans lequel le modulateur de pression (9a, 9b) présente une sortie de modulateur de pression (9a1, 9b1) et le modulateur de pression (9a, 9b) est conçu pour générer une pression de sortie de modulateur de pression (pDa, pDb) en fonction du signal de commande de frein de service (Sa, Sb) et pour la délivrer par l'intermédiaire de la sortie de modulateur de pression (9a1, 9b1), dans lequel la pression de sortie de modulateur de pression (pDa, pDb) peut être transmise comme pression de freinage de frein de service (pBa, pBb) aux freins de service (3) de l'au moins un circuit de freinage de service (2a, 2b).

11. Système de freinage (1) pouvant être commandé électroniquement selon la revendication 10, **caractérisé en ce que** le modulateur de pression (9a, 9b) présente un raccord de redondance (12a, 12b) pneumatique, et la pression de commande d'onduleur (pl) ou une pression de commande de frein de service (pSa, pSb) appliquée par une soupape de frein de service (13) électropneumatique conformément à une consigne de freinage de frein de service (VB) peut être fournie sélectivement au raccord de redondance (12a, 12b) pneumatique comme pression de redondance (pRa, pRb), dans lequel une soupape de commutation (14a, 14b, 14c) est montée en amont du raccord de redondance (12a, 12b) respectif, dans lequel la soupape de commutation (14a, 14b, 14c) peut être amenée dans deux positions de commutation de soupape de commutation (X1, X2) et la soupape de commutation (14a, 14b, 14c) peut délivrer
- dans une première position de commutation de soupape de commutation (X1), la pression de commande de frein de service (pSa, pSb) appliquée par la soupape de frein de service (13) conformément à la consigne de freinage de frein de service (VB) et
- dans une seconde position de commutation de soupape de commutation (X2), la pression de commande d'onduleur (pl) générée dans la soupape de commande d'onduleur (15),
comme pression de redondance (pRa, pRb) au raccord de redondance (12a, 12b), pour la commande redondante du modulateur de pression (9a, 9b).

12. Système de freinage (1) pouvant être commandé électroniquement selon la revendication 11, **caractérisé en ce que** la soupape de commutation (14a, 14b) est disposée dans l'au moins un circuit de freinage de service (2a, 2b), de préférence au niveau d'un essieu de véhicule (6a, 6b) associé à l'au moins un circuit de freinage de service (2a, 2b), et la soupape de commutation (14a, 14b)
- relie, dans la première position de commutation de soupape de commutation (X1), la soupape de frein de service (13) au raccord de redondance (12a, 12b) pour la fourniture de la pression de commande de frein de service (pSa, pSb) comme pression de redondance (pRa, pRb) au raccord de redondance (12a, 12b), et
- relie, dans la seconde position de commutation de soupape de commutation (X2), la sortie d'onduleur (16) de la soupape de commande d'onduleur (15 ; 15a) au raccord de redondance (12a, 12b) pour la fourniture de la pression de commande d'onduleur (pl) comme pression de redondance (pRa, pRb) au raccord de redondance (12a, 12b).

13. Système de freinage (1) pouvant être commandé électroniquement selon la revendication 11, **caractérisé en ce que,** en tant que soupape de commutation, une soupape de commutation d'onduleur (14c) est disposée dans ou sur la soupape de commande d'onduleur (15 ; 15a) et la soupape de commutation d'onduleur (14c)
- relie, dans la première position de commutation de soupape de commutation (X1), la soupape de frein de service (13) à la sortie de redondance (16b) de la soupape de commande d'onduleur (15), et
- délivre, dans la seconde position de commutation de soupape de commutation (X2), la pression de commande d'onduleur (pl) générée dans la soupape de commande d'onduleur (15 ; 15a) à la sortie de redondance (16b),
dans lequel la sortie de redondance (16b) de la soupape de commande d'onduleur (15 ; 15a) est reliée au raccord de redondance (12a, 12b) du modulateur de pression (9a, 9b).

14. Système de freinage (1) pouvant être commandé électroniquement selon l'une des revendications 11 à 13, **caractérisé en ce que,** lorsqu'une fourniture de la pression de freinage de frein de service (pBa, pBb) est empêchée en fonction du signal de commande de frein de service (Sa, Sb), le modulateur de pression (9a, 9b) est conçu pour générer la pression de sortie de modulateur de pression (pDa, pDb) en fonction de la pression de commande de frein de service (pSa, pSb) ou de la pression de commande d'onduleur (pl) acheminée sélectivement au raccord de redondance (12a, 12b), pour la fourniture redondante de la pression de freinage de frein de service (pBa, pBb).

15. Système de freinage (1) pouvant être commandé électroniquement selon la revendication 10, **caractérisé en ce que** la pression de sortie de modulateur de pression (pDa, pDb) ou la pression de commande d'onduleur (pl) peut être fournie sélectivement comme pression de freinage de frein de service (pBa, pBb) aux freins de service (3) dans l'au moins un circuit de freinage de service (2a, 2b), dans lequel une soupape de commutation (14a, 14b, 14c) est montée en amont des freins de service (3), dans lequel la soupape de commutation (14a, 14b, 14c) peut être amenée dans deux positions de commutation de soupape de commutation (X1, X2) et la soupape de commutation (14a, 14b, 14c) peut appliquer
- dans une première position de commutation de soupape de commutation (X1), la pression de sortie de modulateur de pression (pDa, pDb) et
- dans une seconde position de commutation de soupape de commutation (X2), la pression de commande d'onduleur (pl) générée dans la soupape de commande d'onduleur (15)
comme pression de freinage de frein de service (pBa, pBb) aux freins de service (3), pour la commande redondante des freins de service (3).

16. Système de freinage (1) pouvant être commandé électroniquement selon la revendication 15, **caractérisé en ce que** la soupape de commutation (14a, 14b) est disposée dans l'au moins un circuit de freinage de service (2a, 2b), de préférence au niveau d'un essieu de véhicule (6a, 6b) associé à l'au moins un circuit de freinage de service (2a, 2b), et la soupape de commutation (14a, 14b)
- relie, dans une première position de commutation de soupape de commutation (X1), la sortie de modulateur de pression (9a1, 9b1) aux freins de service (3) pour la fourniture, aux freins de service (3), de la pression de sortie de modulateur de pression (pDa, pDb) comme pression de freinage de frein de service (pBa, pBb), et
- relie, dans une seconde position de commutation de soupape de commutation (X2), la sortie d'onduleur (16) de la soupape de commande d'onduleur (15 ; 15a) aux freins de service (4) pour la fourniture, aux freins de service (3), de la pression de commande d'onduleur (pl) comme pression de freinage de frein de service (pBa, pBb).

17. Système de freinage (1) pouvant être commandé électroniquement selon la revendication 15, **caractérisé en ce que,** en tant que soupape de commutation, une soupape de commutation d'onduleur (14c) est disposée dans ou sur la soupape de commande d'onduleur (15 ; 15a), et la soupape de commutation d'onduleur (14c)
- relie, dans la première position de commutation de soupape de commutation (X1), la sortie de modulateur de pression (9a1, 9b1) à la sortie de redondance (16b) de la soupape de commande d'onduleur (15), et
- délivre, dans la seconde position de commutation de soupape de commutation (X2), la pression de commande d'onduleur (pl) générée dans la soupape de commande d'onduleur (15 ; 15a) à la sortie de redondance (16b),
dans lequel la sortie de redondance (16b) de la soupape de commande d'onduleur (15 ; 15a) est reliée aux freins de service (3).

18. Système de freinage (1) pouvant être commandé électroniquement selon l'une des revendications 11 à 17, **caractérisé en ce que** la soupape de commutation (14a, 14b, 14c) est réalisée comme soupape à deux voies (40a) ou soupape à 3/2 voies (40b) pouvant être commandée électriquement ou pneumatiquement, dans lequel la soupape à deux voies (40a) est conçue pour régler sélectivement la première ou la seconde position de commutation de soupape de commutation (X1, X2) selon que la pression de commande d'onduleur (pl) ou la pression de commande de frein de service (pSa, pSb) ou la pression de sortie de modulateur de pression (pDa, pDb) est plus élevée, dans lequel la première position de commutation de soupape de commutation (X1) est réglée lorsque la pression de commande de frein de service (pSa, pSb) ou la pression de sortie de modulateur de pression (pDa, pDb) est plus élevée, et
la soupape à 3/2 voies (40b) est commutable, en fonction d'un signal de commutation (SU) prédéfini électriquement ou d'une pression de commande de commutation (pSU) prédéfinie pneumatiquement, dans la première position de commutation de soupape de commutation (X1) ou dans la seconde position de commutation de soupape de commutation (X2), dans lequel le signal de commutation (SU) ou la pression de commande de commutation (pSU) peut être généré en fonction du fait de savoir s'il existe une consigne de freinage de frein de service (VB) demandée dans l'au moins un circuit de freinage de service (2a, 2b).

19. Système de freinage (1) pouvant être commandé électroniquement selon l'une des revendications précédentes, **caractérisé en ce que,** dans le système de freinage (1), une soupape d'arrêt (22) est en outre prévue, dans lequel la soupape d'arrêt (22) empêche, dans une première position de commutation de soupape d'arrêt (Z1), une application de la pression de freinage de frein de service (pBa, pBb) aux freins de service (3) en fonction de la pression de commande d'onduleur (pl) générée dans la soupape de commande d'onduleur (15 ; 15a) et permet, dans une seconde position de commutation de soupape d'arrêt (Z2), l'exécution redondante de la consigne de freinage (VA, VB, VP) par l'intermédiaire de l'au moins un circuit de freinage de service (2a, 2b), dans lequel la soupape d'arrêt (22) est conçue pour purger, dans la première position de commutation de soupape d'arrêt (Z1), les freins de service (3) et/ou une conduite de refoulement de redondance (21) s'étendant entre la sortie d'onduleur (16) ou la sortie de redondance (16b) de la soupape de commande d'onduleur (15 ; 15a) et l'au moins un circuit de freinage de service (2a, 2b).

20. Système de freinage (1) pouvant être commandé électroniquement selon la revendication 19, **caractérisé en ce que** la soupape d'arrêt (22) est intégrée dans la soupape de commande d'onduleur (15 ; 15a) ou est disposée de manière à être montée en aval de la sortie d'onduleur (16) ou de la sortie de redondance (16b) dans la conduite de refoulement de redondance (21).

21. Système de freinage (1) pouvant être commandé électroniquement selon la revendication 19 ou 20, **caractérisé en ce que** la soupape de commutation (14a, 14b, 14c) forme la soupape d'arrêt (22), dans lequel la soupape de commutation (14a, 14b, 14c) est conçue pour purger, dans la première position de commutation de soupape de commutation (X1), les freins de service (3) et/ou la conduite de refoulement de redondance (21).

22. Système de freinage (1) pouvant être commandé électroniquement selon l'une des revendications précédentes, **caractérisé en ce que** l'au moins un circuit de freinage de service (2a, 2b) est alimenté en énergie par une première source d'énergie (11a) et le circuit de freinage de stationnement (7) et/ou la soupape de commande d'onduleur (15 ; 15a) sont alimentés en énergie par une seconde source d'énergie (11b), dans lequel la première source d'énergie (11a) est indépendante de la seconde source d'énergie (11b).

23. Système de freinage (1) pouvant être commandé électroniquement selon l'une des revendications précédentes, **caractérisé en ce que** le système de freinage (1) est connecté à un bus CAN (20) du véhicule (100) et la consigne de freinage (VA, VB, VP) peut être transmise, par l'intermédiaire du bus CAN (20), à l'au moins un circuit de freinage de service (2a, 2b) et/ou au circuit de freinage de stationnement (7) et/ou à la soupape de commande d'onduleur (15 ; 15a) du système de freinage (1).

24. Véhicule (100), en particulier véhicule utilitaire (100), comportant un système de freinage (1) pouvant être commandé électroniquement selon l'une des revendications précédentes.

25. Procédé permettant de commander un système de freinage (1) électronique selon l'une des revendications 1 à 23, comportant au moins les étapes suivantes :
- détermination du fait de savoir si la consigne de freinage (VA, VB, VP) peut être exécutée de manière électriquement commandée par le module de commande de frein de service (10) par l'intermédiaire de l'au moins un circuit de freinage de service (2a, 2b) ;
- génération de la pression de commande d'onduleur (pl) dans la soupape de commande d'onduleur (15 ; 15a) en fonction d'une consigne de freinage (VA, VB, VP) prédéfinie par le circuit de freinage de stationnement (7) ; et
- génération de la pression de freinage de frein de service (pBa, pBb) dans l'au moins un circuit de freinage de service (2a, 2b) en fonction de la pression de commande d'onduleur (pl) générée dans la soupape de commande d'onduleur (15 ; 15a) lorsqu'une exécution, électriquement commandée par le module de commande de frein de service (10), de la consigne de freinage (VA, VB, VP) est empêchée par l'intermédiaire de l'au moins un circuit de freinage de service (2a, 2b).

26. Procédé selon la revendication 25, **caractérisé en ce que** la pression de commande d'onduleur (pl) dans la soupape de commande d'onduleur (15 ; 15a) est générée en fonction de la pression de freinage de frein de stationnement (pPH) ou de la pression de commande de frein de stationnement (pSPH) générée dans le circuit de freinage de stationnement (7) conformément à la consigne de freinage (VA, VB, VP), dans lequel, dans la soupape de commande d'onduleur (15 ; 15a), une pression de commande d'onduleur (pl) inversement proportionnelle à la pression de freinage de frein de stationnement (pPH) ou à la pression de commande de frein de stationnement (pSPH) est générée pour la commande redondante du circuit de freinage de service (2a, 2b) respectif à l'aide de la pression de commande d'onduleur (pl).

27. Procédé selon la revendication 25 ou 26, **caractérisé en ce que,** pour la fourniture de la pression de freinage de frein de service (pBa, pBb) aux freins de service en fonction de la pression de commande d'onduleur (pl) générée par la soupape de commande d'onduleur (15 ; 15a), ladite pression de commande d'onduleur (pl)
- est directement acheminée aux freins de service (3) comme pression de freinage de frein de service (pBa, pBb) ou
- est acheminée au raccord de redondance (12a, 12b) du modulateur de pression (9a, 9b) comme pression de redondance (pRa, pRb) et la pression de freinage de frein de service (pBa, pBb) est générée et appliquée en fonction de celle-ci dans le modulateur de pression (9a, 9b) lorsqu'une exécution, électriquement commandée par le module de commande de frein de service (10), de la consigne de freinage (VA, VB, VP) est empêchée par l'intermédiaire de l'au moins un circuit de freinage de service (2a, 2b).
